# EUROPEAN PATENT SPECIFICATION

(11) **EP 4 364 501 B1**
(45) Date of publication and mention of the grant of the patent: **24.06.2026**
(21) Application number: 22856092.6
(22) Date of filing: 02.08.2022
(51) Int. Cl.: H04L 5/00, H04B 7/08, H04B 7/06, H04B 7/024

(54) **METHOD AND APPARATUS FOR TCI STATE INDICATION FOR A CONTROL CHANNEL**
VERFAHREN UND VORRICHTUNG ZUR TCI-ZUSTANDSANZEIGE FÜR EINEN STEUERKANAL
PROCÉDÉ ET APPAREIL POUR UNE INDICATION D'ÉTAT TCI POUR UN CANAL DE CONTRÔLE

(30) Priority: 10.08.2021 US 202163231531 P; 06.01.2022 US 202263297065 P; 24.05.2022 US 202263345308 P; 26.07.2022 US 202217815168
(43) Date of publication of application: 08.05.2024
(73) Proprietor: Samsung Electronics Co., Ltd., Suwon-si, Gyeonggi-do 16677 (KR)
(72) Inventor: ZHU, Dalin, Suwon-si, Gyeonggi-do 16677 (KR); FARAG, Emad Nader, Suwon-si, Gyeonggi-do 16677 (KR); ONGGOSANUSI, Eko Nugroho, Suwon-si, Gyeonggi-do 16677 (KR)
(74) Representative: Nederlandsch Octrooibureau
(86) International application number: PCT/KR2022/011398
(87) International publication number: WO 2023/018093

(56) References cited:
- WO-A1-2022/052650
- US-A1- 2021 219 336
- US-A1- 2022 225 369
- CMCC: "Remaining issues on multi-TRP/panel transmission", vol. RAN WG1, no. e-Meeting; 20200525 - 20200605, 16 May 2020 (2020-05-16), XP051885717, Retrieved from the Internet <URL:https://ftp.3gpp.org/tsg_ran/WG1_RL1/TSGR1_101-e/Docs/R1-2003954.zip R1-2003954.doc> [retrieved on 20200516]
- XIAOMI: "Enhancements on Multi-TRP for PDCCH, PUSCH and PUCCH", vol. RAN WG1, no. e-Meeting; 20210816 - 20210827, 7 August 2021 (2021-08-07), XP052038702, Retrieved from the Internet <URL:https://ftp.3gpp.org/tsg_ran/WG1_RL1/TSGR1_106-e/Docs/R1-2107894.zip R1-2107894.docx> [retrieved on 20210807]
- NTT DOCOMO, INC: "Discussion on HST-SFN deployment", 3GPP DRAFT; R1-2107842, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210816 - 20210827, 6 August 2021 (2021-08-06), Mobile Competence Centre ; 650, route des Lucioles ; F-06921 Sophia-Antipolis Cedex ; France , XP052033639
- XIAOMI: "Enhancements on HST-SFN operation for multi-TRP PDCCH transmission", 3GPP DRAFT; R1-2107897, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210816 - 20210827, 6 August 2021 (2021-08-06), Mobile Competence Centre ; 650, route des Lucioles ; F-06921 Sophia-Antipolis Cedex ; France , XP052033691
- ZTE: "Discussion on Multi-TRP HST enhancements", 3GPP DRAFT; R1-2106545, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210816 - 20210827, 7 August 2021 (2021-08-07), Mobile Competence Centre ; 650, route des Lucioles ; F-06921 Sophia-Antipolis Cedex ; France , XP052041693
- CONVIDA WIRELESS: "On Enhancements for HST-SFN deployment", 3GPP DRAFT; R1-2108022, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210816 - 20210827, 7 August 2021 (2021-08-07), Mobile Competence Centre ; 650, route des Lucioles ; F-06921 Sophia-Antipolis Cedex ; France , XP052038783

## Description

### [Technical Field]

The present disclosure relates generally to wireless communication systems and, more specifically, the present disclosure relates to a UE and a base station and the methods thereof in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

The above information is presented as background information only to assist with an understanding of the disclosure. No determination has been made, and no assertion is made, as to whether any of the above might be applicable as prior art with regard to the disclosure.

5th generation (5G) or new radio (NR) mobile communications is recently gathering increased momentum with all the worldwide technical activities on the various candidate technologies from industry and academia. The candidate enablers for the 5G/NR mobile communications include massive antenna technologies, from legacy cellular frequency bands up to high frequencies, to provide beamforming gain and support increased capacity, new waveform (e.g., a new radio access technology (RAT)) to flexibly accommodate various services/applications with different requirements, new multiple access schemes to support massive connections, and so on.

Relevant prior-art can be found in documents US 2022/225369 A1 and WO 2022/052650 A1.

### [Disclosure of Invention]

### [Technical Problem]

With the development of mobile communications and the diversification of services, user equipment positioning has gradually become one of the most important applications in communication networks, the requirements for positioning delay and accuracy are getting higher and higher, especially for IIoT (Industrial Internet of Things) application scenarios, and the demand for positioning of a user equipment in an inactive state or an idle mode is also increasing.

The objectives of the embodiments are to transmit configuration indication (TCI) state indication for control channels in a wireless communication system.

### [Solution to Problem]

The invention is set out in the appended set of claims.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system, or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as future uses of such defined words and phrases.

### [Advantageous Effects of Invention]

In this way, the information transmission method achieves at least beneficial effects below: a user equipment (UE) is provided. The UE includes a transceiver configured to receive downlink control information (DCI) including at least one TCI codepoint indicating first and second TCI states and an indicator to indicate the first or second TCI state to use for determining a quasi co-location (QCL) assumption for receiving a first physical downlink control channel (PDCCH). The UE further includes a processor operably coupled to the transceiver. The processor is configured to determine, based on the indicator, the first or second TCI state to use for determining the QCL assumption and determine, based on the determined first or second TCI state, the QCL assumption for receiving the first PDCCH. The transceiver is configured to receive, based on the determined QCL assumption, the first PDCCH in a first control resource set (CORESET).

### [Brief Description of Drawings]

For a more complete understanding of the present disclosure and its advantages, reference is now made to the following description taken in conjunction with the accompanying drawings, in which like reference numerals represent like parts:
FIGURE 1 illustrates an example of wireless network according to embodiments of the present disclosure;
FIGURE 2 illustrates an example of gNB according to embodiments of the present disclosure;
FIGURE 3 illustrates an example of UE according to embodiments of the present disclosure;
FIGURES 4 and 5 illustrate example of wireless transmit and receive paths according to this disclosure;
FIGURE 6A illustrates an example of wireless system beam according to embodiments of the present disclosure;
FIGURE 6B illustrates an example of multi-beam operation according to embodiments of the present disclosure;
FIGURE 7 illustrates an example of antenna structure according to embodiments of the present disclosure;
FIGURE 8 illustrates an example of multiple TRP (multi-TRP) system according to embodiments of the present disclosure;
FIGURE 9 illustrates an example of TCI state/beam configuration and indication according to embodiments of the present disclosure;
FIGURE 10 illustrates another example of TCI state/beam configuration and indication according to embodiments of the present disclosure;
FIGURE 11 illustrates yet another example of TCI state/beam configuration and indication according to embodiments of the present disclosure;
FIGURE 12 illustrates an example of TCI state indication for PDCCH repetitions in a multi-TRP system according to embodiments of the present disclosure;
FIGURE 13 illustrates another example of TCI state indication for PDCCH repetitions in a multi-TRP system according to embodiments of the present disclosure; and
FIGURE 14 illustrates an example of TCI state indication for PDCCH reception in a multi-TRP system according to embodiments of the present disclosure.

### [Mode for the Invention]

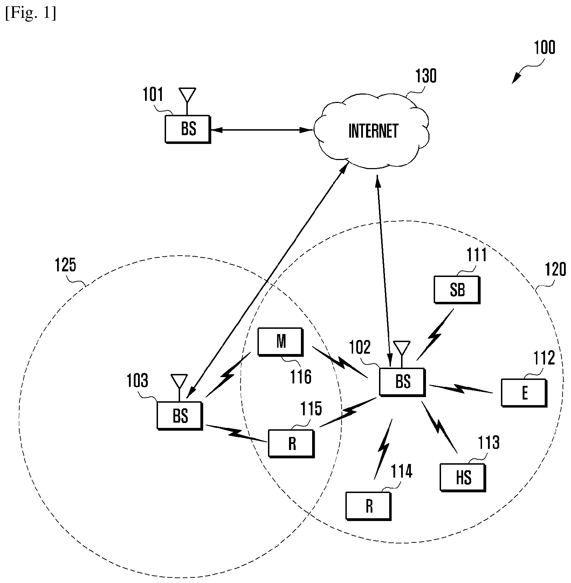

FIGURE 1 through FIGURE 14, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

Reference is made to the following documents: 3GPP TS 38.211 v16.1.0, "NR; Physical channels and modulation"; 3GPP TS 38.212 v16.1.0, "NR; Multiplexing and Channel coding"; 3GPP TS 38.213 v16.1.0, "NR; Physical Layer Procedures for Control"; 3GPP TS 38.214 v16.1.0, "NR; Physical Layer Procedures for Data"; 3GPP TS 38.321 v16.1.0, "NR; Medium Access Control (MAC) protocol specification"; and 3GPP TS 38.331 v16.1.0, "NR; Radio Resource Control (RRC) Protocol Specification."

To meet the demand for wireless data traffic having increased since deployment of 4G communication systems and to enable various vertical applications, 5G/NR communication systems have been developed and are currently being deployed. The 5G/NR communication system is considered to be implemented in higher frequency (mmWave) bands, e.g., 28 GHz or 60GHz bands, so as to accomplish higher data rates or in lower frequency bands, such as 6 GHz, to enable robust coverage and mobility support. To decrease propagation loss of the radio waves and increase the transmission distance, the beamforming, massive multiple-input multiple-output (MIMO), full dimensional MIMO (FD-MIMO), array antenna, an analog beam forming, large scale antenna techniques are discussed in 5G/NR communication systems.

In addition, in 5G/NR communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancelation and the like.

The discussion of 5G systems and frequency bands associated therewith is for reference as certain embodiments of the present disclosure may be implemented in 5G systems. However, the present disclosure is not limited to 5G systems, or the frequency bands associated therewith, and embodiments of the present disclosure may be utilized in connection with any frequency band. For example, aspects of the present disclosure may also be applied to deployment of 5G communication systems, 6G or even later releases which may use terahertz (THz) bands.

FIGURES 1-3 below describe various embodiments implemented in wireless communications systems and with the use of orthogonal frequency division multiplexing (OFDM) or orthogonal frequency division multiple access (OFDMA) communication techniques. The descriptions of FIGURES 1-3 are not meant to imply physical or architectural limitations to the manner in which different embodiments may be implemented. Different embodiments of the present disclosure may be implemented in any suitably-arranged communications system.

FIGURE 1 illustrates an example wireless network according to embodiments of the present disclosure. The embodiment of the wireless network shown in FIGURE 1 is for illustration only. Other embodiments of the wireless network 100 could be used without departing from the scope of this disclosure.

As shown in FIGURE 1, the wireless network includes a gNB 101 (e.g., base station, BS), a gNB 102, and a gNB 103. The gNB 101 communicates with the gNB 102 and the gNB 103. The gNB 101 also communicates with at least one network 130, such as the Internet, a proprietary Internet Protocol (IP) network, or other data network.

The gNB 102 provides wireless broadband access to the network 130 for a first plurality of user equipments (UEs) within a coverage area 120 of the gNB 102. The first plurality of UEs includes a UE 111, which may be located in a small business; a UE 112, which may be located in an enterprise (E); a UE 113, which may be located in a WiFi hotspot (HS); a UE 114, which may be located in a first residence (R); a UE 115, which may be located in a second residence (R); and a UE 116, which may be a mobile device (M), such as a cell phone, a wireless laptop, a wireless PDA, or the like. The gNB 103 provides wireless broadband access to the network 130 for a second plurality of UEs within a coverage area 125 of the gNB 103. The second plurality of UEs includes the UE 115 and the UE 116. In some embodiments, one or more of the gNBs 101-103 may communicate with each other and with the UEs 111-116 using 5G/NR, long term evolution (LTE), long term evolution-advanced (LTE-A), WiMAX, WiFi, or other wireless communication techniques.

Depending on the network type, the term "base station" or "BS" can refer to any component (or collection of components) configured to provide wireless access to a network, such as transmit point (TP), transmit-receive point (TRP), an enhanced base station (eNodeB or eNB), a 5G/NR base station (gNB), a macrocell, a femtocell, a WiFi access point (AP), or other wirelessly enabled devices. Base stations may provide wireless access in accordance with one or more wireless communication protocols, e.g., 5G/NR 3rd generation partnership project (3GPP) NR, long term evolution (LTE), LTE advanced (LTE-A), high speed packet access (HSPA), Wi-Fi 802.11a/b/g/n/ac, etc. For the sake of convenience, the terms "BS" and "TRP" are used interchangeably in this patent document to refer to network infrastructure components that provide wireless access to remote terminals. Also, depending on the network type, the term "user equipment" or "UE" can refer to any component such as "mobile station," "subscriber station," "remote terminal," "wireless terminal," "receive point," or "user device." For the sake of convenience, the terms "user equipment" and "UE" are used in this patent document to refer to remote wireless equipment that wirelessly accesses a BS, whether the UE is a mobile device (such as a mobile telephone or smartphone) or is normally considered a stationary device (such as a desktop computer or vending machine).

Dotted lines show the approximate extents of the coverage areas 120 and 125, which are shown as approximately circular for the purposes of illustration and explanation only. It should be clearly understood that the coverage areas associated with gNBs, such as the coverage areas 120 and 125, may have other shapes, including irregular shapes, depending upon the configuration of the gNBs and variations in the radio environment associated with natural and man-made obstructions.

As described in more detail below, one or more of the UEs 111-116 include circuitry, programing, or a combination thereof, a TCI state indication for control channel in a wireless communication system. In certain embodiments, and one or more of the gNBs 101-103 includes circuitry, programing, or a combination thereof, for a TCI state indication for control channel in a wireless communication system.

Although FIGURE 1 illustrates one example of a wireless network, various changes may be made to FIGURE 1. For example, the wireless network could include any number of gNBs and any number of UEs in any suitable arrangement. Also, the gNB 101 could communicate directly with any number of UEs and provide those UEs with wireless broadband access to the network 130. Similarly, each gNB 102-103 could communicate directly with the network 130 and provide UEs with direct wireless broadband access to the network 130. Further, the gNBs 101, 102, and/or 103 could provide access to other or additional external networks, such as external telephone networks or other types of data networks.

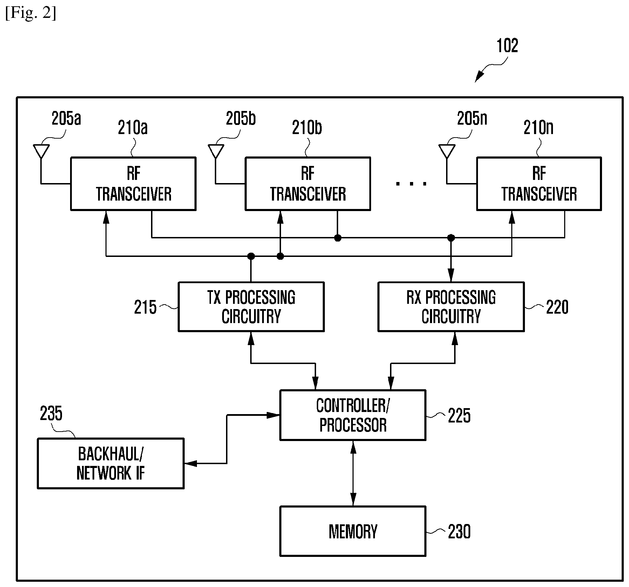

FIGURE 2 illustrates an example gNB 102 according to embodiments of the present disclosure. The embodiment of the gNB 102 illustrated in FIGURE 2 is for illustration only, and the gNBs 101 and 103 of FIGURE 1 could have the same or similar configuration. However, gNBs come in a wide variety of configurations, and FIGURE 2 does not limit the scope of this disclosure to any particular implementation of a gNB.

As shown in FIGURE 2, the gNB 102 includes multiple antennas 205a-205n, multiple RF transceivers 210a-210n, transmit (TX) processing circuitry 215, and receive (RX) processing circuitry 220. The gNB 102 also includes a controller/processor 225, a memory 230, and a backhaul or network interface 235.

The RF transceivers 210a-210n receive, from the antennas 205a-205n, incoming RF signals, such as signals transmitted by UEs in the network 100. The RF transceivers 210a-210n down-convert the incoming RF signals to generate IF or baseband signals. The IF or baseband signals are sent to the RX processing circuitry 220, which generates processed baseband signals by filtering, decoding, and/or digitizing the baseband or IF signals. The RX processing circuitry 220 transmits the processed baseband signals to the controller/processor 225 for further processing.

The TX processing circuitry 215 receives analog or digital data (such as voice data, web data, e-mail, or interactive video game data) from the controller/processor 225. The TX processing circuitry 215 encodes, multiplexes, and/or digitizes the outgoing baseband data to generate processed baseband or IF signals. The RF transceivers 210a-210n receive the outgoing processed baseband or IF signals from the TX processing circuitry 215 and up-converts the baseband or IF signals to RF signals that are transmitted via the antennas 205a-205n.

The controller/processor 225 can include one or more processors or other processing devices that control the overall operation of the gNB 102. For example, the controller/processor 225 could control the reception of UL channel signals and the transmission of DL channel signals by the RF transceivers 210a-210n, the RX processing circuitry 220, and the TX processing circuitry 215 in accordance with well-known principles. The controller/processor 225 could support additional functions as well, such as more advanced wireless communication functions. For instance, the controller/processor 225 could support beam forming or directional routing operations in which outgoing/incoming signals from/to multiple antennas 205a-205n are weighted differently to effectively steer the outgoing signals in a desired direction. Any of a wide variety of other functions could be supported in the gNB 102 by the controller/processor 225.

The controller/processor 225 is also capable of executing programs and other processes resident in the memory 230, such as an OS. The controller/processor 225 can move data into or out of the memory 230 as required by an executing process.

The controller/processor 225 is also coupled to the backhaul or network interface 235. The backhaul or network interface 235 allows the gNB 102 to communicate with other devices or systems over a backhaul connection or over a network. The interface 235 could support communications over any suitable wired or wireless connection(s). For example, when the gNB 102 is implemented as part of a cellular communication system (such as one supporting 5G/NR, LTE, or LTE-A), the interface 235 could allow the gNB 102 to communicate with other gNBs over a wired or wireless backhaul connection. When the gNB 102 is implemented as an access point, the interface 235 could allow the gNB 102 to communicate over a wired or wireless local area network or over a wired or wireless connection to a larger network (such as the Internet). The interface 235 includes any suitable structure supporting communications over a wired or wireless connection, such as an Ethernet or RF transceiver.

The memory 230 is coupled to the controller/processor 225. Part of the memory 230 could include a RAM, and another part of the memory 230 could include a Flash memory or other ROM.

Although FIGURE 2 illustrates one example of gNB 102, various changes may be made to FIGURE 2. For example, the gNB 102 could include any number of each component shown in FIGURE 2. As a particular example, an access point could include a number of interfaces 235, and the controller/processor 225 could support a TCI state indication for control channel in a wireless communication system. As another particular example, while shown as including a single instance of TX processing circuitry 215 and a single instance of RX processing circuitry 220, the gNB 102 could include multiple instances of each (such as one per RF transceiver). Also, various components in FIGURE 2 could be combined, further subdivided, or omitted and additional components could be added according to particular needs.

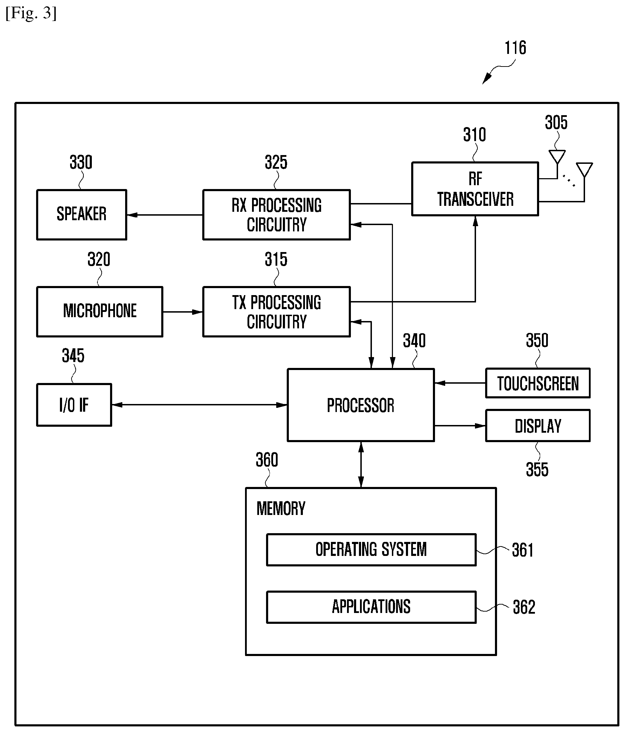

FIGURE 3 illustrates an example UE 116 according to embodiments of the present disclosure. The embodiment of the UE 116 illustrated in FIGURE 3 is for illustration only, and the UEs 111-115 of FIGURE 1 could have the same or similar configuration. However, UEs come in a wide variety of configurations, and FIGURE 3 does not limit the scope of this disclosure to any particular implementation of a UE.

As shown in FIGURE 3, the UE 116 includes an antenna 305, a radio frequency (RF) transceiver 310, TX processing circuitry 315, a microphone 320, and RX processing circuitry 325. The UE 116 also includes a speaker 330, a processor 340, an input/output (I/O) interface (IF) 345, a touchscreen 350, a display 355, and a memory 360. The memory 360 includes an operating system (OS) 361 and one or more applications 362.

The RF transceiver 310 receives, from the antenna 305, an incoming RF signal transmitted by a gNB of the network 100. The RF transceiver 310 down-converts the incoming RF signal to generate an intermediate frequency (IF) or baseband signal. The IF or baseband signal is sent to the RX processing circuitry 325, which generates a processed baseband signal by filtering, decoding, and/or digitizing the baseband or IF signal. The RX processing circuitry 325 transmits the processed baseband signal to the speaker 330 (such as for voice data) or to the processor 340 for further processing (such as for web browsing data).

The TX processing circuitry 315 receives analog or digital voice data from the microphone 320 or other outgoing baseband data (such as web data, e-mail, or interactive video game data) from the processor 340. The TX processing circuitry 315 encodes, multiplexes, and/or digitizes the outgoing baseband data to generate a processed baseband or IF signal. The RF transceiver 310 receives the outgoing processed baseband or IF signal from the TX processing circuitry 315 and up-converts the baseband or IF signal to an RF signal that is transmitted via the antenna 305.

The processor 340 can include one or more processors or other processing devices and execute the OS 361 stored in the memory 360 in order to control the overall operation of the UE 116. For example, the processor 340 could control the reception of DL channel signals and the transmission of UL channel signals by the RF transceiver 310, the RX processing circuitry 325, and the TX processing circuitry 315 in accordance with well-known principles. In some embodiments, the processor 340 includes at least one microprocessor or microcontroller.

The processor 340 is also capable of executing other processes and programs resident in the memory 360, such as processes for a TCI state indication for control channel in a wireless communication system. The processor 340 can move data into or out of the memory 360 as required by an executing process. In some embodiments, the processor 340 is configured to execute the applications 362 based on the OS 361 or in response to signals received from gNBs or an operator. The processor 340 is also coupled to the I/O interface 345, which provides the UE 116 with the ability to connect to other devices, such as laptop computers and handheld computers. The I/O interface 345 is the communication path between these accessories and the processor 340.

The processor 340 is also coupled to the touchscreen 350 and the display 355. The operator of the UE 116 can use the touchscreen 350 to enter data into the UE 116. The display 355 may be a liquid crystal display, light emitting diode display, or other display capable of rendering text and/or at least limited graphics, such as from web sites.

The memory 360 is coupled to the processor 340. Part of the memory 360 could include a random-access memory (RAM), and another part of the memory 360 could include a Flash memory or other read-only memory (ROM).

Although FIGURE 3 illustrates one example of UE 116, various changes may be made to FIGURE 3. For example, various components in FIGURE 3 could be combined, further subdivided, or omitted and additional components could be added according to particular needs. As a particular example, the processor 340 could be divided into multiple processors, such as one or more central processing units (CPUs) and one or more graphics processing units (GPUs). Also, while FIGURE 3 illustrates the UE 116 configured as a mobile telephone or smartphone, UEs could be configured to operate as other types of mobile or stationary devices.

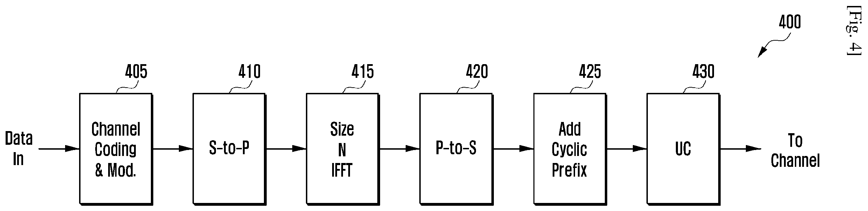

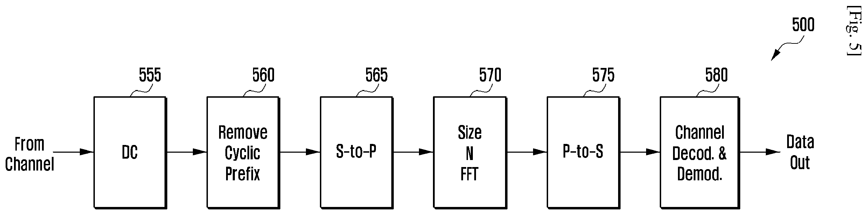

FIGURE 4 and FIGURE 5 illustrate example wireless transmit and receive paths according to this disclosure. In the following description, a transmit path 400 may be described as being implemented in a gNB (such as the gNB 102), while a receive path 500 may be described as being implemented in a UE (such as a UE 116). However, it may be understood that the receive path 500 can be implemented in a gNB and that the transmit path 400 can be implemented in a UE. In some embodiments, the receive path 500 is configured to support the codebook design and structure for systems having 2D antenna arrays as described in embodiments of the present disclosure.

The transmit path 400 as illustrated in FIGURE 4 includes a channel coding and modulation block 405, a serial-to-parallel (S-to-P) block 410, a size N inverse fast Fourier transform (IFFT) block 415, a parallel-to-serial (P-to-S) block 420, an add cyclic prefix block 425, and an up-converter (UC) 430. The receive path 500 as illustrated in FIGURE 5 includes a down-converter (DC) 555, a remove cyclic prefix block 560, a serial-to-parallel (S-to-P) block 565, a size N fast Fourier transform (FFT) block 570, a parallel-to-serial (P-to-S) block 575, and a channel decoding and demodulation block 580.

As illustrated in FIGURE 4, the channel coding and modulation block 405 receives a set of information bits, applies coding (such as a low-density parity check (LDPC) coding), and modulates the input bits (such as with quadrature phase shift keying (QPSK) or quadrature amplitude modulation (QAM)) to generate a sequence of frequency-domain modulation symbols.

The serial-to-parallel block 410 converts (such as de-multiplexes) the serial modulated symbols to parallel data in order to generate N parallel symbol streams, where N is the IFFT/FFT size used in the gNB 102 and the UE 116. The size N IFFT block 415 performs an IFFT operation on the N parallel symbol streams to generate time-domain output signals. The parallel-to-serial block 420 converts (such as multiplexes) the parallel time-domain output symbols from the size N IFFT block 415 in order to generate a serial time-domain signal. The add cyclic prefix block 425 inserts a cyclic prefix to the time-domain signal. The up-converter 430 modulates (such as up-converts) the output of the add cyclic prefix block 425 to an RF frequency for transmission via a wireless channel. The signal may also be filtered at baseband before conversion to the RF frequency.

A transmitted RF signal from the gNB 102 arrives at the UE 116 after passing through the wireless channel, and reverse operations to those at the gNB 102 are performed at the UE 116.

As illustrated in FIGURE 5, the down-converter 555 down-converts the received signal to a baseband frequency, and the remove cyclic prefix block 560 removes the cyclic prefix to generate a serial time-domain baseband signal. The serial-to-parallel block 565 converts the time-domain baseband signal to parallel time domain signals. The size N FFT block 570 performs an FFT algorithm to generate N parallel frequency-domain signals. The parallel-to-serial block 575 converts the parallel frequency-domain signals to a sequence of modulated data symbols. The channel decoding and demodulation block 580 demodulates and decodes the modulated symbols to recover the original input data stream.

Each of the gNBs 101-103 may implement a transmit path 400 as illustrated in FIGURE 4 that is analogous to transmitting in the downlink to UEs 111-116 and may implement a receive path 500 as illustrated in FIGURE 5 that is analogous to receiving in the uplink from UEs 111-116. Similarly, each of UEs 111-116 may implement the transmit path 400 for transmitting in the uplink to the gNBs 101-103 and may implement the receive path 500 for receiving in the downlink from the gNBs 101-103.

Each of the components in FIGURE 4 and FIGURE 5 can be implemented using only hardware or using a combination of hardware and software/firmware. As a particular example, at least some of the components in FIGURES 4 and FIGURE 5 may be implemented in software, while other components may be implemented by configurable hardware or a mixture of software and configurable hardware. For instance, the FFT block 570 and the IFFT block 515 may be implemented as configurable software algorithms, where the value of size N may be modified according to the implementation.

Furthermore, although described as using FFT and IFFT, this is by way of illustration only and may not be construed to limit the scope of this disclosure. Other types of transforms, such as discrete Fourier transform (DFT) and inverse discrete Fourier transform (IDFT) functions, can be used. It may be appreciated that the value of the variable N may be any integer number (such as 1, 2, 3, 4, or the like) for DFT and IDFT functions, while the value of the variable N may be any integer number that is a power of two (such as 1, 2, 4, 8, 16, or the like) for FFT and IFFT functions.

Although FIGURE 4 and FIGURE 5 illustrate examples of wireless transmit and receive paths, various changes may be made to FIGURE 4 and FIGURE 5. For example, various components in FIGURE 4 and FIGURE 5 can be combined, further subdivided, or omitted and additional components can be added according to particular needs. Also, FIGURE 4 and FIGURE 5 are meant to illustrate examples of the types of transmit and receive paths that can be used in a wireless network. Any other suitable architectures can be used to support wireless communications in a wireless network.

A unit for DL signaling or for UL signaling on a cell is referred to as a slot and can include one or more symbols. A bandwidth (BW) unit is referred to as a resource block (RB). One RB includes a number of sub-carriers (SCs). For example, a slot can have duration of one millisecond and an RB can have a bandwidth of 180 KHz and include 12 SCs with inter-SC spacing of 15 KHz. A slot can be either full DL slot, or full UL slot, or hybrid slot similar to a special subframe in time division duplex (TDD) systems.

DL signals include data signals conveying information content, control signals conveying DL control information (DCI), and reference signals (RS) that are also known as pilot signals. A gNB transmits data information or DCI through respective physical DL shared channels (PDSCHs) or physical DL control channels (PDCCHs). A PDSCH or a PDCCH can be transmitted over a variable number of slot symbols including one slot symbol. A UE can be indicated a spatial setting for a PDCCH reception based on a configuration of a value for a TCI state of a control resource set (CORESET) where the UE receives the PDCCH. The UE can be indicated a spatial setting for a PDSCH reception based on a configuration by higher layers or based on an indication by a DCI format scheduling the PDSCH reception of a value for a TCI state. The gNB can configure the UE to receive signals on a cell within a DL bandwidth part (BWP) of the cell DL BW.

A gNB transmits one or more of multiple types of RS including channel state information RS (CSI-RS) and demodulation RS (DMRS). A CSI-RS is primarily intended for UEs to perform measurements and provide channel state information (CSI) to a gNB. For channel measurement, non-zero power CSI-RS (NZP CSI-RS) resources are used. For interference measurement reports (IMRs), CSI interference measurement (CSI-IM) resources associated with a zero power CSI-RS (ZP CSI-RS) configuration are used. A CSI process consists of NZP CSI-RS and CSI-IM resources. A UE can determine CSI-RS transmission parameters through DL control signaling or higher layer signaling, such as an RRC signaling from a gNB. Transmission instances of a CSI-RS can be indicated by DL control signaling or configured by higher layer signaling. A DMRS is transmitted only in the BW of a respective PDCCH or PDSCH and a UE can use the DMRS to demodulate data or control information.

UL signals also include data signals conveying information content, control signals conveying UL control information (UCI), DMRS associated with data or UCI demodulation, sounding RS (SRS) enabling a gNB to perform UL channel measurement, and a random access (RA) preamble enabling a UE to perform random access. A UE transmits data information or UCI through a respective physical UL shared channel (PUSCH) or a physical UL control channel (PUCCH). A PUSCH or a PUCCH can be transmitted over a variable number of slot symbols including one slot symbol. The gNB can configure the UE to transmit signals on a cell within an UL BWP of the cell UL BW.

UCI includes hybrid automatic repeat request acknowledgement (HARQ-ACK) information, indicating correct or incorrect detection of data transport blocks (TBs) in a PDSCH, scheduling request (SR) indicating whether a UE has data in the buffer of UE, and CSI reports enabling a gNB to select appropriate parameters for PDSCH or PDCCH transmissions to a UE. HARQ-ACK information can be configured to be with a smaller granularity than per TB and can be per data code block (CB) or per group of data CBs where a data TB includes a number of data CBs.

A CSI report from a UE can include a channel quality indicator (CQI) informing a gNB of a largest modulation and coding scheme (MCS) for the UE to detect a data TB with a predetermined block error rate (BLER), such as a 10% BLER, of a precoding matrix indicator (PMI) informing a gNB how to combine signals from multiple transmitter antennas in accordance with a multiple input multiple output (MIMO) transmission principle, and of a rank indicator (RI) indicating a transmission rank for a PDSCH. UL RS includes DMRS and SRS. DMRS is transmitted only in a BW of a respective PUSCH or PUCCH transmission. A gNB can use a DMRS to demodulate information in a respective PUSCH or PUCCH. SRS is transmitted by a UE to provide a gNB with an UL CSI and, for a TDD system, an SRS transmission can also provide a PMI for DL transmission. Additionally, in order to establish synchronization or an initial higher layer connection with a gNB, a UE can transmit a physical random-access channel.

In the present disclosure, a beam is determined by either of: (1) a TCI state, which establishes a quasi-colocation (QCL) relationship between a source reference signal (e.g., synchronization signal/physical broadcasting channel (PBCH) block (SSB) and/or CSI-RS) and a target reference signal; or (2) spatial relation information that establishes an association to a source reference signal, such as SSB or CSI-RS or SRS. In either case, the ID of the source reference signal identifies the beam.

The TCI state and/or the spatial relation reference RS can determine a spatial Rx filter for reception of downlink channels at the UE, or a spatial Tx filter for transmission of uplink channels from the UE.

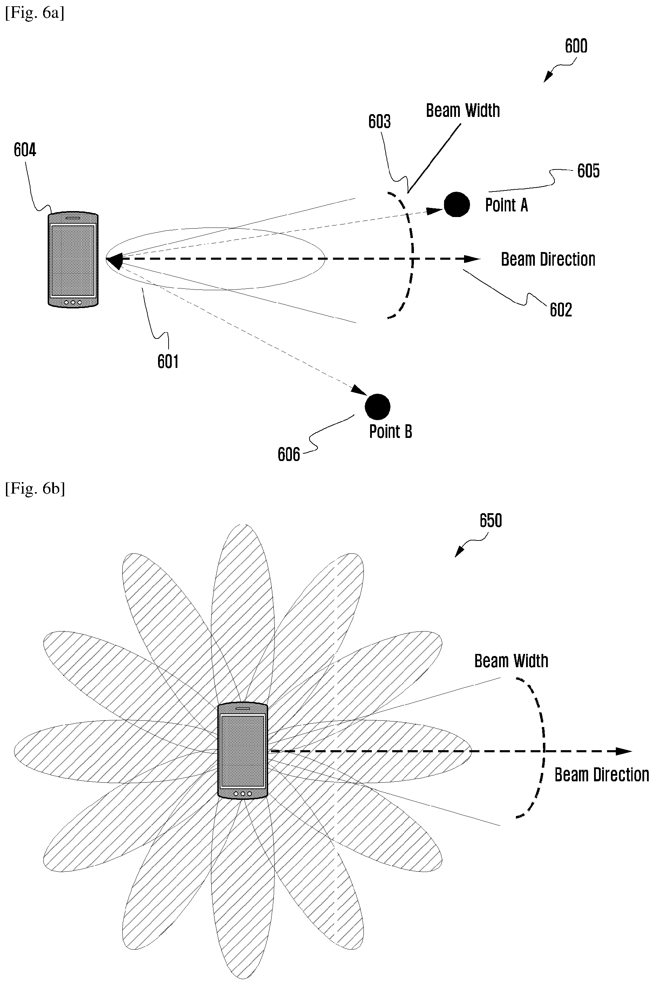

FIGURE 6A illustrates an example wireless system beam 600 according to embodiments of the present disclosure. An embodiment of the wireless system beam 600 shown in FIGURE 6A is for illustration only.

As illustrated in FIGURE 6A, in a wireless system a beam 601, for a device 604, can be characterized by a beam direction 602 and a beam width 603. For example, a device 604 with a transmitter transmits radio frequency (RF) energy in a beam direction and within a beam width. The device 604 with a receiver receives RF energy coming towards the device in a beam direction and within a beam width. As illustrated in FIGURE 6A, a device at point A 605 can receive from and transmit to the device 604 as point A is within a beam width of a beam traveling in a beam direction and coming from the device 604.

As illustrated in FIGURE 6A, a device at point B 606 cannot receive from and transmit to the device 604 as point B is outside a beam width of a beam traveling in a beam direction and coming from the device 604. While FIGURE 6A, for illustrative purposes, shows a beam in 2-dimensions (2D), it may be apparent to those skilled in the art, that a beam can be in 3-dimensions (3D), where the beam direction and beam width are defined in space.

FIGURE 6B illustrates an example multi-beam operation 650 according to embodiments of the present disclosure. An embodiment of the multi-beam operation 650 shown in FIGURE 6B is for illustration only.

In a wireless system, a device can transmit and/or receive on multiple beams. This is known as "multi-beam operation" and is illustrated in FIGURE 6B. While FIGURE 6B, for illustrative purposes, is in 2D, it may be apparent to those skilled in the art, that a beam can be 3D, where a beam can be transmitted to or received from any direction in space.

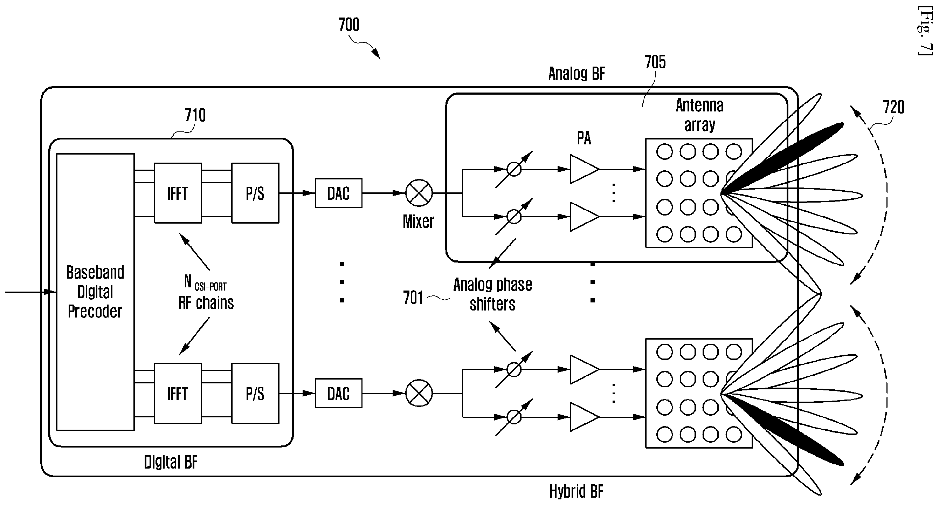

Rel. 14 LTE and Rel. 15 NR support up to 32 CSI-RS antenna ports which enable an eNB to be equipped with a large number of antenna elements (such as 64 or 128). In this case, a plurality of antenna elements is mapped onto one CSI-RS port. For mmWave bands, although the number of antenna elements can be larger for a given form factor, the number of CSI-RS ports -which can correspond to the number of digitally precoded ports - tends to be limited due to hardware constraints (such as the feasibility to install a large number of ADCs/DACs at mmWave frequencies) as illustrated in FIGURE 7.

FIGURE 7 illustrates an example antenna structure 700 according to embodiments of the present disclosure. An embodiment of the antenna structure 700 shown in FIGURE 7 is for illustration only.

In this case, one CSI-RS port is mapped onto a large number of antenna elements which can be controlled by a bank of analog phase shifters 701. One CSI-RS port can then correspond to one sub-array which produces a narrow analog beam through analog beamforming 705. This analog beam can be configured to sweep across a wider range of angles 720 by varying the phase shifter bank across symbols or subframes. The number of sub-arrays (equal to the number of RF chains) is the same as the number of CSI-RS ports NCSI-PORT. A digital beamforming unit 710 performs a linear combination across NCSI-PORT analog beams to further increase precoding gain. While analog beams are wideband (hence not frequency-selective), digital precoding can be varied across frequency sub-bands or resource blocks. Receiver operation can be conceived analogously.

Since the aforementioned system utilizes multiple analog beams for transmission and reception (wherein one or a small number of analog beams are selected out of a large number, for instance, after a training duration - to be performed from time to time), the term "multi-beam operation" is used to refer to the overall system aspect. This includes, for the purpose of illustration, indicating the assigned DL or UL TX beam (also termed "beam indication"), measuring at least one reference signal for calculating and performing beam reporting (also termed "beam measurement" and "beam reporting," respectively), and receiving a DL or UL transmission via a selection of a corresponding RX beam.

The aforementioned system is also applicable to higher frequency bands such as >52.6GHz. In this case, the system can employ only analog beams. Due to the O2 absorption loss around 60GHz frequency (~10dB additional loss @100m distance), larger number of and sharper analog beams (hence larger number of radiators in the array) may be needed to compensate for the additional path loss.

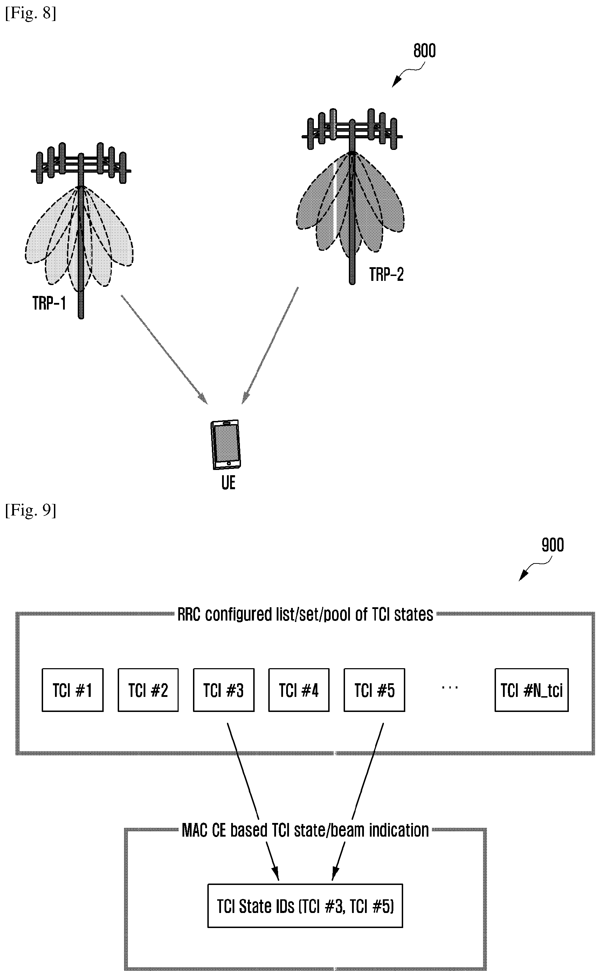

FIGURE 8 illustrates an example of multiple TRP (multi-TRP) system 800 according to embodiments of the present disclosure. An embodiment of the multiple TRP (multi-TRP) system 800 shown in FIGURE 8 is for illustration only.

In a multiple TRP system depicted in FIGURE 8, the UE could simultaneously receive from multiple physically non-co-located TRPs various channels/RSs such as PDCCHs and/or PDSCHs using either a single receive (RX) panel or multiple RX panels. In this disclosure, a RX panel could correspond to a set of RX antenna elements/ports at the UE, a set of measurement RS resources such as SRS resources, a spatial domain RX filter or etc. Further, a TRP in the multi-TRP system can represent a collection of measurement antenna ports, measurement RS resources and/or control resource sets (CORESETs).

For example, a TRP could be associated with one or more of: (1) a plurality of CSI-RS resources; (2) a plurality of CRIs (CSI-RS resource indices/indicators); (3) a measurement RS resource set, for example, a CSI-RS resource set along with its indicator; (4) a plurality of CORESETs associated with a CORESETPoolIndex; and (5) a plurality of CORESETs associated with a TRP-specific index/indicator/identity.

The UE could be configured by the network one or more TCI states, which indicate the QCL information/assumptions for one or more RSs/channels such as PDCCHs and/or PDSCHs. The TCI state update/indication for PDCCH and/or PDSCH can also be referred to as beam indication. For instance, for transmissions on the control channel (such as the physical downlink control channel in NR, i.e. PDCCH), the corresponding beam indication procedure under the 3GPP Rel. 15/16 TCI framework can be summarized as follows: a UE can be first higher layer configured by the network (e.g., via high layer RRC signaling) a set/pool of TCI states; the UE could then receive from the network a MAC CE command indicating one or more TCI states from the set/pool of RRC configured TCI states for the reception of the PDCCH(s)/DCI(s)/CORESET(s).

To improve reliability and/or reduce latency of a wireless communications system, the PDCCH(s)/DCI(s) could be repeatedly transmitted from the network to the UE using different time, frequency and/or spatial domain resources. Furthermore, additional spatial diversity can be exploited by transmitting the same PDCCH(s)/DCI(s) across different TRPs via different spatial domain filters (or different beams) as different TRPs are geographically separated in a multi-TRP system.

The present disclosure considers various design aspects/enhancements for the TCI state/beam indication in a multi-TRP system, wherein the same PDCCH(s) or the same DCI(s) could be repeatedly transmitted across different TRPs using different time domain resources and/or different frequency domain resources and/or different spatial domain filters. The solutions developed in this disclosure could reduce the TCI state (or beam) indication latency for URLLC communications.

As described in U.S. Patent Application No. 17/584,239, a unified TCI framework could indicate/include N≥1 DL TCI states and/or M≥1 UL TCI states, wherein the indicated TCI state could be at least one of: (1) a DL TCI state and/or its corresponding/associated TCI state ID; (2) an UL TCI state and/or its corresponding/associated TCI state ID; (3) a joint DL and UL TCI state and/or its corresponding/associated TCI state ID; and (4) separate DL TCI state and UL TCI state and/or their corresponding/associated TCI state ID(s).

There could be various design options/channels to indicate to the UE a beam (i.e., a TCI state) for the transmission/reception of a PDCCH or a PDSCH. As described in U.S. Patent Application No. 17/584,239 as incorporated by reference herein, in one example, a MAC CE could be used to indicate to the UE a beam (i.e., a TCI state and/or a TCI state ID) for the transmission/reception of a PDCCH or a PDSCH. In another example, a DCI could be used to indicate to the UE a beam (i.e., a TCI state and/or a TCI state ID) for the transmission/reception of a PDCCH or a PDSCH.

For example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment.

For another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant.

Yet for another example, a custom/purpose designed DCI format could be used to indicate to the UE a beam (i.e., a TCI state and/or a TCI state ID) for the transmission/reception of a PDCCH or a PDSCH.

In the present disclosure, the TCI state/beam indication for the PDCCH(s)/DCI(s) repetition in a multi-TRP system is discussed under the unified TCI framework, wherein one or more DL/UL TCI states could be separately/jointly indicated in various channels such as MAC CE and/or DCI. The same PDCCH(s)/DCI(s) could be transmitted from different TRPs in the multi-TRP system using different time domain resources and/or different frequency domain resources and/or different spatial domain filters.

Depending on the TCI state(s)/beam(s) indication channel(s)/method(s), there could be various means to associate the one or more TCI states for beam indication and the one or more TRPs in the multi-TRP system. Under the unified TCI framework, the one or more DL/UL TCI states for beam indication could be separately/jointly indicated through MAC CE and/or DCI with or without MAC CE activation.

FIGURE 9 illustrates an example of TCI state/beam configuration and indication 900 according to embodiments of the present disclosure. An embodiment of the TCI state/beam configuration and indication 900 shown in FIGURE 9 is for illustration only.

In FIGURE 9, an example of MAC CE based TCI state/beam indication for the multi-TRP operation is presented. As illustrated in FIGURE 9, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more MAC CE commands to indicate one or more beam(s) (i.e., the TCI state(s)) for the transmission/reception of the PDCCH(s)/DCI(s) transmitted from/associated with one or more TRPs in a multi-TRP system.

The MAC CE for beam indication could include at least a TCI state ID. As discussed above, the TCI state corresponding to the TCI state ID could be at least one of: (1) a DL TCI state; (2) an UL TCI state; (3) a joint DL and UL TCI state; and (4) separate DL TCI state and UL TCI state.

The association/mapping between the TCI state(s)/beam(s) indicated in the MAC CE command(s) and the TRPs in the multi-TRP system needs to be specified. There could be various means to associate/map the TCI state(s)/beam(s) indicated in the MAC CE command(s) for beam indication and the TRPs in the multi-TRP system.

For N>1 TCI states/beams indication in a single MAC CE command for beam indication, in one example, the UE could be explicitly indicated by the network, e.g., via higher layer RRC signaling and/or MAC CE command and/or dynamic DCI signaling, the exact association/mapping between the TCI states/beams indicated in the MAC CE command for beam indication and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the MAC CE command for beam indication could correspond to the first entry/TRP in the list/set/pool of TRP-specific ID/index values, the second TCI state and/or the TCI state with the second lowest TCI state ID value indicated in the MAC CE command for beam indication could correspond to the second entry/TRP in the list/set/pool of TRP-specific ID/index values, and so on, and the last TCI state and/or the TCI state with the highest TCI state ID value indicated in the MAC CE command for beam indication could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/bitmaps to activate one or more TRP-specific ID/index values from the higher layer configured list/set/pool of TRP-specific ID/index values. The first TCI state and/or the TCI state with the lowest TCI state ID value indicated in the MAC CE command for beam indication could correspond to the first MAC CE(s)/bitmap(s) activated TRP-specific ID/index value, the second TCI state and/or the TCI state with the second lowest TCI state ID value indicated in the MAC CE command for beam indication could correspond to the second MAC CE(s)/bitmap(s) activated TRP-specific ID/index value, and so on, and the last TCI state and/or the TCI state with the highest TCI state ID value indicated in the MAC CE command for beam indication could correspond to the last MAC CE(s)/bitmap(s) activated TRP-specific ID/index value.

Other exact association/mapping relationships between the TCI states/beams indicated in the MAC CE command for beam indication and the TRPs in the multi-TRP system and/or the corresponding indication method(s), e.g., via higher layer RRC signaling and/or MAC CE command and/or dynamic DCI signaling, are also possible.

For N>1 TCI states/beams indication in a single MAC CE command for beam indication, in another example, the UE could be implicitly indicated by the network the association/mapping between the TCI states/beams indicated in the MAC CE command for beam indication and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values.

For example, the first TCI state and/or the lowest TCI state ID value indicated in the MAC CE command for beam indication could correspond to the TRP with the lowest/lowest MAC CE activated TRP-specific ID/index value such as the lowest PCI value and/or the first TRP (e.g., TRP #1), the second TCI state and/or the second lowest TCI state ID value indicated in the MAC CE command for beam indication could correspond to the TRP with the second lowest/second lowest MAC CE activated TRP-specific ID/index value such as the second lowest PCI value and/or the second TRP (e.g., TRP #2), and so on, and the last TCI state and/or the highest TCI state ID value indicated in the MAC CE command for beam indication could correspond to the TRP with the highest/highest MAC CE activated TRP-specific ID/index value such as the highest PCI value and/or the last TRP (e.g., TRP #N).

For another example, the first TCI state and/or the lowest TCI state ID value indicated in the MAC CE command for beam indication could correspond to the TRP with the highest/highest MAC CE activated TRP-specific ID/index value such as the highest PCI value and/or the last TRP (e.g., TRP #N), the second TCI state and/or the second lowest TCI state ID value indicated in the MAC CE command for beam indication could correspond to the TRP with the second highest/second highest MAC CE activated TRP-specific ID/index value such as the second highest PCI value and/or the second last TRP (e.g., TRP #N-1), and so on, and the last TCI state and/or the highest TCI state ID value indicated in the MAC CE command for beam indication could correspond to the TRP with the lowest/lowest MAC CE activated TRP-specific ID/index value such as the lowest PCI value and/or the first TRP (e.g., TRP #1).

Other implicit indication methods of the association/mapping between the N>1 TCI states/beams indicated in the MAC CE command for beam indication and the TRPs in the multi-TRP system are also possible.

For N>1 TCI states/beams indication in a single MAC CE command for beam indication, in yet another example, the UE could be explicitly indicated by the network, e.g., via higher layer RRC signaling and/or MAC CE command and/or dynamic DCI signaling, the exact association/mapping between the TCI states/beams indicated in the MAC CE command for beam indication and the CORESETPoolIndex values.

For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the MAC CE command for beam indication could correspond to the first entry/CORESETPoolIndex value in the list/set/pool of CORESETPoolIndex values, the second TCI state and/or the TCI state with the second lowest TCI state ID value indicated in the MAC CE command for beam indication could correspond to the second entry/CORESETPoolIndex value in the list/set/pool of CORESETPoolIndex values, and so on, and the last TCI state and/or the TCI state with the highest TCI state ID value indicated in the MAC CE command for beam indication could correspond to the last entry/CORESETPoolIndex value in the list/set/pool of CORESETPoolIndex values. For another example, the UE could be first higher layer configured by the network a list/set/pool of CORESETPoolIndex values - e.g., a set of two CORESETPoolIndex values 0 and 1.

The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the MAC CE command for beam indication could correspond to the first MAC CE(s)/bitmap(s) activated CORESETPoolIndex value, the second TCI state and/or the TCI state with the second lowest TCI state ID value indicated in the MAC CE command for beam indication could correspond to the second MAC CE(s)/bitmap(s) activated CORESETPoolIndex value, and so on, and the last TCI state and/or the TCI state with the highest TCI state ID value indicated in the MAC CE command for beam indication could correspond to the last MAC CE(s)/bitmap(s) activated CORESETPoolIndex value.

Other exact association/mapping relationships between the TCI states/beams indicated in the MAC CE command for beam indication and the CORESETPoolIndex values and/or the corresponding indication method(s), e.g., via higher layer RRC signaling and/or MAC CE command and/or dynamic DCI signaling, are also possible.

For N>1 TCI states/beams indication in a single MAC CE command for beam indication, in yet another example, the UE could be implicitly indicated by the network the association/mapping between the TCI states/beams indicated in the MAC CE command for beam indication and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values.

For example, the first TCI state and/or the lowest TCI state ID value indicated in the MAC CE command for beam indication could correspond to the lowest/lowest MAC CE activated CORESETPoolIndex value such as "0," the second TCI state and/or the second lowest TCI state ID value indicated in the MAC CE command for beam indication could correspond to the second lowest/second lowest MAC CE activated CORESETPoolIndex value such as "1," and so on, and the last TCI state and/or the highest TCI state ID value indicated in the MAC CE command for beam indication could correspond to the highest/highest MAC CE activated CORESETPoolIndex value such as "N-1."

For another example, the first TCI state and/or the lowest TCI state ID value indicated in the MAC CE command for beam indication could correspond to the highest/highest MAC CE activated CORESETPoolIndex value such as "N-1," the second TCI state and/or the second lowest TCI state ID value indicated in the MAC CE command for beam indication could correspond to the second highest/second highest MAC CE activated CORESETPoolIndex value such as "N-2," and so on, and the last TCI state and/or the highest TCI state ID value indicated in the MAC CE command for beam indication could correspond to the lowest/lowest MAC CE activated CORESETPoolIndex value such as "0." Other implicit indication methods of the association/mapping between the N>1 TCI states/beams indicated in the MAC CE command for beam indication and the CORESETPoolIndex values are also possible.

For N>1 TCI states/beams indication in a single MAC CE command for beam indication, in yet another example, a TCI state, e.g., the higher layer parameter TCI-State, indicated in the MAC CE command for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps.

For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

For a list/set/pool of N>1 MAC CE commands for beam indication with each MAC CE command for beam indication indicating at least one TCI state/beam (a unique entity ID/index could be included/incorporated in each MAC CE command for beam indication), in one example, the UE could be explicitly indicated by the network, e.g., via higher layer RRC signaling and/or MAC CE command and/or dynamic DCI signaling, the exact association/mapping between the MAC CE commands for beam indication (and therefore, the TCI states/beams indicated therein) and the TRPs in the multi-TRP system.

For example, the UE could be first higher layer configured by the network a list/set/pool of TRP-specific ID/index values such as PCIs. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first entry/TRP in the list/set/pool of TRP-specific ID/index values, the second MAC CE command for beam indication in the list/set/pool of N> 1 MAC CE commands for beam indication and/or the MAC CE command for beam indication indicating the second lowest entity ID/index value and/or the MAC CE command for beam indication indicating the TCI state with the second lowest TCI state ID value could correspond to the second entry/TRP in the list/set/pool of TRP-specific ID/index values, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/bitmaps to activate one or more TRP-specific ID/index values from the higher layer configured list/set/pool of TRP-specific ID/index values. The first MAC CE command for beam indication in the list/set/pool of N>1 MAC CE commands for beam indication and/or the MAC CE command indicating the lowest entity ID/index value and/or the MAC CE command for beam indication indicating the TCI state with the lowest TCI state ID value could correspond to the first MAC CE(s)/bitmap(s) activated TRP-specific ID/index values, the second MAC CE command for beam indication in the list/set/pool of N>1 MAC CE commands for beam indication and/or the MAC CE command for beam indication indicting the second lowest entity ID/index value and/or the MAC CE command for beam indication indicating the TCI state with the second lowest TCI state ID value could correspond to the second MAC CE(s)/bitmap(s) activated TRP-specific ID/index values, and so on, and the last MAC CE command for beam indication in the list/set/pool of N> 1 MAC CE commands for beam indication and/or the MAC CE command for beam indication indicating the highest entity ID/index value and/or the MAC CE command for beam indication indicating the TCI state with the highest TCI state ID value could correspond to the last MAC CE(s)/bitmap(s) activated TRP-specific ID/index values.

Other exact association/mapping relationships between the MAC CE commands for beam indication (and therefore, the TCI states/beams indicated therein) and the TRPs in the multi-TRP system and/or the corresponding indication method(s), e.g., via higher layer RRC signaling and/or MAC CE command and/or dynamic DCI signaling, are also possible.

For a list/set/pool of N>1 MAC CE commands for beam indication with each MAC CE command for beam indication indicating at least one TCI state/beam (a unique entity ID/index could be included/incorporated in each MAC CE command for beam indication), in another example, the UE could be implicitly indicated by the network the association/mapping between the MAC CE commands for beam indication (and therefore, the TCI states/beams indicated therein) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values.

For example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the TRP with the lowest/lowest MAC CE activated TRP-specific ID/index value such as the lowest PCI value and/or the first TRP (e.g., TRP #1), the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value could correspond to the TRP with the highest/highest MAC CE activated TRP-specific ID/index value such as the highest PCI value and/or the last TRP (e.g., TRP #N).

For another example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the TRP with the highest/highest MAC CE activated TRP-specific ID/index value such as the highest PCI value and/or the last TRP (e.g., TRP #N), the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the TRP with the second highest/second highest MAC CE activated TRP-specific ID/index value such as the second highest PCI value and/or the second last TRP (e.g., TRP #N-1), and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value indicated could correspond to the TRP with the lowest/lowest MAC CE activated TRP-specific ID/index value such as the lowest PCI value and/or the first TRP (e.g., TRP #1).

Other implicit indication methods of the association/mapping between the N>1 MAC CE commands for beam indication (and therefore, the TCI states/beams indicated therein) and the TRPs in the multi-TRP system are also possible.

For a list/set/pool of N>1 MAC CE commands for beam indication with each MAC CE command for beam indication indicating at least one TCI state/beam (a unique entity ID/index could be included/incorporated in each MAC CE command for beam indication), in yet another example, the UE could be explicitly indicated by the network, e.g., via higher layer RRC signaling and/or MAC CE command and/or dynamic DCI signaling, the exact association/mapping between the MAC CE commands for beam indication (and therefore, the TCI states/beams indicated therein) and the TRPs in the multi-TRP system. For example, the UE could be first higher layer configured by the network a list/set/pool of CORESETPoolIndex values - e.g., a set of two CORESETPoolIndex values 0 and 1. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first entry/CORESETPoolIndex value in the list/set/pool of CORESETPoolIndex values, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second entry/CORESETPoolIndex value in the list/set/pool of CORESETPoolIndex values, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first MAC CE command for beam indication in the list/set/pool of N>1 MAC CE commands for beam indication and/or the MAC CE command for beam indication indicating the lowest entity ID/index value and/or the MAC CE command for beam indication indicating the TCI state with the lowest TCI state ID value could correspond to the first MAC CE(s)/bitmap(s) activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the TCI state with the second lowest TCI state ID value could correspond to the second MAC CE(s)/bitmap(s) activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the TCI state with the highest TCI state ID value could correspond to the last MAC CE(s)/bitmap(s) activated CORESETPoolIndex value.

Other exact association/mapping relationships between the MAC CE commands for beam indication (and therefore, the TCI states/beams indicated therein) and the CORESETPoolIndex values and/or the corresponding indication method(s), e.g., via higher layer RRC signaling and/or MAC CE command and/or dynamic DCI signaling, are also possible.

For a list/set/pool of N>1 MAC CE commands for beam indication with each MAC CE command for beam indication indicating at least one TCI state/beam (a unique entity ID/index could be included/incorporated in each MAC CE command for beam indication), in yet another example, the UE could be implicitly indicated by the network the association/mapping between the MAC CE commands for beam indication (and therefore, the TCI states/beams indicated therein) and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values.

For example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the lowest/lowest MAC CE activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the second lowest/second lowest MAC CE activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value could correspond to the highest/highest MAC CE activated CORESETPoolIndex value.

For another example, the first MAC CE command for beam indication in the list/set/pool of N>1 MAC CE commands for beam indication and/or the MAC CE command for beam indication indicating the lowest entity ID/index value and/or the MAC CE command for beam indication indicating the lowest TCI state ID value could correspond to the highest/highest MAC CE activated CORESETPoolIndex value, the second MAC CE command for beam indication in the list/set/pool of N>1 MAC CE commands for beam indication and/or the MAC CE command for beam indication indicating the second lowest entity ID/index value and/or the MAC CE command for beam indication indicating the second lowest TCI state ID value could correspond to the second highest/second highest MAC CE activated CORESETPoolIndex value, and so on, and the last MAC CE command for beam indication in the list/set/pool of N>1 MAC CE commands for beam indication and/or the MAC CE command for beam indication indicating the highest entity ID/index value and/or the MAC CE command for beam indication indicating the highest TCI state ID value indicated could correspond to the lowest/lowest MAC CE activated CORESETPoolIndex value. Other implicit indication methods of the association/mapping between the N>1 MAC CE commands for beam indication (and therefore, the TCI states/beams indicated therein) and the CORESETPoolIndex values are also possible.

For a list/set/pool of N>1 MAC CE commands for beam indication with each MAC CE command for beam indication indicating at least one TCI state/beam (a unique entity ID/index could be included/incorporated in each MAC CE command for beam indication), in yet another example, a MAC CE command for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps.

For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The MAC CE command for beam indication may indicate/update the corresponding TCI state(s) for the TRP(s) associated with the same ID/index value, e.g., the CORESETPoolIndex value, as that indicated in the MAC CE command for beam indication.

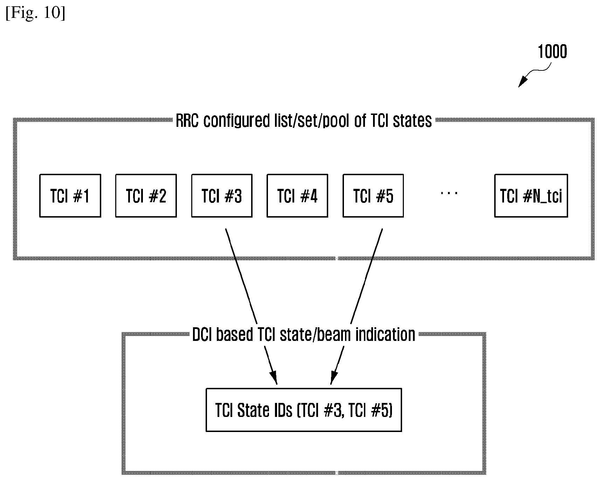

FIGURE 10 illustrates another example of TCI state/beam configuration and indication 1000 according to embodiments of the present disclosure. An embodiment of the TCI state/beam configuration and indication 1000 shown in FIGURE 10 is for illustration only.

In FIGURE 10, an example of DCI based TCI state/beam indication for the multi-TRP operation is presented. As illustrated in FIGURE 10, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more DCIs to indicate one or more beam(s) (i.e., the TCI state(s)) for the transmission/reception of the PDCCH(s)/DCI(s) transmitted from/associated with one or more TRPs in a multi-TRP system.

As described above, a DCI used to indicate to the UE a beam (i.e., a TCI state and/or a TCI state ID) for the transmission/reception of a PDCCH or a PDSCH could be at least one of the following.

In one example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment.

In another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant.

Yet in another example, a custom/purpose designed DCI format could be used to indicate to the UE a beam (i.e., a TCI state and/or a TCI state ID) for the transmission/reception of a PDCCH or a PDSCH.

Furthermore, the TCI state indicated in the DCI for beam indication could be at least one of: (1) a DL TCI state; (2) an UL TCI state; (3) a joint DL and UL TCI state; and (4) separate DL TCI state and UL TCI state.

The association/mapping between the TCI state(s)/beam(s) indicated in the DCI(s) for beam indication and the TRPs in the multi-TRP system needs to be specified. There could be various means to associate/map the TCI state(s)/beam(s) indicated in the DCI(s) for beam indication and the TRPs in the multi-TRP system.

For N>1 TCI states/beams indication in a single DCI for beam indication, in one example, the UE could be explicitly indicated by the network, e.g., via higher layer RRC signaling and/or MAC CE command and/or dynamic DCI signaling, the exact association/mapping between the TCI states/beams indicated in the DCI for beam indication and the TRPs in the multi-TRP system. For example, the UE could be first higher layer configured by the network a list/set/pool of TRP-specific ID/index values such as PCIs. The first TCI state and/or the TCI state with the lowest TCI state ID value indicated in the DCI for beam indication could correspond to the first entry/TRP in the list/set/pool of TRP-specific ID/index values, the second TCI state and/or the TCI state with the second lowest TCI state ID value indicated in the DCI for beam indication could correspond to the second entry/TRP in the list/set/pool of TRP-specific ID/index values, and so on, and the last TCI state and/or the TCI state with the highest TCI state ID value indicated in the DCI for beam indication could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/bitmaps to activate one or more TRP-specific ID/index values from the higher layer configured list/set/pool of TRP-specific ID/index values. The first TCI state and/or the TCI state with the lowest TCI state ID value indicated in the DCI for beam indication could correspond to the first MAC CE(s)/bitmap(s) activated TRP-specific ID/index value, the second TCI state and/or the TCI state with the second lowest TCI state ID value indicated in the DCI for beam indication could correspond to the second MAC CE(s)/bitmap(s) activated TRP-specific ID/index value, and so on, and the last TCI state and/or the TCI state with the highest TCI state ID value indicated in the DCI for beam indication could correspond to the last MAC CE(s)/bitmap(s) activated TRP-specific ID/index value.

Other exact association/mapping relationships between the TCI states/beams indicated in the DCI for beam indication and the TRPs in the multi-TRP system and/or the corresponding indication method(s), e.g., via higher layer RRC signaling and/or MAC CE command and/or dynamic DCI signaling, are also possible.

For N>1 TCI states/beams indication in a single DCI for beam indication, in another example, the UE could be implicitly indicated by the network the association/mapping between the TCI states/beams indicated in the DCI for beam indication and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values.

For example, the first TCI state and/or the TCI state with the lowest TCI state ID value indicated in the DCI for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the DCI for beam indication could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the DCI for beam indication could correspond to the TRP with the highest/highest MAC CE activated TRP-specific ID/index value such as the highest PCI value and/or the last TRP (e.g., TRP #N).

For another example, the first TCI state and/or the TCI state with the lowest TCI state ID value indicated in the DCI for beam indication could correspond to the TRP with the highest/highest MAC CE activated TRP-specific ID/index value such as PCI value, the second TCI state and/or the TCI state with the second lowest TCI state ID value indicated in the DCI for beam indication could correspond to the TRP with the second highest/second highest MAC CE activated TRP-specific ID/index value such as PCI value, and so on, and the last TCI state and/or the TCI state with the highest TCI state ID value indicated in the DCI for beam indication could correspond to the TRP with the lowest/lowest MAC CE activated TRP-specific ID/index value such as PCI value. Other implicit indication methods of the association/mapping between the N>1 TCI states/beams indicated in the DCI and the TRPs in the multi-TRP system are also possible.

For N>1 TCI states/beams indication in a single DCI for beam indication, in yet another example, the UE could be explicitly indicated by the network, e.g., via higher layer RRC signaling and/or MAC CE command and/or dynamic DCI signaling, the exact association/mapping between the TCI states/beams indicated in the DCI for beam indication and the CORESETPoolIndex values. For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the DCI for beam indication could correspond to the first entry/CORESETPoolIndex value in the list/set/pool of CORESETPoolIndex values, the second TCI state and/or the TCI state with the second lowest TCI state ID value indicated in the DCI for beam indication could correspond to the second entry/CORESETPoolIndex value in the list/set/pool of CORESETPoolIndex values, and so on, and the last TCI state and/or the TCI state with the highest TCI state ID value indicated in the DCI for beam indication could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the DCI for beam indication could correspond to the first MAC CE(s)/bitmap(s) activated CORESETPoolIndex value, the second TCI state and/or the TCI state with the second lowest TCI state ID value indicated in the DCI for beam indication could correspond to the second MAC CE(s)/bitmap(s) activated CORESETPoolIndex value, and so on, and the last TCI state and/or the TCI state with the highest TCI state ID value indicated in the DCI for beam indication could correspond to the last MAC CE(s)/bitmap(s) activated CORESETPoolIndex value.

Other exact association/mapping relationships between the TCI states/beams indicated in the DCI for beam indication and the CORESETPoolIndex values and/or the corresponding indication method(s), e.g., via higher layer RRC signaling and/or MAC CE command and/or dynamic DCI signaling, are also possible.

For N>1 TCI states/beams indication in a single DCI for beam indication, in yet another example, the UE could be implicitly indicated by the network the association/mapping between the TCI states/beams indicated in the DCI for beam indication and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values.

For example, the first TCI state and/or the TCI state with the lowest TCI state ID value indicated in the DCI for beam indication could correspond to the lowest/lowest MAC CE activated CORESETPoolIndex value such as "0," the second TCI state and/or the TCI state with the second lowest TCI state ID value indicated in the DCI for beam indication could correspond to the second lowest/second lowest MAC CE activated CORESETPoolIndex value such as "1," and so on, and the last TCI state and/or the TCI state with the highest TCI state ID value indicated in the DCI for beam indication could correspond to the highest/highest MAC CE activated CORESETPoolIndex value such as "N-1."

For another example, the first TCI state and/or the TCI state with the lowest TCI state ID value indicated in the DCI for beam indication could correspond to the highest/highest MAC CE activated CORESETPoolIndex value, the second TCI state and/or the TCI state with the second lowest TCI state ID value indicated in the DCI for beam indication could correspond to the second highest/second highest MAC CE activated CORESETPoolIndex value, and so on, and the last TCI state and/or the TCI state with the highest TCI state ID value indicated in the DCI for beam indication could correspond to the lowest/lowest MAC CE activated CORESETPoolIndex value.

Other implicit indication methods of the association/mapping between the N>1 TCI states/beams indicated in the DCI for beam indication and the CORESETPoolIndex values are also possible.

For N>1 TCI states/beams indication in a single DCI for beam indication, in yet another example, a TCI state, e.g., the higher layer parameter TCI-State, indicated in the DCI for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

For N>1 DCIs for beam indication with each DCI for beam indication indicating at least one TCI state/beam, in one example, the UE could be explicitly indicated by the network, e.g., via higher layer RRC signaling and/or MAC CE command and/or dynamic DCI signaling, the exact association/mapping between the DCIs for beam indication (and therefore, the TCI states/beams indicated therein) and the TRPs in the multi-TRP system.

For example, the UE could be first higher layer configured by the network a list/set/pool of TRP-specific ID/index values such as PCIs. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first entry/TRP in the list/set/pool of TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second entry/TRP in the list/set/pool of TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/bitmaps to activate one or more TRP-specific ID/index values from the higher layer configured list/set/pool of TRP-specific ID/index values. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first MAC CE(s)/bitmap(s) activated TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second MAC CE(s)/bitmap(s) activated TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last MAC CE(s)/bitmap(s) activated TRP-specific ID/index values. Other exact association/mapping relationships between the DCIs for beam indication (and therefore, the TCI states/beams indicated therein) and the TRPs in the multi-TRP system and/or the corresponding indication method(s), e.g., via higher layer RRC signaling and/or MAC CE command and/or dynamic DCI signaling, are also possible.

For N>1 DCIs for beam indication with each DCI for beam indication indicating at least one TCI state/beam, in another example, the UE could be implicitly indicated by the network the association/mapping between the DCIs for beam indication (and therefore, the TCI states/beams indicated therein) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values.

For example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the lowest/lowest MAC CE activated TRP-specific ID/index value such as the lowest PCI value and/or the first TRP (e.g., TRP #1), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the highest/highest MAC CE activated TRP-specific ID/index value such as the highest PCI value and/or the last TRP (e.g., TRP #N).

For another example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the highest/highest MAC CE activated TRP-specific ID/index value such as PCI value, the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second highest/second highest MAC CE activated TRP-specific ID/index value such as PCI value, and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the lowest/lowest MAC CE activated TRP-specific ID/index value such as PCI value. Other implicit indication methods of the association/mapping between the N>1 DCIs for beam indication (and therefore, the TCI states/beams indicated therein) and the TRPs in the multi-TRP system are also possible.

For N>1 DCIs for beam indication with each DCI for beam indication indicating at least one TCI state/beam, in yet another example, a DCI for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The DCI for beam indication may indicate/update the corresponding TCI state(s) for the TRP(s) associated with the same ID/index value, e.g., the CORESETPoolIndex value, as that indicated in the DCI for beam indication.

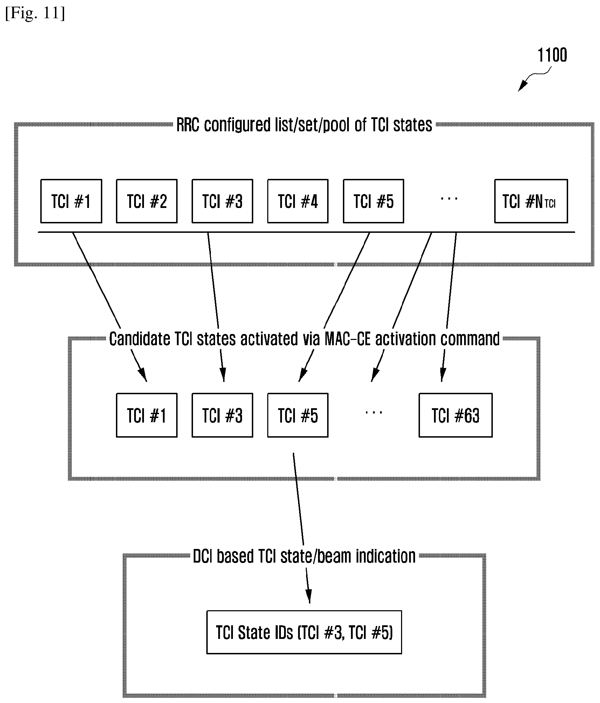

FIGURE 11 illustrates yet another example of TCI state/beam configuration and indication 1100 according to embodiments of the present disclosure. An embodiment of the TCI state/beam configuration and indication 1100 shown in FIGURE 11 is for illustration only.

In FIGURE 11, an example of DCI based TCI state/beam indication (with MAC CE activated TCI states) for the multi-TRP operation is presented. As illustrated in FIGURE 11, the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more MAC CE activation commands activating one or more TCI states from the higher layer configured list/pool of TCI states, e.g., up to eight TCI states could be activated by a MAC CE activation command. The UE could receive from the network one or more DCIs for beam indication to indicate one or more beam(s) (i.e., the TCI state(s)) from the MAC CE activated TCI state(s)/beam(s) for the transmission/reception of the PDCCH(s)/DCI(s) transmitted from/associated with one or more TRPs in a multi-TRP system.

As described above, a DCI used to indicate to the UE a beam (i.e., a TCI state and/or a TCI state ID) for the transmission/reception of a PDCCH or a PDSCH could be at least one of the following.

In one example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment.

In another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant.

Yet in another example, a custom/purpose designed DCI format could be used to indicate to the UE a beam (i.e., a TCI state and/or a TCI state ID) for the transmission/reception of a PDCCH or a PDSCH.

Furthermore, the TCI state indicated in the DCI for beam indication could be at least one of: (1) a DL TCI state; (2) an UL TCI state; (3) a joint DL and UL TCI state; and (4) separate DL TCI state and UL TCI state.

The association/mapping between the DCI(s) indicated TCI state(s)/beam(s) - from the MAC CE activated TCI state(s)/beam(s) - and the TRPs in the multi-TRP system needs to be specified. There could be various means to associate/map the DCI(s) indicated TCI state(s)/beam(s) - from the MAC CE activated TCI state(s)/beam(s) - and the TRPs in the multi-TRP system.

For N'>1 TCI states/beams indication in a single DCI for beam indication, in one example, the UE could be explicitly indicated by the network, e.g., via higher layer RRC signaling and/or MAC CE command and/or dynamic DCI signaling, the exact association/mapping between the DCI indicated TCI states/beams (selected from the MAC CE activated TCI states/beams) and the TRPs in the multi-TRP system.

For example, the UE could be first higher layer configured by the network a list/set/pool of TRP-specific ID/index values such as PCIs. The first TCI state and/or the TCI state with the lowest TCI state ID value indicated in the DCI for beam indication could correspond to the first entry/TRP in the list/set/pool of TRP-specific ID/index values, the second TCI state and/or the TCI state with the second lowest TCI state ID value indicated in the DCI for beam indication could correspond to the second entry/TRP in the list/set/pool of TRP-specific ID/index values, and so on, and the last TCI state and/or the TCI state with the highest TCI state ID value indicated in the DCI for beam indication could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/bitmaps to activate one or more TRP-specific ID/index values from the higher layer configured list/set/pool of TRP-specific ID/index values. The first TCI state and/or the TCI state with the lowest TCI state ID value indicated in the DCI for beam indication could correspond to the first MAC CE(s)/bitmap(s) activated TRP-specific ID/index value, the second TCI state and/or the TCI state with the second lowest TCI state ID value indicated in the DCI for beam indication could correspond to the second MAC CE(s)/bitmap(s) activated TRP-specific ID/index value, and so on, and the last TCI state and/or the TCI state with the highest TCI state ID value indicated in the DCI for beam indication could correspond to the last MAC CE(s)/bitmap(s) activated TRP-specific ID/index value. Other exact association/mapping relationships between the DCI indicated TCI states/beams (selected from the MAC CE activated TCI states/beams) and the TRPs in the multi-TRP system and/or the corresponding indication method(s), e.g., via higher layer RRC signaling and/or MAC CE command and/or dynamic DCI signaling, are also possible.

For N'>1 TCI states/beams indication in a single DCI for beam indication, in another example, the UE could be implicitly indicated by the network the association/mapping between the DCI indicated TCI states/beams (selected from the MAC CE activated TCI states/beams) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values.

For example, the first TCI state and/or the TCI state with the lowest TCI state ID value indicated in the DCI for beam indication could correspond to the TRP with the lowest/lowest MAC CE activated TRP-specific ID/index value such as the lowest PCI value and/or the first TRP (e.g., TRP #1), the second TCI state and/or the TCI state with the second lowest TCI state ID value indicated in the DCI for beam indication could correspond to the TRP with the second lowest/second lowest MAC CE activated TRP-specific ID/index value such as the second lowest PCI value and/or the second TRP (e.g., TRP #2), and so on, and the last TCI state and/or the TCI state with the highest TCI state ID value indicated in the DCI for beam indication could correspond to the TRP with the highest/highest MAC CE activated TRP-specific ID/index value such as the highest PCI value and/or the last TRP (e.g., TRP #N').

For another example, the first TCI state and/or the TCI state with the lowest TCI state ID value indicated in the DCI for beam indication could correspond to the TRP with the highest/highest MAC CE activated TRP-specific ID/index value such as the highest PCI value and/or the last TRP (e.g., TRP #N'), the second TCI state and/or the TCI state with the second lowest TCI state ID value indicated in the DCI for beam indication could correspond to the TRP with the second highest/second highest MAC CE activated TRP-specific ID/index value such as the second highest PCI value and/or the second last TRP (e.g., TRP #N'-1), and so on, and the last TCI state and/or the TCI state with the highest TCI state ID value indicated in the DCI for beam indication could correspond to the TRP with the lowest/lowest MAC CE activated TRP-specific ID/index value such as the lowest PCI value and/or the first TRP (e.g., TRP #1).

Other implicit indication methods of the association/mapping between the N'>1 DCI indicated TCI states/beams (selected from the MAC CE activated TCI states/beams) and the TRPs in the multi-TRP system are also possible.

For N'>1 TCI states/beams indication in a single DCI for beam indication, in yet another example, the UE could be explicitly indicated by the network, e.g., via higher layer RRC signaling and/or MAC CE command and/or dynamic DCI signaling, the exact association/mapping between the DCI indicated TCI states/beams (selected from the MAC CE activated TCI states/beams) and the CORESETPoolIndex values. For example, the UE could be first higher layer configured by the network a list/set/pool of CORESETPoolIndex values - e.g., a set of two CORESETPoolIndex values 0 and 1. The first TCI state and/or the TCI state with the lowest TCI state ID value indicated in the DCI for beam indication could correspond to the first entry/CORESETPoolIndex value in the list/set/pool of CORESETPoolIndex values, the second TCI state and/or the TCI state with the second lowest TCI state ID value indicated in the DCI for beam indication could correspond to the second entry/CORESETPoolIndex value in the list/set/pool of CORESETPoolIndex values, and so on, and the last TCI state and/or the TCI state with the highest TCI state ID value indicated in the DCI for beam indication could correspond to the last entry/CORESETPoolIndex value in the list/set/pool of CORESETPoolIndex values.

For another example, the UE could be first higher layer configured by the network a list/set/pool of CORESETPoolIndex values - e.g., a set of two CORESETPoolIndex values 0 and 1. The UE could then receive from the network one or more MAC CE activation commands/bitmaps to activate one or more CORESETPoolIndex values from the higher layer configured list/set/pool of CORESETPoolIndex values. The first TCI state and/or the TCI state with the lowest TCI state ID value indicated in the DCI for beam indication could correspond to the first MAC CE(s)/bitmap(s) activated CORESETPoolIndex value, the second TCI state and/or the TCI state with the second lowest TCI state ID value indicated in the DCI for beam indication could correspond to the second MAC CE(s)/bitmap(s) activated CORESETPoolIndex value, and so on, and the last TCI state and/or the TCI state with the highest TCI state ID value indicated in the DCI for beam indication could correspond to the last MAC CE(s)/bitmap(s) activated CORESETPoolIndex value.

Other exact association/mapping relationships between the DCI indicated TCI states/beams (selected from the MAC CE activated TCI states/beams) and the CORESETPoolIndex values and/or the corresponding indication method(s), e.g., via higher layer RRC signaling and/or MAC CE command and/or dynamic DCI signaling, are also possible.

For N'>1 TCI states/beams indication in a single DCI for beam indication, in yet another example, the UE could be implicitly indicated by the network the association/mapping between the DCI indicated TCI states/beams (selected from the MAC CE activated TCI states/beams) and the CORESETPoolIndex values. The UE could be higher layer configured by the network a list/set/pool of CORESETPoolIndex values - e.g., a set of two CORESETPoolIndex values 0 and 1. The UE could also receive from the network one or more MAC CE activation commands/bitmaps to activate one or more CORESETPoolIndex values from the higher layer configured list/set/pool of CORESETPoolIndex values.

For example, the first TCI state and/or the TCI state with the lowest TCI state ID value indicated in the DCI for beam indication could correspond to the lowest/lowest MAC CE activated CORESETPoolIndex value such as "0," the second TCI state and/or the TCI state with the second lowest TCI state ID value indicated in the DCI for beam indication could correspond to the second lowest/second lowest MAC CE activated CORESETPoolIndex value such as "1," and so on, and the last TCI state and/or the TCI state with the highest TCI state ID value indicated in the DCI for beam indication could correspond to the highest/highest MAC CE activated CORESETPoolIndex value such as "N-1."

For another example, the first TCI state and/or the TCI state with the lowest TCI state ID value indicated in the DCI for beam indication could correspond to the highest/highest MAC CE activated CORESETPoolIndex value, the second TCI state and/or the TCI state with the second lowest TCI state ID value indicated in the DCI for beam indication could correspond to the second highest/second highest MAC CE activated CORESETPoolIndex value, and so on, and the last TCI state and/or the TCI state with the highest TCI state ID value indicated in the DCI for beam indication could correspond to the lowest/lowest MAC CE activated CORESETPoolIndex value. Other implicit indication methods of the association/mapping between the N'>1 DCI indicated TCI states/beams (selected from the MAC CE activated TCI states/beams) and the CORESETPoolIndex values are also possible.

For N'>1 TCI states/beams indication in a single DCI for beam indication, in yet another example, a TCI state (selected from the MAC CE activated TCI states/beams), e.g., the higher layer parameter TCI-State, indicated in the MAC CE command for beam indication could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value.

For N'>1 DCIs for beam indication with each DCI for beam indication indicating at least one TCI state/beam, in one example, the UE could be explicitly indicated by the network, e.g., via higher layer RRC signaling and/or MAC CE command and/or dynamic DCI signaling, the exact association/mapping between the DCIs for beam indication (and therefore, the TCI states/beams indicated therein - selected from the MAC CE activated TCI states/beams) and the TRPs in the multi-TRP system. For example, the UE could be first higher layer configured by the network a list/set/pool of TRP-specific ID/index values such as PCIs. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first entry/TRP in the list/set/pool of TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second entry/TRP in the list/set/pool of TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last entry/TRP in the list/set/pool of TRP-specific ID/index values.

For another example, the UE could be first higher layer configured by the network a list/set/pool of TRP-specific ID/index values such as PCIs. The UE could then receive from the network one or more MAC CE activation commands/bitmaps to activate one or more TRP-specific ID/index values from the higher layer configured list/set/pool of TRP-specific ID/index values. The DCI for beam indication associated with the lowest CORESETPoolIndex value (indicated in the corresponding higher layer parameter ControlResourceSet) and/or the DCI for beam indication indicating the TCI state with the lowest TCI state ID value could correspond to the first MAC CE(s)/bitmap(s) activated TRP-specific ID/index values, the DCI for beam indication associated with the second lowest CORESETPoolIndex value (indicated in the corresponding higher layer parameter ControlResourceSet) and/or the DCI for beam indication indicating the TCI state with the second lowest TCI state ID value could correspond to the second MAC CE(s)/bitmap(s) activated TRP-specific ID/index values, and so on, and the DCI for beam indication associated with the highest CORESETPoolIndex value (indicated in the corresponding higher layer parameter ControlResourceSet) and/or the DCI for beam indication indicating the TCI state with the highest TCI state ID value could correspond to the last MAC CE(s)/bitmap(s) activated TRP-specific ID/index values.

Other exact association/mapping relationships between the DCIs for beam indication (and therefore, the TCI states/beams indicated therein - selected from the MAC CE activated TCI states/beams) and the TRPs in the multi-TRP system and/or the corresponding indication method(s), e.g., via higher layer RRC signaling and/or MAC CE command and/or dynamic DCI signaling, are also possible.

For N'>1 DCIs for beam indication with each DCI for beam indication indicating at least one TCI state/beam, in another example, the UE could be implicitly indicated by the network the association/mapping between the DCIs for beam indication (and therefore, the TCI states/beams indicated therein - selected from the MAC CE activated TCI states/beams) and the TRPs in the multi-TRP system. The UE could be higher layer configured by the network a list/set/pool of TRP-specific ID/index values such as PCIs. The UE could also receive from the network one or more MAC CE activation commands/bitmaps to activate one or more TRP-specific ID/index values from the higher layer configured list/set/pool of TRP-specific ID/index values.

For example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the lowest/lowest MAC CE activated TRP-specific ID/index value such as the lowest PCI value and/or the first TRP (e.g., TRP #1), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second lowest/second lowest MAC CE activated TRP-specific ID/index value such as the second lowest PCI value and/or the second TRP (e.g., TRP #2), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the highest/highest MAC CE activated TRP-specific ID/index value such as the highest PCI value and/or the last TRP (e.g., TRP #N').

For another example, the DCI for beam indication associated with the lowest CORESETPoolIndex value (indicated in the corresponding higher layer parameter ControlResourceSet) and/or the DCI for beam indication indicating the lowest TCI state ID value could correspond to the TRP with the highest/highest MAC CE activated TRP-specific ID/index value such as the highest PCI value and/or the last TRP (e.g., TRP #N'), the DCI for beam indication associated with the second lowest CORESETPoolIndex value (indicated in the corresponding higher layer parameter ControlResourceSet) and/or the DCI for beam indication indicating the second lowest TCI state ID value could correspond to the TRP with the second highest/second highest MAC CE activated TRP-specific ID/index value such as the second highest PCI value and/or the second last TRP (e.g., TRP #N'-1), and so on, and the DCI for beam indication associated with the highest CORESETPoolIndex value (indicated in the corresponding higher layer parameter ControlResourceSet) and/or the DCI for beam indication indicating the highest TCI state ID value could correspond to the TRP with the lowest/lowest MAC CE activated TRP-specific ID/index value such as the lowest PCI value and/or the first TRP (e.g., TRP #1).

Other implicit indication methods of the association/mapping between the N'>1 DCIs for beam indication (and therefore, the TCI states/beams indicated therein - selected from the MAC CE activated TCI states/beams) and the TRPs in the multi-TRP system are also possible.

For N'>1 DCIs for beam indication with each DCI for beam indication indicating at least one TCI state/beam, in yet another example, a DCI for beam indication (indicating the TCI state(s)/beam(s) selected from the MAC CE activated TCI states/beams) could include/comprise/incorporate at least one ID/index value. For example, this ID/index value could be a (absolute) TRP-specific ID/index value such as PCI value, TRP ID value, TRP index value and etc., based on a list/set/pool of TRP-specific ID/index values, e.g., higher layer configured to the UE and/or higher layer configured to the UE and activated by one or more MAC CE activation commands/bitmaps.

For another example, this ID/index value could be an (relative) index within the list/set/pool of TRP-specific ID/index values, e.g., higher layer configured to the UE and/or higher layer configured to the UE and activated by one or more MAC CE activation commands/bitmaps. For yet another example, this ID/index value could be a CORESETPoolIndex value. The DCI for beam indication (indicating the TCI state(s)/beam(s) selected from the MAC CE activated TCI states/beams) may indicate/update the corresponding TCI state(s) for the TRP(s) associated with the same ID/index value, e.g., the CORESETPoolIndex value, as that indicated in the DCI for beam indication (indicating the TCI state(s)/beam(s) selected from the MAC CE activated TCI states/beams).

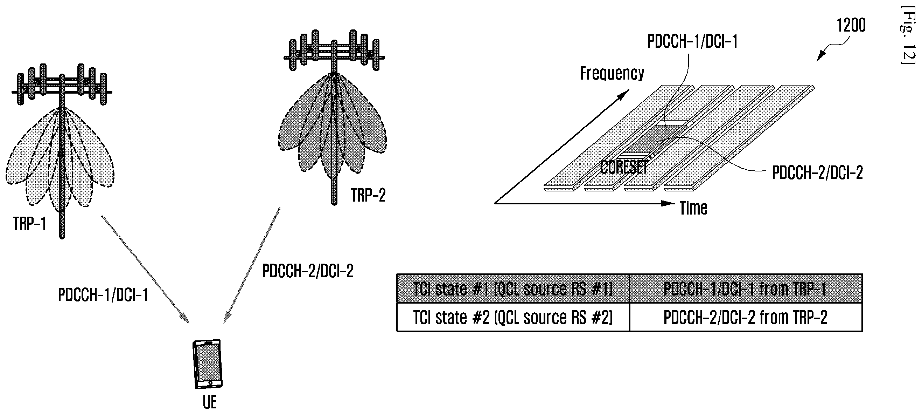

FIGURE 12 illustrates an example of TCI state indication for PDCCH repetitions 1200 in a multi-TRP system according to embodiments of the present disclosure. An embodiment of the TCI state indication for PDCCH repetitions 1200 shown in FIGURE 12 is for illustration only.

In FIGURE 12, a conceptual example of PDCCH/DCI repetition over a single CORESET is presented for a multi-TRP system comprising of two TRPs, e.g., TRP-1 and TRP-2. As depicted in FIGURE 12, the UE could receive PDCCH-1/DCI-1 from TRP-1 and PDCCH-2/DCI-2 from TRP-2 via the same CORESET. In this example, DCI-1 and DCI-2 could correspond to the same DCI payload, denoted by DCI_A. Alternatively, DCI-1 and DCI-2 could correspond to two separate parts of the same DCI payload DCI_A. The UE could be indicated by the network different TCI states - TCI state #1 and TCI state #2 in FIGURE 12 (and therefore, different QCL source RSs indicated therein - QCL source RS #1 and QCL source RS #2 in FIGURE 12) for the PDCCHs transmitted from different TRPs (PDCCH-1/DCI-1 from TRP-1 and PDCCH-2/DCI-2 from TRP-2 in FIGURE 12) in the multi-TRP system. The CORESET, e.g., that shown in FIGURE 12, could be configured for the DCI(s) for beam indication.

As aforementioned herein, in a multi-TRP system, the same DCI payload could be repeatedly transmitted from different TRPs or separate parts of the same DCI payload could be transmitted from different TRPs. Furthermore, multiple (more than one) PDCCH candidates in a single search space and/or multiple (more than one) search spaces could be configured in the CORESET to convey the same DCI payload. Hence, there is a need to associate different PDCCH candidates in a single search space and/or different search spaces configured in a single CORESET with the TRPs.

As discussed above, a single search space containing N>1 PDCCH candidates could be configured in the CORESET to convey the PDCCHs/DCIs transmitted from different TRPs.

In one example, the UE could be explicitly indicated by the network the association/mapping between one or more PDCCH candidates in the search space and the TRPs in the multi-TRP system. The UE could be higher layer configured by the network a list/set/pool of TRP-specific ID/index values such as PCIs and TRP-specific higher layer signaling index values. The UE could also receive from the network a MAC CE activation command (and/or a bitmap and/or a DCI) activating one or more TRP-specific ID/index values from the list/set/pool of TRP-specific ID/index values. The UE could be explicitly indicated by the network the association/mapping between the one or more PDCCH candidates in the search space and the TRP-specific ID/index values such as PCIs and TRP-specific higher layer signaling index values in the list/set/pool of (MAC CE activated) TRP-specific ID/index values.

For example, the UE could be explicitly indicated by the network the association/mapping between the indices of the PDCCH candidates within/among the N>1 PDCCH candidates in the search space and the TRPs in the multi-TRP system. For instance, the first PDCCH candidate in the search space could correspond to the first (or the last) entry/TRP in the list/set/pool of (MAC CE activated) TRP-specific ID/index values, the second PDCCH candidate in the search space could correspond to the second (or the second last) entry/TRP in the list/set/pool of (MAC CE activated) TRP-specific ID/index values, and so on, and the last (N-th) PDCCH candidate in the search space could correspond to the last (or the first) entry/TRP in the list/set/pool of (MAC CE activated) TRP-specific ID/index values. The order(s) of the PDCCH candidates in the search space could be pre-configured and known to both the network and the UE sides a priori.

Alternatively, the UE could be indicated by the network the order(s) of the PDCCH candidates in the search space; this indication could be via higher layer (RRC) or/and MAC CE or/and DCI based signaling or/and any combination of at least two of RRC, MAC CE and DCI based signaling; this indication could be via a separate (dedicated) parameter or joint with another parameter. Furthermore, each of the N>1 PDCCH candidates in the search space could correspond to the same DCI payload, and/or the N>1 PDCCH candidates in the search space could correspond to separate parts of the same DCI payload - e.g., the first PDCCH candidate in the search space corresponds to the first (or the last) part of the DCI, the second PDCCH candidate in the search space corresponds to the second (or the second last) part of the DCI, and so on, and the last (N-th) PDCCH candidate in the search space corresponds to the last (or the first) part of the DCI.

For another example, the UE could be explicitly indicated by the network the association/mapping between the control channel element (CCE) indices of the PDCCH candidates in the search space and the TRPs in the multi-TRP system. For instance, the PDCCH candidate corresponding to the lowest control channel element (CCE) index in the search space could correspond to the first (or the last) entry/TRP in the list/set/pool of (MAC CE activated) TRP-specific ID/index values, the PDCCH candidate corresponding to the second lowest CCE index in the search space could correspond to the second (or the second last) entry/TRP in the list/set/pool of (MAC CE activated) TRP-specific ID/index values, and so on, and the PDCCH candidate corresponding to the highest CCE index in the search space could correspond to the last (or the first) entry/TRP in the list/set/pool of (MAC CE activated) TRP-specific ID/index values.

Furthermore, each of the N>1 PDCCH candidates in the search space could correspond to the same DCI payload, and/or the N>1 PDCCH candidates in the search space could correspond to separate parts of the same DCI payload - e.g., the PDCCH candidate corresponding to the lowest CCE index in the search space corresponds to the first (or the last) part of the DCI, the PDCCH candidate corresponding to the second lowest CCE index in the search space corresponds to the second (or the second last) part of the DCI, and so on, and the PDCCH candidate corresponding to the highest CCE index in the search space corresponds to the last (or the first) part of the DCI.

Other exact association/mapping relationships between the N>1 PDCCH candidates configured in the search space and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between one or more PDCCH candidates in the search space and the TRPs in the multi-TRP system. The UE could be higher layer configured by the network a list/set/pool of TRP-specific ID/index values such as PCIs and TRP-specific higher layer signaling index values. The UE could also receive from the network a MAC CE activation command (and/or a bitmap and/or a DCI) activating one or more TRP-specific ID/index values from the list/set/pool of TRP-specific ID/index values. The UE could be implicitly indicated by the network the association/mapping between the one or more PDCCH candidates in the search space and the TRP-specific ID/index values such as PCIs and TRP-specific higher layer signaling index values in the list/set/pool of (MAC CE activated) TRP-specific ID/index values.

For example, the UE could be implicitly indicated by the network the association/mapping between the indices of the PDCCH candidates within/among the N>1 PDCCH candidates in the search space and the TRPs in the multi-TRP system. For instance, the first PDCCH candidate in the search space could correspond to the TRP with the lowest (or the highest) TRP-specific ID/index value such as PCI value and TRP-specific higher layer signaling index value in the list/set/pool of (MAC CE activated) TRP-specific ID/index values, the second PDCCH candidate in the search space could correspond to the TRP with the second lowest (or the second highest) TRP-specific ID/index value such as PCI value and TRP-specific higher layer signaling index value in the list/set/pool of (MAC CE activated) TRP-specific ID/index values, and so on, and the last (N-th) PDCCH candidate in the search space could correspond to the highest (or the lowest) TRP-specific ID/index value such as PCI value and TRP-specific higher layer signaling index value in the list/set/pool of (MAC CE activated) TRP-specific ID/index values. The order(s) of the PDCCH candidates in the search space could be pre-configured and known to both the network and the UE sides a priori.

Alternatively, the UE could be indicated by the network the order(s) of the PDCCH candidates in the search space; this indication could be via higher layer (RRC) or/and MAC CE or/and DCI based signaling or/and any combination of at least two of RRC, MAC CE and DCI based signaling; this indication could be via a separate (dedicated) parameter or joint with another parameter. Furthermore, each of the N>1 PDCCH candidates in the search space could correspond to the same DCI payload, and/or the N>1 PDCCH candidates in the search space could correspond to separate parts of the same DCI payload - e.g., the first PDCCH candidate in the search space corresponds to the first (or the last) part of the DCI, the second PDCCH candidate in the search space corresponds to the second (or the second last) part of the DCI, and so on, and the last (N-th) PDCCH candidate in the search space corresponds to the last (or the first) part of the DCI.

For another example, the UE could be implicitly indicated by the network the association/mapping between the CCE indices of the PDCCH candidates in the search space and the TRPs in the multi-TRP system. For instance, the PDCCH candidate corresponding to the lowest control channel element (CCE) index in the search space could correspond to the TRP with the lowest (or the highest) TRP-specific ID/index value such as PCI value and TRP-specific higher layer signaling index value in the list/set/pool of (MAC CE activated) TRP-specific ID/index values, the PDCCH candidate corresponding to the second lowest CCE index in the search space could correspond to the TRP with the second lowest (or the second highest) TRP-specific ID/index value such as PCI value and TRP-specific higher layer signaling index value in the list/set/pool of (MAC CE activated) TRP-specific ID/index values, and so on, and the PDCCH candidate corresponding to the highest CCE index in the search space could correspond to the TRP with the highest (or the lowest) TRP-specific ID/index value such as PCI value and TRP-specific higher layer signaling index value in the list/set/pool of (MAC CE activated) TRP-specific ID/index values.

Furthermore, each of the N>1 PDCCH candidates in the search space could correspond to the same DCI payload, and/or the N>1 PDCCH candidates in the search space could correspond to separate parts of the same DCI payload - e.g., the PDCCH candidate corresponding to the lowest CCE index in the search space corresponds to the first (or the last) part of the DCI, the PDCCH candidate corresponding to the second lowest CCE index in the search space corresponds to the second (or the second last) part of the DCI, and so on, and the PDCCH candidate corresponding to the highest CCE index in the search space corresponds to the last (or the first) part of the DCI.

Other implicit indication methods of the association/mapping relationships between the N>1 PDCCH candidates configured in the search space and the TRPs in the multi-TRP system are also possible.

The UE could be indicated by the network which PDCCH candidate(s) in the search space is configured for the same DCI payload and/or one part of the same DCI payload; this indication could be based on a UE's capability/preference reporting. For instance, the UE could receive from the network a MAC CE activation command (and/or a bitmap and/or a DCI) activating/indicating one or more PDCCH candidates from the N>1 PDCCH candidates configured in the search space as the PDCCH candidate(s) for the same DCI payload (or conveying separate parts of the same DCI payload). The UE's capability/preference reporting could include information indicating whether/how the UE could conduct soft combining or selection of the PDCCH(s)/DCI(s) repetitions from the TRPs.

In the CORESET, N>1 search spaces each having at least one PDCCH candidate could be configured to convey the PDCCHs/DCIs (or PDCCH repetitions) transmitted from different TRPs. Furthermore, the N>1 search spaces each having at least one PDCCH candidate, and therefore, the corresponding PDCCH candidates for repetition, could be linked/associated via a higher layer RRC signaling/parameter, denoted by, e.g., SearchSpaceLinking.

In one example, the UE could be explicitly indicated by the network the association/mapping between one or more search spaces and the TRPs in the multi-TRP system. The UE could be higher layer configured by the network a list/set/pool of TRP-specific ID/index values such as PCIs and TRP-specific higher layer signaling index values. The UE could also receive from the network a MAC CE activation command (and/or a bitmap and/or a DCI) activating one or more TRP-specific ID/index values from the list/set/pool of TRP-specific ID/index values. The UE could be explicitly indicated by the network the association/mapping between the one or more search spaces and the TRP-specific ID/index values such as PCIs and TRP-specific higher layer signaling index values in the list/set/pool of (MAC CE activated) TRP-specific ID/index values.

For example, the UE could be explicitly indicated by the network the association/mapping between the indices of the search spaces within/among the N>1 search spaces in the CORESET and the TRPs in the multi-TRP system. For instance, the first search space could correspond to the first (or the last) entry/TRP in the list/set/pool of (MAC CE activated) TRP-specific ID/index values, the second search space could correspond to the second (or the second last) entry/TRP in the list/set/pool of (MAC CE activated) TRP-specific ID/index values, and so on, and the last (N-th) search space could correspond to the last (or the first) entry/TRP in the list/set/pool of (MAC CE activated) TRP-specific ID/index values. The order(s) of the search spaces configured in the CORESET could be pre-configured and known to both the network and the UE sides a priori.

Alternatively, the UE could be indicated by the network the order(s) of the search spaces; this indication could be via higher layer (RRC) or/and MAC CE or/and DCI based signaling or/and any combination of at least two of RRC, MAC CE and DCI based signaling; this indication could be via a separate (dedicated) parameter or joint with another parameter.

Furthermore, each of the N>1 search spaces could correspond to the same DCI payload, and/or the N>1 search spaces could correspond to separate parts of the same DCI payload - e.g., the first search space corresponds to the first (or the last) part of the DCI, the second search space corresponds to the second (or the second last) part of the DCI, and so on, and the last (N-th) search space corresponds to the last (or the first) part of the DCI.

For another example, the UE could be explicitly indicated by the network the association/mapping between the aggregation levels (ALs) of the search spaces in the CORESET and the TRPs in the multi-TRP system. For instance, the search space corresponding to the lowest aggregation level (AL) could correspond to the first (or the last) entry/TRP in the list/set/pool of (MAC CE activated) TRP-specific ID/index values, the search space corresponding to the second lowest AL could correspond to the second (or the second last) entry/TRP in the list/set/pool of (MAC CE activated) TRP-specific ID/index values, and so on, and the search space corresponding to the highest AL could correspond to the last (or the first) entry/TRP in the list/set/pool of (MAC CE activated) TRP-specific ID/index values.

Furthermore, each of the N>1 search spaces could correspond to the same DCI payload, and/or the N>1 search spaces could correspond to separate parts of the same DCI payload - e.g., the search space corresponding to the lowest AL corresponds to the first (or the last) part of the DCI, the search space corresponding to the second lowest AL corresponds to the second (or the second last) part of the DCI, and so on, and the search space corresponding to the highest AL corresponds to the last (or the first) part of the DCI.

Other exact association/mapping relationships between the N>1 search spaces and the TRPs in the multi-TRP system and/or the corresponding indication method(s), e.g., via higher layer RRC signaling and/or MAC CE command and/or dynamic DCI signaling, are also possible.

In another example, the UE could be implicitly indicated by the network the association/mapping between one or more search spaces and the TRPs in the multi-TRP system. The UE could be higher layer configured by the network a list/set/pool of TRP-specific ID/index values such as PCIs and TRP-specific higher layer signaling index values. The UE could also receive from the network a MAC CE activation command (and/or a bitmap and/or a DCI) activating one or more TRP-specific ID/index values from the list/set/pool of TRP-specific ID/index values. The UE could be implicitly indicated by the network the association/mapping between the one or more search spaces and the TRP-specific ID/index values such as PCIs and TRP-specific higher layer signaling index values in the list/set/pool of (MAC CE activated) TRP-specific ID/index values.

For example, the UE could be implicitly indicated by the network the association/mapping between the indices of the search spaces within/among the N>1 search spaces in the CORESET and the TRPs in the multi-TRP system. For instance, the first search space could correspond to the TRP with the lowest (or the highest) TRP-specific ID/index value such as PCI value and TRP-specific higher layer signaling index value in the list/set/pool of (MAC CE activated) TRP-specific ID/index values, the second search space could correspond to the TRP with the second lowest (or the second highest) TRP-specific ID/index value such as PCI value and TRP-specific higher layer signaling index value in the list/set/pool of (MAC CE activated) TRP-specific ID/index values, and so on, and the last (N-th) search space could correspond to the highest (or the lowest) TRP-specific ID/index value such as PCI value and TRP-specific higher layer signaling index value in the list/set/pool of (MAC CE activated) TRP-specific ID/index values. The order(s) of the search spaces could be pre-configured and known to both the network and the UE sides a priori.

Alternatively, the UE could be indicated by the network the order(s) of the search spaces; this indication could be via higher layer (RRC) or/and MAC CE or/and DCI based signaling or/and any combination of at least two of RRC, MAC CE and DCI based signaling; this indication could be via a separate (dedicated) parameter or joint with another parameter. Furthermore, each of the N>1 search spaces could correspond to the same DCI payload, and/or the N>1 search spaces could correspond to separate parts of the same DCI payload - e.g., the first search space corresponds to the first (or the last) part of the DCI, the second search space corresponds to the second (or the second last) part of the DCI, and so on, and the last (N-th) search space corresponds to the last (or the first) part of the DCI.

For another example, the UE could be implicitly indicated by the network the association/mapping between the indices of the search spaces within/among the N>1 search spaces in the CORESET and the TRPs in the multi-TRP system. For instance, the search space corresponding to the lowest AL could correspond to the TRP with the lowest (or the highest) TRP-specific ID/index value such as PCI value and TRP-specific higher layer signaling index value in the list/set/pool of (MAC CE activated) TRP-specific ID/index values, the search space corresponding to the second lowest AL could correspond to the TRP with the second lowest (or the second highest) TRP-specific ID/index value such as PCI value and TRP-specific higher layer signaling index value in the list/set/pool of (MAC CE activated) TRP-specific ID/index values, and so on, and the search space corresponding to the highest AL could correspond to the TRP with the highest (or the lowest) TRP-specific ID/index value such as PCI value and TRP-specific higher layer signaling index value in the list/set/pool of (MAC CE activated) TRP-specific ID/index values.

Furthermore, each of the N>1 search spaces could correspond to the same DCI payload, and/or the N>1 search spaces could correspond to separate parts of the same DCI payload - e.g., the search space corresponding to the lowest AL corresponds to the first (or the last) part of the DCI, the search space corresponding to the second lowest AL corresponds to the second (or the second last) part of the DCI, and so on, and the search space corresponding to the highest AL corresponds to the last (or the first) part of the DCI.

Other implicit indication methods of the association/mapping relationships between the N>1 search spaces and the TRPs in the multi-TRP system are also possible.

The UE could be indicated by the network which search space(s) is configured for the same DCI payload and/or one part of the same DCI payload; this indication could be based on a UE's capability/preference reporting. For instance, the UE could receive from the network a MAC CE activation command (and/or a bitmap and/or a DCI) activating/indicating one or more search spaces from the N>1 search spaces configured in the CORESET for the same DCI payload (or conveying separate parts of the same DCI payload). The UE's capability/preference reporting could include information indicating whether/how the UE could conduct soft combining or selection of the PDCCH(s)/DCI(s) repetitions from the TRPs.

In the CORESET, N1>1 search spaces each having at least one PDCCH candidate could be configured to convey the PDCCHs/DCIs (i.e., PDCCH repetitions) transmitted from different TRPs. Denote the total number of PDCCH candidates by N2. Both the N1>1 search spaces and the N2>1 PDCCH candidates configured therein could be associated with the TRPs in the multi-TRP system. Furthermore, the N1>1 search spaces each having at least one PDCCH candidate, and therefore, the corresponding N2>1 PDCCH candidates for repetition configured therein, could be linked/associated via a higher layer RRC signaling/parameter, denoted by, e.g., SearchSpaceLinking.

In one example, the UE could be explicitly indicated by the network (1) the association/mapping between one or more search spaces and the TRPs in the multi-TRP system, and (2) the association/mapping between one or more PDCCH candidates and the TRPs in the multi-TRP system. The UE could be higher layer configured by the network a list/set/pool of TRP-specific ID/index values such as PCIs and TRP-specific higher layer signaling index values. The UE could also receive from the network a MAC CE activation command (and/or a bitmap and/or a DCI) activating one or more TRP-specific ID/index values from the list/set/pool of TRP-specific ID/index values.

The UE could be explicitly indicated by the network (1) the association/mapping between the one or more search spaces and the TRP-specific ID/index values such as PCIs and TRP-specific higher layer signaling index values in the list/set/pool of (MAC CE activated) TRP-specific ID/index values, and (2) the association/mapping between the one or more PDCCH candidates and the TRP-specific ID/index values such as PCIs and TRP-specific higher layer signaling index values in the list/set/pool of (MAC CE activated) TRP-specific ID/index values. The indication of the association(s)/mapping relationship(s) could be via higher layer (RRC) or/and MAC CE or/and DCI based signaling or/and any combination of at least two of RRC, MAC CE and DCI based signaling; the indication of the association(s)/mapping relationship(s) could be via a separate (dedicated) parameter or joint with another parameter.

In another example, the UE could be implicitly indicated by the network (1) the association/mapping between one or more search spaces and the TRPs in the multi-TRP system, and (2) the association/mapping between one or more PDCCH candidates and the TRPs in the multi-TRP system. The UE could be higher layer configured by the network a list/set/pool of TRP-specific ID/index values such as PCIs and TRP-specific higher layer signaling index values. The UE could also receive from the network a MAC CE activation command (and/or a bitmap and/or a DCI) activating one or more TRP-specific ID/index values from the list/set/pool of TRP-specific ID/index values. The UE could be implicitly indicated by the network (1) the association/mapping between the one or more search spaces and the TRP-specific ID/index values such as PCIs and TRP-specific higher layer signaling index values in the list/set/pool of (MAC CE activated) TRP-specific ID/index values, and (2) the association/mapping between the one or more PDCCH candidates and the TRP-specific ID/index values such as PCIs and TRP-specific higher layer signaling index values in the list/set/pool of (MAC CE activated) TRP-specific ID/index values.

For example, the first search space could correspond to the TRP with the lowest (or the highest) TRP-specific ID/index value such as PCI value and TRP-specific higher layer signaling index value in the list/set/pool of (MAC CE activated) TRP-specific ID/index values, the second search space could correspond to the TRP with the second lowest (or the second highest) TRP-specific ID/index value such as PCI value and TRP-specific higher layer signaling index value in the list/set/pool of (MAC CE activated) TRP-specific ID/index values, and so on, and the last (N1-th) search space could correspond to the N1-th lowest (or the N1-th highest) TRP-specific ID/index value such as PCI value and TRP-specific higher layer signaling index value in the list/set/pool of (MAC CE activated) TRP-specific ID/index values.

Furthermore, the first PDCCH candidate could correspond to the TRP with the (N1+1)-th lowest (or the (N1+1)-th highest) TRP-specific ID/index value such as PCI value and TRP-specific higher layer signaling index value in the list/set/pool of (MAC CE activated) TRP-specific ID/index values, the second PDCCH candidate could correspond to the TRP with the (N1+2)-th lowest (or the (N1+2)-th highest) TRP-specific ID/index value such as PCI value and TRP-specific higher layer signaling index value in the list/set/pool of (MAC CE activated) TRP-specific ID/index values, and so on, and the last (N2-th) PDCCH candidate could correspond to the highest (or the lowest) TRP-specific ID/index value such as PCI value and TRP-specific higher layer signaling index value in the list/set/pool of (MAC CE activated) TRP-specific ID/index values.

The order(s) of the search spaces/PDCCH candidates could be pre-configured and known to both the network and the UE sides a priori. Alternatively, the UE could be indicated by the network the order(s) of the search spaces in the CORESET/PDCCH candidates in the search space; this indication could be via higher layer (RRC) or/and MAC CE or/and DCI based signaling or/and any combination of at least two of RRC, MAC CE and DCI based signaling; this indication could be via a separate (dedicated) parameter or joint with another parameter.

Furthermore, one or more of the N1>1 search spaces and/or one or more of the N2>1 PDCCH candidates could correspond to the same DCI payload. One or more of the N1>1 search spaces and/or one or more of the N2>1 PDCCH candidates could correspond to separate parts of the same DCI payload - e.g., the first search space corresponds to the first part of the DCI, the second search space corresponds to the second part of the DCI, and so on, and the last (N1-th) search space corresponds to the N1-th part of the DCI, the first PDCCH candidate corresponds to the (N1+1)-th part of the DCI, the second PDCCH candidate corresponds to the (N1+2)-th part of the DCI, and so on, and the last (N2-th) PDCCH candidate corresponds to the last part of the DCI.

For another example, assume that search space A contains the N2>1 PDCCH candidates for association with TRPs. The search space corresponding to the lowest AL could correspond to the TRP with the lowest (or the highest) TRP-specific ID/index value such as PCI value and TRP-specific higher layer signaling index value in the list/set/pool of (MAC CE activated) TRP-specific ID/index values, the search space corresponding to the second lowest AL could correspond to the TRP with the second lowest (or the second highest) TRP-specific ID/index value such as PCI value and TRP-specific higher layer signaling index value in the list/set/pool of (MAC CE activated) TRP-specific ID/index values, and so on, and the search space corresponding to the highest AL could correspond to the TRP with the N1-th lowest (or the N1-th highest) TRP-specific ID/index value such as PCI value and TRP-specific higher layer signaling index value in the list/set/pool of (MAC CE activated) TRP-specific ID/index values.

Furthermore, the PDCCH candidate corresponding to the lowest (or the highest) CCE index in search space A could correspond to the TRP with the (N1+1)-th lowest (or the (N1+1)-th highest) TRP-specific ID/index value such as PCI value and TRP-specific higher layer signaling index value in the list/set/pool of (MAC CE activated) TRP-specific ID/index values, the PDCCH candidate corresponding to the second lowest (or the second highest) CCE index in search space A could correspond to the TRP with the (N1+2)-th lowest (or the (N1+2)-th highest) TRP-specific ID/index value such as PCI value and TRP-specific higher layer signaling index value in the list/set/pool of (MAC CE activated) TRP-specific ID/index values, and so on, and the PDCCH candidate corresponding to the highest (or the lowest) CCE index in search space A could correspond to the highest (or the lowest) TRP-specific ID/index value such as PCI value and TRP-specific higher layer signaling index value in the list/set/pool of (MAC CE activated) TRP-specific ID/index values.

Furthermore, one or more of the N1>1 search spaces and/or one or more of the N2>1 PDCCH candidates could correspond to the same DCI payload. One or more of the N1>1 search spaces and/or one or more of the N2>1 PDCCH candidates could correspond to separate parts of the same DCI payload - e.g., the search space corresponding to the lowest AL corresponds to the first part of the DCI, the search space corresponding to the second lowest AL corresponds to the second part of the DCI, and so on, and the search space corresponding to the highest AL corresponds to the N1-th part of the DCI, the PDCCH candidate corresponding to the lowest CCE index in search space A corresponds to the (N1+1)-th part of the DCI, the PDCCH candidate corresponding to the second lowest CCE index in search space A corresponds to the (N1+2)-th part of the DCI, and so on, and the PDCCH candidate corresponding to the highest CCE index in search space A corresponds to the last part of the DCI

Other implicit indication methods of the association/mapping relationships between the N1>1 search spaces/N2>1 PDCCH candidates and the TRPs in the multi-TRP system are also possible.

The UE could be indicated by the network which search space(s) and/or PDCCH candidate(s) are configured for the same DCI payload and/or one part of the same DCI payload; this indication could be based on a UE's capability/preference reporting. For instance, the UE could receive from the network a MAC CE activation command (and/or a bitmap and/or a DCI) activating/indicating one or more search spaces from the N1>1 search spaces and/or one or more PDCCH candidates from the N2>1 PDCCH candidates for the same DCI payload (or conveying separate parts of the same DCI payload). The UE's capability/preference reporting could include information indicating whether/how the UE could conduct soft combining or selection of the PDCCH(s)/DCI(s) repetitions from the TRPs.

As aforementioned, in a multi-TRP system, the same DCI payload could be repeatedly transmitted from different TRPs, or separate parts of the same DCI payload could be transmitted from different TRPs via different spatial domain TX filters/beams. Furthermore, multiple (more than one) PDCCH candidates in a single search space and/or multiple (more than one) search spaces could be configured in the CORESET to convey the same DCI payload. Hence, there is a need to associate different PDCCH candidates in a single search space and/or different search spaces configured in a single CORESET with the TCI states indicating the different spatial domain TX filters/beams. In this disclosure, the same DCI payload could correspond to the DCI for beam indication and/or the CORESET could be configured for the DCI(s) for beam indication.

The example of MAC CE based TCI state/beam indication for the multi-TRP operation is presented in FIGURE 9, wherein the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more MAC CE commands to indicate one or more beam(s) (i.e., the TCI state(s)) for the transmission/reception of the PDCCH(s)/DCI(s) transmitted from/associated with one or more TRPs in a multi-TRP system.

For instance, the UE could receive from the network a single MAC CE command for beam indication to indicate N>1 TCI states/beams for the same DCI payload repeatedly transmitted from/associated with different TRPs in the multi-TRP system via the same CORESET. For another example, the UE could receive from the network a single MAC CE command for beam indication to indicate N>1 TCI states/beams for different/separate parts of the same DCI payload transmitted from/associated with different TRPs in the multi-TRP system via the same CORESET.

As depicted in FIGURE 9 and FIGURE 12, the UE could receive from the network a single MAC CE command for beam indication to indicate N=2 TCI states/beams (TCI #3 and TCI #5) for PDCCH-1/DCI-1 transmitted from/associated with TRP-1 and PDCCH-2/DCI-2 transmitted from/associated with TRP-2, in the multi-TRP system, respectively, via the same CORESET. Recall that DCI-1 and DCI-2 could correspond to the same DCI payload denoted by DCI_A, or two separate parts of the same DCI payload DCI_A.

The MAC CE for beam indication could include at least a TCI state ID. As discussed above, the TCI state corresponding to the TCI state ID could be at least one of: (1) a DL TCI state; (2) an UL TCI state; (3) a joint DL and UL TCI state; and (4) separate DL TCI state and UL TCI state.

As discussed above, a single search space containing N>1 PDCCH candidates could be configured in the CORESET to convey the PDCCHs/DCIs transmitted from different TRPs. The association/mapping between the TCI state(s)/beam(s) indicated in the MAC CE command(s) and the PDCCH candidates configured in the search space needs to be specified. There could be various means to associate/map the TCI state(s)/beam(s) indicated in the MAC CE command(s) for beam indication and the PDCCH candidates configured in the search space.

For N>1 TCI states/beams indication in a single MAC CE command for beam indication, in one example, the UE could be indicated by the network, e.g., via higher layer RRC signaling and/or MAC CE command and/or dynamic DCI signaling, the exact association/mapping between one or more PDCCH candidates in the search space and the TCI states/beams indicated in the MAC CE command for beam indication.

For example, the UE could be indicated by the network the association/mapping between the indices of the PDCCH candidates within/among the N>1 PDCCH candidates in the search space and the TCI states/beams indicated in the MAC CE command for beam indication. For instance, the first PDCCH candidate in the search space could correspond to the first (or the last) TCI state and/or the TCI state with the lowest (or the highest) TCI state ID value indicated in the MAC CE command for beam indication, the second PDCCH candidate in the search space could correspond to the second (or the second last) TCI state and/or the TCI state with the second lowest (or the second highest) TCI state ID value indicated in the MAC CE command for beam indication, and so on, and the last (N-th) PDCCH candidate in the search space could correspond to the last (or the first) TCI state and/or the TCI state with the highest (or the lowest) TCI state ID value indicated in the MAC CE command for beam indication. The order(s) of the PDCCH candidates in the search space could be pre-configured and known to both the network and the UE sides a priori.

Alternatively, the UE could be indicated by the network the order(s) of the PDCCH candidates in the search space; this indication could be via higher layer (RRC) or/and MAC CE or/and DCI based signaling or/and any combination of at least two of RRC, MAC CE and DCI based signaling; this indication could be via a separate (dedicated) parameter or joint with another parameter. Furthermore, each of the N>1 PDCCH candidates in the search space could correspond to the same DCI payload, and/or the N>1 PDCCH candidates in the search space could correspond to separate parts of the same DCI payload - e.g., the first PDCCH candidate in the search space corresponds to the first (or the last) part of the DCI, the second PDCCH candidate in the search space corresponds to the second (or the second last) part of the DCI, and so on, and the last (N-th) PDCCH candidate in the search space corresponds to the last (or the first) part of the DCI.

For another example, the UE could be indicated by the network the association/mapping between the CCE indices of the PDCCH candidates in the search space and the TCI states/beams indicated in the MAC CE command for beam indication. For instance, the PDCCH candidate corresponding to the lowest CCE index in the search space could correspond to the first (or the last) TCI state and/or the TCI state with the lowest (or the highest) TCI state ID value indicated in the MAC CE command for beam indication, the PDCCH candidate corresponding to the second lowest CCE index in the search space could correspond to the second (or the second last) TCI state and/or the TCI state with the second lowest (or the second highest) TCI state ID value indicated in the MAC CE command for beam indication, and so on, and the PDCCH candidate corresponding to the highest CCE index in the search space could correspond to the last (or the first) TCI state and/or the TCI state with the highest (or the lowest) TCI state ID value indicated in the MAC CE command for beam indication.

Furthermore, each of the N>1 PDCCH candidates in the search space could correspond to the same DCI payload, and/or the N>1 PDCCH candidates in the search space could correspond to separate parts of the same DCI payload - e.g., the PDCCH candidate corresponding to the lowest CCE index in the search space corresponds to the first (or the last) part of the DCI, the PDCCH candidate corresponding to the second lowest CCE index in the search space corresponds to the second (or the second last) part of the DCI, and so on, and the PDCCH candidate corresponding to the highest CCE index in the search space corresponds to the last (or the first) part of the DCI.

Other exact association/mapping relationships between the N>1 PDCCH candidates configured in the search space and the TCI states/beams indicated in the MAC CE command for beam indication and/or the corresponding indication method(s), e.g., via higher layer RRC signaling and/or MAC CE command and/or dynamic DCI signaling, are also possible.

For N>1 TCI states/beams indication in a single MAC CE command for beam indication, in another example, a TCI state, e.g., the higher layer parameter TCI-State, indicated in the MAC CE command for beam indication could include/comprise/incorporate at least a CCE index corresponding to a PDCCH candidate in the search space and/or at least a (relative) PDCCH candidate index/order among the N>1 PDCCH candidates configured in the search space.

For N>1 TCI states/beams indication in a single MAC CE command for beam indication, in yet another example, a parameter configuring a PDCCH candidate in the search space could include/comprise/incorporate at least one (absolute) TCI state ID value and/or one (relative) TCI state index/order among the N>1 TCI states/beams indicated in the MAC CE command for beam indication.

For N>1 TCI states/beams indication in a single MAC CE command for beam indication, in yet another example, the UE could be implicitly indicated by the network the association/mapping between the N>1 TCI states/beams indicated in the MAC CE command for beam indication and the N>1 PDCCH candidates configured in the search space. For example, a TCI state/beam indicated in the MAC CE command for beam indication could be associated with/mapped to a PDCCH candidate in the search space if the TCI state/beam indicated in the MAC CE command for beam indication and the PDCCH candidate configured in the search space are associated with the same TRP-specific ID value such as PCI value and/or TRP-specific higher layer signaling index value. Other implicit indication methods of the association/mapping between the N>1 TCI states/beams indicated in the MAC CE command for beam indication and the N>1 PDCCH candidates in the search space are also possible.

For N>1 TCI states/beams indication in a single MAC CE command for beam indication, in yet another example, a TCI state/beam indicated in the MAC CE command for beam indication could be associated with/mapped to a PDCCH candidate configured in the search space if the TCI state/beam indicated in the MAC CE command for beam indication and the parameter configuring the PDCCH candidate in the search space include/comprise/incorporate the same ID/index value. For example, this ID/index value could be a (absolute) TRP-specific ID/index value such as PCI value, TRP ID value, TRP index value, TRP-specific higher layer signaling index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps.

For a list/set/pool of N>1 MAC CE commands for beam indication with each MAC CE command for beam indication indicating at least a TCI state/beam (a unique entity ID/index could be included/incorporated in each MAC CE command for beam indication), in one example, the UE could be indicated by the network, e.g., via higher layer RRC signaling and/or MAC CE command and/or dynamic DCI signaling, the exact association/mapping between one or more PDCCH candidates in the search space and the N>1 MAC CE commands for beam indication (and therefore, the TCI states/beams indicated therein).

For example, the UE could be indicated by the network the association/mapping between the indices of the PDCCH candidates within/among the N>1 PDCCH candidates in the search space and the MAC CE commands for beam indication. For instance, the first PDCCH candidate in the search space could correspond to the first (or the last) MAC CE command for beam indication in the list/set/pool of N>1 MAC CE commands for beam indication and/or the MAC CE command for beam indication indicating the lowest (or the highest) entity ID/index value and/or the MAC CE command for beam indication indicating the TCI state with the lowest (or the highest) TCI state ID value, the second PDCCH candidate in the search space could correspond to the second (or the second last) MAC CE command for beam indication in the list/set/pool of N>1 MAC CE commands for beam indication and/or the MAC CE command for beam indication indicating the second lowest (or the second highest) entity ID/index value and/or the MAC CE command for beam indication indicating the TCI state with the second lowest (or the second highest) TCI state ID value, and so on, and the last (N-th) PDCCH candidate in the search space could correspond to the last (or the first) MAC CE command for beam indication in the list/set/pool of N>1 MAC CE commands for beam indication and/or the MAC CE command for beam indication indicating the highest (or the lowest) entity ID/index value and/or the MAC CE command for beam indication indicating the TCI state with the highest (or the lowest) TCI state ID value. The order(s) of the PDCCH candidates in the search space could be pre-configured and known to both the network and the UE sides a priori.

Alternatively, the UE could be indicated by the network the order(s) of the PDCCH candidates in the search space; this indication could be via higher layer (RRC) or/and MAC CE or/and DCI based signaling or/and any combination of at least two of RRC, MAC CE and DCI based signaling; this indication could be via a separate (dedicated) parameter or joint with another parameter. Furthermore, each of the N>1 PDCCH candidates in the search space could correspond to the same DCI payload, and/or the N>1 PDCCH candidates in the search space could correspond to separate parts of the same DCI payload - e.g., the first PDCCH candidate in the search space corresponds to the first (or the last) part of the DCI, the second PDCCH candidate in the search space corresponds to the second (or the second last) part of the DCI, and so on, and the last (N-th) PDCCH candidate in the search space corresponds to the last (or the first) part of the DCI.

For another example, the UE could be indicated by the network the association/mapping between the CCE indices of the PDCCH candidates in the search space and the MAC CE commands for beam indication. For instance, the PDCCH candidate corresponding to the lowest CCE index in the search space could correspond to the first (or the last) MAC CE command for beam indication in the list/set/pool of N>1 MAC CE commands for beam indication and/or the MAC CE command for beam indication indicating the lowest (or the highest) entity ID/index value and/or the MAC CE command for beam indication indicating the TCI state with the lowest (or the highest) TCI state ID value, the PDCCH candidate corresponding to the second lowest CCE index in the search space could correspond to the second (or the second last) MAC CE command for beam indication in the list/set/pool of N>1 MAC CE commands for beam indication and/or the MAC CE command for beam indication indicating the second lowest (or the second highest) entity ID/index value and/or the MAC CE command for beam indication indicating the TCI state with the second lowest (or the second highest) TCI state ID value, and so on, and the PDCCH candidate corresponding to the highest CCE index in the search space could correspond to the last (or the first) MAC CE command for beam indication in the list/set/pool of N>1 MAC CE commands for beam indication and/or the MAC CE command for beam indication indicating the highest (or the lowest) entity ID/index value and/or the MAC CE command for beam indication indicating the TCI state with the highest (or the lowest) TCI state ID value.

Furthermore, each of the N>1 PDCCH candidates in the search space could correspond to the same DCI payload, and/or the N>1 PDCCH candidates in the search space could correspond to separate parts of the same DCI payload - e.g., the PDCCH candidate corresponding to the lowest CCE index in the search space corresponds to the first (or the last) part of the DCI, the PDCCH candidate corresponding to the second lowest CCE index in the search space corresponds to the second (or the second last) part of the DCI, and so on, and the PDCCH candidate corresponding to the highest CCE index in the search space corresponds to the last (or the first) part of the DCI.

Other exact association/mapping relationships between the N>1 PDCCH candidates configured in the search space and the N>1 MAC CE commands for beam indication (and therefore, the TCI states/beams indicated therein) and/or the corresponding indication method(s), e.g., via higher layer RRC signaling and/or MAC CE command and/or dynamic DCI signaling, are also possible.

For a list/set/pool of N>1 MAC CE commands for beam indication with each MAC CE command for beam indication indicating at least a TCI state/beam (a unique entity ID/index could be included/incorporated in each MAC CE command for beam indication), in another example, a MAC CE command for beam indication could include/comprise/incorporate at least a CCE index corresponding to a PDCCH candidate in the search space and/or at least a (relative) PDCCH candidate index/order among the N>1 PDCCH candidates configured in the search space.

For a list/set/pool of N>1 MAC CE commands for beam indication with each MAC CE command for beam indication indicating at least a TCI state/beam (a unique entity ID/index could be included/incorporated in each MAC CE command for beam indication), in yet another example, a parameter configuring a PDCCH candidate in the search space could include/comprise/incorporate at least one (absolute) entity ID/index value of at least one MAC CE command for beam indication and/or at least one (relative) index of at least one MAC CE command for beam indication among the N>1 MAC CE commands for beam indication.

For a list/set/pool of N>1 MAC CE commands for beam indication with each MAC CE command for beam indication indicating at least a TCI state/beam (a unique entity ID/index could be included/incorporated in each MAC CE command for beam indication), in yet another example, the UE could be implicitly indicated by the network the association/mapping between the N>1 MAC CE commands for beam indication (and therefore, the TCI states/beams indicated therein) and the N>1 PDCCH candidates configured in the search space. For example, a MAC CE command for beam indication could be associated with/mapped to a PDCCH candidate in the search space if the MAC CE command for beam indication and the PDCCH candidate configured in the search space are associated with the same TRP-specific ID value such as PCI value and/or TRP-specific higher layer signaling index value. Other implicit indication methods of the association/mapping between the N> 1 MAC CE commands for beam indication (and therefore, the TCI states/beams indicated therein) and the N>1 PDCCH candidates in the search space are also possible.

For a list/set/pool of N>1 MAC CE commands for beam indication with each MAC CE command for beam indication indicating at least a TCI state/beam (a unique entity ID/index could be included/incorporated in each MAC CE command for beam indication), in yet another example, a MAC CE command for beam indication could be associated with/mapped to a PDCCH candidate configured in the search space if the MAC CE command for beam indication and the parameter configuring the PDCCH candidate in the search space include/comprise/incorporate the same ID/index value. For example, this ID/index value could be a (absolute) TRP-specific ID/index value such as PCI value, TRP ID value, TRP index value, TRP-specific higher layer signaling index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps.

As discussed above, N>1 search spaces each configuring at least one PDCCH candidate could be configured in the CORESET to convey the PDCCHs/DCIs (i.e., PDCCH repetitions) transmitted from different TRPs. The association/mapping between the TCI state(s)/beam(s) indicated in the MAC CE command(s) and the search spaces (higher layer linked via SearchSpaceLinking) needs to be specified. There could be various means to associate/map the TCI state(s)/beam(s) indicated in the MAC CE command(s) for beam indication and the search spaces (higher layer linked via SearchSpaceLinking) configured in the CORESET.

For N>1 TCI states/beams indication in a single MAC CE command for beam indication, in one example, the UE could be indicated by the network, e.g., via higher layer RRC signaling and/or MAC CE command and/or dynamic DCI signaling, the exact association/mapping between one or more search spaces configured in the CORESET and the TCI states/beams indicated in the MAC CE command for beam indication.

For example, the UE could be indicated by the network the association/mapping between the indices of the search spaces within/among the N>1 search spaces in the CORESET, and the TCI states/beams indicated in the MAC CE command for beam indication. For instance, the first search space could correspond to the first (or the last) TCI state and/or the TCI state with the lowest (or the highest) TCI state ID value indicated in the MAC CE command for beam indication, the second search space could correspond to the second (or the second last) TCI state and/or the TCI state with the second lowest (or the second highest) TCI state ID value indicated in the MAC CE command for beam indication, and so on, and the last (N-th) search space could correspond to the last (or the first) TCI state and/or the TCI state with the highest (or the lowest) TCI state ID value indicated in the MAC CE command for beam indication. The order(s) of the search spaces configured in the CORESET could be pre-configured and known to both the network and the UE sides a priori.

Alternatively, the UE could be indicated by the network the order(s) of the search spaces in the CORESET; this indication could be via higher layer (RRC) or/and MAC CE or/and DCI based signaling or/and any combination of at least two of RRC, MAC CE and DCI based signaling; this indication could be via a separate (dedicated) parameter or joint with another parameter. Furthermore, each of the N>1 search spaces could correspond to the same DCI payload, and/or the N>1 search spaces could correspond to separate parts of the same DCI payload - e.g., the first search space corresponds to the first (or the last) part of the DCI, the second search space corresponds to the second (or the second last) part of the DCI, and so on, and the last (N-th) search space corresponds to the last (or the first) part of the DCI.

For another example, the UE could be indicated by the network the association/mapping between the ALs of the search spaces in the CORESET and the TCI states/beams indicated in the MAC CE command for beam indication. For instance, the search space corresponding to the lowest AL could correspond to the first (or the last) TCI state and/or the TCI state with the lowest (or the highest) TCI state ID value indicated in the MAC CE command for beam indication, the search space corresponding to the second lowest AL could correspond to the second (or the second last) TCI state and/or the TCI state with the second lowest (or the second highest) TCI state ID value indicated in the MAC CE command for beam indication, and so on, and the search space corresponding to the highest AL could correspond to the last (or the first) TCI state and/or the TCI state with the highest (or the lowest) TCI state ID value indicated in the MAC CE command for beam indication.

Furthermore, each of the N>1 search spaces in the CORESET could correspond to the same DCI payload, and/or the N>1 search spaces in the CORESET could correspond to separate parts of the same DCI payload - e.g., the search space corresponding to the lowest AL corresponds to the first (or the last) part of the DCI, the search space corresponding to the second lowest AL corresponds to the second (or the second last) part of the DCI, and so on, and the search space corresponding to the highest AL corresponds to the last (or the first) part of the DCI.

Other exact association/mapping relationships between the N>1 search spaces configured in the CORESET and the TCI states/beams indicated in the MAC CE command for beam indication and/or the corresponding indication method(s), e.g., via higher layer RRC signaling and/or MAC CE command and/or dynamic DCI signaling, are also possible.

For N>1 TCI states/beams indication in a single MAC CE command for beam indication, in another example, a TCI state, e.g., the higher layer parameter TCI-State, indicated in the MAC CE command for beam indication could include/comprise/incorporate at least an aggregation level value corresponding to a search space and/or at least a (relative) search space index/order among the N>1 search spaces configured in the CORESET.

For N>1 TCI states/beams indication in a single MAC CE command for beam indication, in yet another example, a parameter configuring a search space in the CORESET could include/comprise/incorporate at least one (absolute) TCI state ID value and/or at least one (relative) TCI state index/order among the N>1 TCI states/beams indicated in the MAC CE command for beam indication.

For N>1 TCI states/beams indication in a single MAC CE command for beam indication, in yet another example, the UE could be implicitly indicated by the network the association/mapping between the N>1 TCI states/beams indicated in the MAC CE command for beam indication and the N>1 search spaces configured in the CORESET. For example, a TCI state/beam indicated in the MAC CE command for beam indication could be associated with/mapped to a search space if the TCI state/beam indicated in the MAC CE command for beam indication and the search space configured in the CORESET are associated with the same TRP-specific ID value such as PCI value and/or TRP-specific higher layer signaling index value. Other implicit indication methods of the association/mapping between the N>1 TCI states/beams indicated in the MAC CE command for beam indication and the N>1 search spaces configured in the CORESET are also possible.

For N>1 TCI states/beams indication in a single MAC CE command for beam indication, in yet another example, a TCI state/beam indicated in the MAC CE command for beam indication could be associated with/mapped to a search space configured in the CORESET if the TCI state/beam indicated in the MAC CE command for beam indication and the parameter configuring the search space in the CORESET include/comprise/incorporate the same ID/index value. For example, this ID/index value could be a (absolute) TRP-specific ID/index value such as PCI value, TRP ID value, TRP index value, TRP-specific higher layer signaling index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps.

For a list/set/pool of N>1 MAC CE commands for beam indication with each MAC CE command for beam indication indicating at least a TCI state/beam (a unique entity ID/index could be included/incorporated in each MAC CE command for beam indication), in one example, the UE could be indicated by the network, e.g., via higher layer RRC signaling and/or MAC CE command and/or dynamic DCI signaling, the exact association/mapping between one or more search spaces in the CORESET and the N>1 MAC CE commands for beam indication (and therefore, the TCI states/beams indicated therein).

For example, the UE could be indicated by the network the association/mapping between the indices of the search spaces within/among the N>1 search spaces in the CORESET, and the MAC CE commands for beam indication. For instance, the first search space could correspond to the first (or the last) MAC CE command for beam indication in the list/set/pool of N>1 MAC CE commands for beam indication and/or the MAC CE command for beam indication indicating the lowest (or the highest) entity ID/index value and/or the MAC CE command for beam indication indicating the TCI state with the lowest (or the highest) TCI state ID value, the second search space could correspond to the second (or the second last) MAC CE command for beam indication in the list/set/pool of N>1 MAC CE commands for beam indication and/or the MAC CE command for beam indication indicating the second lowest (or the second highest) entity ID/index value and/or the MAC CE command for beam indication indicating the TCI state with the second lowest (or the second highest) TCI state ID value, and so on, and the last (N-th) search space could correspond to the last (or the first) MAC CE command for beam indication in the list/set/pool of N>1 MAC CE commands for beam indication and/or the MAC CE command for beam indication indicating the highest (or the lowest) entity ID/index value and/or the MAC CE command for beam indication indicating the TCI state with the highest (or the lowest) TCI state ID value. The order(s) of the search spaces in the CORESET could be pre-configured and known to both the network and the UE sides a priori.

Alternatively, the UE could be indicated by the network the order(s) of the search spaces in the CORESET; this indication could be via higher layer (RRC) or/and MAC CE or/and DCI based signaling or/and any combination of at least two of RRC, MAC CE and DCI based signaling; this indication could be via a separate (dedicated) parameter or joint with another parameter. Furthermore, each of the N>1 search spaces in the CORESET could correspond to the same DCI payload, and/or the N>1 search spaces in the CORESET could correspond to separate parts of the same DCI payload - e.g., the first search space corresponds to the first (or the last) part of the DCI, the second search space corresponds to the second (or the second last) part of the DCI, and so on, and the last (N-th) search space corresponds to the last (or the first) part of the DCI.

For another example, the UE could be indicated by the network the association/mapping between the ALs of the search spaces in the CORESET and the MAC CE commands for beam indication. For instance, the search space corresponding to the lowest AL could correspond to the first (or the last) MAC CE command for beam indication in the list/set/pool of N>1 MAC CE commands for beam indication and/or the MAC CE command for beam indication indicating the lowest (or the highest) entity ID/index value and/or the MAC CE command for beam indication indicating the TCI state with the lowest (or the highest) TCI state ID value, the search space corresponding to the second lowest AL could correspond to the second (or the second last) MAC CE command for beam indication in the list/set/pool of N>1 MAC CE commands for beam indication and/or the MAC CE command for beam indication indicating the second lowest (or the second highest) entity ID/index value and/or the MAC CE command for beam indication indicating the TCI state with the second lowest (or the second highest) TCI state ID value, and so on, and the search space corresponding to the highest AL could correspond to the last (or the first) MAC CE command for beam indication in the list/set/pool of N>1 MAC CE commands for beam indication and/or the MAC CE command for beam indication indicating the highest (or the lowest) entity ID/index value and/or the MAC CE command for beam indication indicating the TCI state with the highest (or the lowest) TCI state ID value.

Furthermore, each of the N>1 search spaces in the CORESET could correspond to the same DCI payload, and/or the N>1 search spaces in the CORESET could correspond to separate parts of the same DCI payload - e.g., the search space corresponding to the lowest AL corresponds to the first (or the last) part of the DCI, the search space corresponding to the second lowest AL corresponds to the second (or the second last) part of the DCI, and so on, and the search space corresponding to the highest AL corresponds to the last (or the first) part of the DCI.

Other exact association/mapping relationships between the N>1 search spaces configured in the CORESET and the N>1 MAC CE commands for beam indication (and therefore, the TCI states/beams indicated therein) and/or the corresponding indication method(s), e.g., via higher layer RRC signaling and/or MAC CE command and/or dynamic DCI signaling, are also possible.

For a list/set/pool of N>1 MAC CE commands for beam indication with each MAC CE command for beam indication indicating at least a TCI state/beam (a unique entity ID/index could be included/incorporated in each MAC CE command for beam indication), in another example, a MAC CE command for beam indication could include/comprise/incorporate at least an aggregation level value corresponding to a search space and/or at least a (relative) search space index/order among the N> 1 search spaces configured in the CORESET.

For a list/set/pool of N>1 MAC CE commands for beam indication with each MAC CE command for beam indication indicating at least a TCI state/beam (a unique entity ID/index could be included/incorporated in each MAC CE command for beam indication), in yet another example, a parameter configuring a search space in the CORESET could include/comprise/incorporate at least one (absolute) entity ID/index value of at least one MAC CE command for beam indication and/or at least one (relative) index of at least one MAC CE command for beam indication among the N>1 MAC CE commands for beam indication.

For a list/set/pool of N>1 MAC CE commands for beam indication with each MAC CE command for beam indication indicating at least a TCI state/beam (a unique entity ID/index could be included/incorporated in each MAC CE command for beam indication), in yet another example, the UE could be implicitly indicated by the network the association/mapping between the N>1 MAC CE commands for beam indication (and therefore, the TCI states/beams indicated therein) and the N>1 search spaces configured in the CORESET. For example, a MAC CE command for beam indication could be associated with/mapped to a search space in the CORESET if the MAC CE command for beam indication and the search space configured in the CORESET are associated with the same TRP-specific ID value such as PCI value and/or TRP-specific higher layer signaling index value. Other implicit indication methods of the association/mapping between the N>1 MAC CE commands for beam indication (and therefore, the TCI states/beams indicated therein) and the N>1 search spaces configured in the CORESET are also possible.

For a list/set/pool of N>1 MAC CE commands for beam indication with each MAC CE command for beam indication indicating at least a TCI state/beam (a unique entity ID/index could be included/incorporated in each MAC CE command for beam indication), in yet another example, a MAC CE command for beam indication could be associated with/mapped to a search space configured in the CORESET if the MAC CE command for beam indication and the parameter configuring the search space in the CORESET include/comprise/incorporate the same ID/index value. For example, this ID/index value could be a (absolute) TRP-specific ID/index value such as PCI value, TRP ID value, TRP index value, TRP-specific higher layer signaling index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps.

In the CORESET, N1>1 search spaces each having at least one PDCCH candidate could be configured to convey the PDCCHs/DCIs (i.e., PDCCH repetitions) transmitted from different TRPs. Denote the total number of PDCCH candidates by N2. Both the N1>1 search spaces and the N2>1 PDCCH candidates configured therein could be associated with the TCI state(s)/beam(s) indicated in the MAC CE command(s) for beam indication. Furthermore, the N1>1 search spaces each having at least one PDCCH candidate, and therefore, the corresponding N2>1 PDCCH candidates for repetition configured therein, could be linked/associated via a higher layer RRC signaling/parameter, denoted by, e.g., SearchSpaceLinking.

For N>1 TCI states/beams indication in a single MAC CE command for beam indication, in one example, the UE could be indicated by the network, e.g., via higher layer RRC signaling and/or MAC CE command and/or dynamic DCI signaling, (1) the exact association/mapping between one or more search spaces configured in the CORESET and the TCI states/beams indicated in the MAC CE command for beam indication, and (2) the exact association/mapping between one or more PDCCH candidates configured in the one or more search spaces and the TCI states/beams indicated in the MAC CE command for beam indication.

For N>1 TCI states/beams indication in a single MAC CE command for beam indication, in another example, a TCI state, e.g., the higher layer parameter TCI-State, indicated in the MAC CE command for beam indication could include/comprise/incorporate (1) at least an aggregation level value corresponding to a search space and/or at least a (relative) search space index/order among the N1>1 search spaces configured in the CORESET, or (2) at least a CCE index corresponding to a PDCCH candidate and/or at least a (relative) PDCCH candidate index/order among the N2>1 PDCCH candidates configured in the N1>1 search spaces.

For N>1 TCI states/beams indication in a single MAC CE command for beam indication, in yet another example, a parameter configuring a search space in the CORESET could include/comprise/incorporate at least one (absolute) TCI state ID value and/or at least one (relative) TCI state index/order among the N>1 TCI states/beams indicated in the MAC CE command for beam indication, and a parameter configuring a PDCCH candidate in a search space could include/comprise/incorporate at least one (absolute) TCI state ID value and/or at least one (relative) TCI state index/order among the N>1 TCI states/beams indicated in the MAC CE command for beam indication.

For N>1 TCI states/beams indication in a single MAC CE command for beam indication, in yet another example, the UE could be implicitly indicated by the network (1) the association/mapping between one or more of the N>1 TCI states/beams indicated in the MAC CE command for beam indication and the N1>1 search spaces configured in the CORESET, and (2) the association/mapping between one or more of the N>1 TCI states/beams indicated in the MAC CE command for beam indication and the N2>1 PDCCH candidates configured in the N1>1 search spaces.

For example, a TCI state/beam indicated in the MAC CE command for beam indication could be associated with/mapped to a search space if the TCI state/beam indicated in the MAC CE command for beam indication and the search space configured in the CORESET are associated with the same TRP-specific ID value such as PCI value and/or TRP-specific higher layer signaling index value, and a TCI state/beam indicated in the MAC CE command for beam indication could be associated with/mapped to a PDCCH candidate if the TCI state/beam indicated in the MAC CE command for beam indication and the PDCCH candidate configured in a search space are associated with the same TRP-specific ID value such as PCI value and/or TRP-specific higher layer signaling index value.

Other implicit indication methods of (1) the association/mapping between one or more of the N>1 TCI states/beams indicated in the MAC CE command for beam indication and the N1>1 search spaces configured in the CORESET, and (2) the association/mapping between one or more of the N>1 TCI states/beams indicated in the MAC CE command for beam indication and the N2>1 PDCCH candidates configured in the N1>1 search spaces are also possible.

For N>1 TCI states/beams indication in a single MAC CE command for beam indication, in yet another example, a TCI state/beam indicated in the MAC CE command for beam indication could be associated with/mapped to a search space configured in the CORESET or a PDCCH candidate configured in a search space if the TCI state/beam indicated in the MAC CE command for beam indication and the parameter configuring the search space in the CORESET or the PDCCH candidate in a search space include/comprise/incorporate the same ID/index value. For example, this ID/index value could be a (absolute) TRP-specific ID/index value such as PCI value, TRP ID value, TRP index value, TRP-specific higher layer signaling index value and etc., based on a list/set/pool of TRP-specific ID/index values, e.g., higher layer configured to the UE and/or higher layer configured to the UE and activated by one or more MAC CE activation commands/bitmaps.

For another example, this ID/index value could be an (relative) index within the list/set/pool of TRP-specific ID/index values, e.g., higher layer configured to the UE and/or higher layer configured to the UE and activated by one or more MAC CE activation commands/bitmaps.

For a list/set/pool of N>1 MAC CE commands for beam indication with each MAC CE command for beam indication indicating at least a TCI state/beam (a unique entity ID/index could be included/incorporated in each MAC CE command for beam indication), in one example, the UE could be indicated by the network, e.g., via higher layer RRC signaling and/or MAC CE command and/or dynamic DCI signaling, (1) the exact association/mapping between one or more search spaces configured in the CORESET and the MAC CE commands for beam indication, and (2) the exact association/mapping between one or more PDCCH candidates configured in the one or more search spaces and the MAC CE commands for beam indication.

For a list/set/pool of N>1 MAC CE commands for beam indication with each MAC CE command for beam indication indicating at least a TCI state/beam (a unique entity ID/index could be included/incorporated in each MAC CE command for beam indication), in another example, a MAC CE command for beam indication could include/comprise/incorporate (1) at least an aggregation level value corresponding to a search space and/or at least a (relative) search space index/order among the N1>1 search spaces configured in the CORESET, or (2) at least a CCE index corresponding to a PDCCH candidate and/or at least a (relative) PDCCH candidate index/order among the N2>1 PDCCH candidates configured in the N1>1 search spaces.

For a list/set/pool of N>1 MAC CE commands for beam indication with each MAC CE command for beam indication indicating at least a TCI state/beam (a unique entity ID/index could be included/incorporated in each MAC CE command for beam indication), in yet another example, a parameter configuring a search space in the CORESET could include/comprise/incorporate at least one (absolute) entity ID/index value of at least one MAC CE command for beam indication and/or at least one (relative) index of at least one MAC CE command for beam indication among the N>1 MAC CE commands for beam indication, and a parameter configuring a PDCCH candidate in a search space could include/comprise/incorporate at least one (absolute) entity ID/index value of at least one MAC CE command for beam indication and/or at least one (relative) index of at least one MAC CE command for beam indication among the N>1 MAC CE commands for beam indication.

For a list/set/pool of N>1 MAC CE commands for beam indication with each MAC CE command for beam indication indicating at least a TCI state/beam (a unique entity ID/index could be included/incorporated in each MAC CE command for beam indication), in yet another example, the UE could be implicitly indicated by the network (1) the association/mapping between one or more of the N>1 MAC CE commands for beam indication and the N1>1 search spaces configured in the CORESET, and (2) the association/mapping between one or more of the N>1 MAC CE commands for beam indication and the N2>1 PDCCH candidates configured in the N1>1 search spaces.

For example, a MAC CE command for beam indication could be associated with/mapped to a search space if the MAC CE command for beam indication and the search space configured in the CORESET are associated with the same TRP-specific ID value such as PCI value and/or TRP-specific higher layer signaling index value, and a MAC CE command for beam indication could be associated with/mapped to a PDCCH candidate if the MAC CE command for beam indication and the PDCCH candidate configured in a search space are associated with the same TRP-specific ID value such as PCI value and/or TRP-specific higher layer signaling index value. Other implicit indication methods of (1) the association/mapping between one or more of the N>1 MAC CE commands for beam indication and the N1>1 search spaces configured in the CORESET, and (2) the association/mapping between one or more of the N>1 MAC CE commands for beam indication and the N2>1 PDCCH candidates configured in the N1>1 search spaces are also possible.

For a list/set/pool of N>1 MAC CE commands for beam indication with each MAC CE command for beam indication indicating at least a TCI state/beam (a unique entity ID/index could be included/incorporated in each MAC CE command for beam indication), in yet another example, a MAC CE command for beam indication could be associated with/mapped to a search space configured in the CORESET or a PDCCH candidate configured in a search space if the MAC CE command for beam indication and the parameter configuring the search space in the CORESET or the PDCCH candidate in a search space include/comprise/incorporate the same ID/index value. For example, this ID/index value could be a (absolute) TRP-specific ID/index value such as PCI value, TRP ID value, TRP index value, TRP-specific higher layer signaling index value and etc., based on a list/set/pool of TRP-specific ID/index values, e.g., higher layer configured to the UE and/or higher layer configured to the UE and activated by one or more MAC CE activation commands/bitmaps.

For another example, this ID/index value could be an (relative) index within the list/set/pool of TRP-specific ID/index values, e.g., higher layer configured to the UE and/or higher layer configured to the UE and activated by one or more MAC CE activation commands/bitmaps.

The example of DCI based TCI state/beam indication for the multi-TRP operation is presented in FIGURE 10, wherein the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more DCIs to indicate one or more beam(s) (i.e., the TCI state(s)) for the transmission/reception of the PDCCH(s)/DCI(s) transmitted from/associated with one or more TRPs in a multi-TRP system on the same time-frequency domain resource(s).

For instance, the UE could receive from the network a single DCI for beam indication to indicate N>1 TCI states/beams for the same DCI payload repeatedly transmitted from/associated with different TRPs in the multi-TRP system via the same CORESET. As depicted in FIGURE 10 and FIGURE 12, the UE could receive from the network a single DCI for beam indication to indicate N=2 TCI states/beams (TCI #3 and TCI #5) for PDCCH-1/DCI-1 transmitted from/associated with TRP-1 and PDCCH-2/DCI-2 transmitted from/associated with TRP-2, in the multi-TRP system, respectively, via the same CORESET. Recall that DCI-1 and DCI-2 could correspond to the same DCI payload denoted by DCI_A, or two separate parts of the same DCI payload DCI_A. In this disclosure, the same DCI payload could correspond to the DCI for beam indication and/or the CORESET could be configured for the DCI(s) for beam indication.

As described above, a DCI used to indicate to the UE a beam (i.e., a TCI state and/or a TCI state ID) for the transmission/reception of a PDCCH or a PDSCH could be at least one of the following.

In one example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment.

In another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant.

Yet in another example, a custom/purpose designed DCI format could be used to indicate to the UE a beam (i.e., a TCI state and/or a TCI state ID) for the transmission/reception of a PDCCH or a PDSCH.

Furthermore, the TCI state indicated in the DCI for beam indication could be at least one of: (1) a DL TCI state; (2) an UL TCI state; (3) a joint DL and UL TCI state; and (4) separate DL TCI state and UL TCI state.

As discussed above, a single search space containing N>1 PDCCH candidates could be configured in the CORESET to convey the PDCCHs/DCIs (i.e., PDCCH repetitions) transmitted from different TRPs. The association/mapping between the TCI state(s)/beam(s) indicated in the DCI(s) for beam indication and the PDCCH candidates configured in the search space needs to be specified. There could be various means to associate/map the TCI state(s)/beam(s) indicated in the DCI (s) for beam indication and the PDCCH candidates configured in the search space.

For N>1 TCI states/beams indication in a single DCI for beam indication, in one example, the UE could be indicated by the network, e.g., via higher layer RRC signaling and/or MAC CE command and/or dynamic DCI signaling, the exact association/mapping between one or more PDCCH candidates in the search space and the TCI states/beams indicated in the DCI for beam indication.

For example, the UE could be indicated by the network the association/mapping between the indices of the PDCCH candidates within/among the N>1 PDCCH candidates in the search space and the TCI states/beams indicated in the DCI for beam indication. For instance the first PDCCH candidate in the search space could correspond to the first (or the last) TCI state and/or the TCI state with the lowest (or the highest) TCI state ID value indicated in the DCI for beam indication, the second PDCCH candidate in the search space could correspond to the second (or the second last) TCI state and/or the TCI state with the second lowest (or the second highest) TCI state ID value indicated in the DCI for beam indication, and so on, and the last (N-th) PDCCH candidate in the search space could correspond to the last (or the first) TCI state and/or the TCI state with the highest (or the lowest) TCI state ID value indicated in the DCI for beam indication. The order(s) of the PDCCH candidates in the search space could be pre-configured and known to both the network and the UE sides a priori.

Alternatively, the UE could be indicated by the network the order(s) of the PDCCH candidates in the search space; this indication could be via higher layer (RRC) or/and MAC CE or/and DCI based signaling or/and any combination of at least two of RRC, MAC CE and DCI based signaling; this indication could be via a separate (dedicated) parameter or joint with another parameter. Furthermore, each of the N>1 PDCCH candidates in the search space could correspond to the same DCI payload, and/or the N>1 PDCCH candidates in the search space could correspond to separate parts of the same DCI payload - e.g., the first PDCCH candidate in the search space corresponds to the first (or the last) part of the DCI, the second PDCCH candidate in the search space corresponds to the second (or the second last) part of the DCI, and so on, and the last (N-th) PDCCH candidate in the search space corresponds to the last (or the first) part of the DCI.

For another example, the UE could be indicated by the network the association/mapping between the CCE indices of the PDCCH candidates in the search space and the TCI states/beams indicated in the DCI for beam indication. For instance, the PDCCH candidate corresponding to the lowest CCE index in the search space could correspond to the first (or the last) TCI state and/or the TCI state with the lowest (or the highest) TCI state ID value indicated in the DCI for beam indication, the PDCCH candidate corresponding to the second lowest CCE index in the search space could correspond to the second (or the second last) TCI state and/or the TCI state with the second lowest (or the second highest) TCI state ID value indicated in the DCI for beam indication, and so on, and the PDCCH candidate corresponding to the highest CCE index in the search space could correspond to the last (or the first) TCI state and/or the TCI state with the highest (or the lowest) TCI state ID value indicated in the DCI for beam indication.

Furthermore, each of the N>1 PDCCH candidates in the search space could correspond to the same DCI payload, and/or the N>1 PDCCH candidates in the search space could correspond to separate parts of the same DCI payload - e.g., the PDCCH candidate corresponding to the lowest CCE index in the search space corresponds to the first (or the last) part of the DCI, the PDCCH candidate corresponding to the second lowest CCE index in the search space corresponds to the second (or the second last) part of the DCI, and so on, and the PDCCH candidate corresponding to the highest CCE index in the search space corresponds to the last (or the first) part of the DCI.

Other exact association/mapping relationships between the N>1 PDCCH candidates configured in the search space and the TCI states/beams indicated in the DCI for beam indication and/or the corresponding indication method(s), e.g., via higher layer RRC signaling and/or MAC CE command and/or dynamic DCI signaling, are also possible.

For N>1 TCI states/beams indication in a single DCI for beam indication, in another example, a TCI state, e.g., the higher layer parameter TCI-State, indicated in the DCI for beam indication could include/comprise/incorporate at least a CCE index corresponding to a PDCCH candidate in the search space and/or at least a (relative) PDCCH candidate index/order among the N>1 PDCCH candidates configured in the search space.

For N>1 TCI states/beams indication in a single DCI for beam indication, in yet another example, a parameter configuring a PDCCH candidate in the search space could include/comprise/incorporate at least one (absolute) TCI state ID value and/or at least one (relative) TCI state index/order among the N>1 TCI states/beams indicated in the DCI for beam indication.

For N>1 TCI states/beams indication in a single DCI for beam indication, in yet another example, the UE could be implicitly indicated by the network the association/mapping between the N>1 TCI states/beams indicated in the DCI for beam indication and the N>1 PDCCH candidates configured in the search space. For example, a TCI state/beam indicated in the DCI for beam indication could be associated with/mapped to a PDCCH candidate in the search space if the TCI state/beam indicated in the DCI for beam indication and the PDCCH candidate configured in the search space are associated with the same TRP-specific ID value such as PCI value and/or TRP-specific higher layer signaling index value. Other implicit indication methods of the association/mapping between the N>1 TCI states/beams indicated in the DCI for beam indication and the N>1 PDCCH candidates in the search space are also possible.

For N>1 TCI states/beams indication in a single DCI for beam indication, in yet another example, a TCI state/beam indicated in the DCI for beam indication could be associated with/mapped to a PDCCH candidate configured in the search space if the TCI state/beam indicated in the DCI for beam indication and the parameter configuring the PDCCH candidate in the search space include/comprise/incorporate the same ID/index value. For example, this ID/index value could be a (absolute) TRP-specific ID/index value such as PCI value, TRP ID value, TRP index value, TRP-specific higher layer signaling index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps.

For N>1 DCIs for beam indication with each DCI for beam indication indicating at least one TCI state/beam, in one example, the UE could be indicated by the network, e.g., via higher layer RRC signaling and/or MAC CE command and/or dynamic DCI signaling, the exact association/mapping between one or more PDCCH candidates in the search space and the N>1 DCIs for beam indication (and therefore, the TCI states/beams indicated therein).

For example, the UE could be indicated by the network the association/mapping between the indices of the PDCCH candidates within/among the N>1 PDCCH candidates in the search space and the DCIs for beam indication. For instance, the first PDCCH candidate in the search space could correspond to the first (or the last) DCI for beam indication within the N>1 DCIs for beam indication and/or the DCI for beam indication associated with the lowest (or the highest) CORESET ID value/CORESET subset ID value/CORESETPoolIndex value and/or the DCI for beam indication indicating the TCI state with the lowest (or the highest) TCI state ID value, the second PDCCH candidate in the search space could correspond to the second (or the second last) DCI for beam indication within the N>1 DCIs for beam indication and/or the DCI for beam indication associated with the second lowest (or the second highest) CORESET ID value/CORESET subset ID value/CORESETPoolIndex value and/or the DCI for beam indication indicating the TCI state with the second lowest (or the second highest) TCI state ID value, and so on, and the last (N-th) PDCCH candidate in the search space could correspond to the last (or the first) DCI for beam indication within the N>1 DCIs for beam indication and/or the DCI for beam indication associated with the highest (or the lowest) CORESET ID value/CORESET subset ID value/CORESETPoolIndex value and/or the DCI for beam indication indicating the TCI state with the highest (or the lowest) TCI state ID value. The order(s) of the PDCCH candidates in the search space could be pre-configured and known to both the network and the UE sides a priori.

Alternatively, the UE could be indicated by the network the order(s) of the PDCCH candidates in the search space; this indication could be via higher layer (RRC) or/and MAC CE or/and DCI based signaling or/and any combination of at least two of RRC, MAC CE and DCI based signaling; this indication could be via a separate (dedicated) parameter or joint with another parameter. Furthermore, each of the N>1 PDCCH candidates in the search space could correspond to the same DCI payload, and/or the N>1 PDCCH candidates in the search space could correspond to separate parts of the same DCI payload - e.g., the first PDCCH candidate in the search space corresponds to the first (or the last) part of the DCI, the second PDCCH candidate in the search space corresponds to the second (or the second last) part of the DCI, and so on, and the last (N-th) PDCCH candidate in the search space corresponds to the last (or the first) part of the DCI.

For another example, the UE could be indicated by the network the association/mapping between the CCE indices of the PDCCH candidates in the search space and the DCIs for beam indication. For instance, the PDCCH candidate corresponding to the lowest CCE index in the search space could correspond to the first (or the last) DCI for beam indication within the N>1 DCIs for beam indication and/or the DCI for beam indication associated with the lowest (or the highest) CORESET ID value/CORESET subset ID value/CORESETPoolIndex value and/or the DCI for beam indication indicating the TCI state with the lowest (or the highest) TCI state ID value, the PDCCH candidate corresponding to the second lowest CCE index in the search space could correspond to the second (or the second last) DCI for beam indication within the N>1 DCIs for beam indication and/or the DCI for beam indication associated with the second lowest (or the second highest) CORESET ID value/CORESET subset ID value/CORESETPoolIndex value and/or the DCI for beam indication indicating the TCI state with the second lowest (or the second highest) TCI state ID value, and so on, and the PDCCH candidate corresponding to the highest CCE index in the search space could correspond to the last (or the first) DCI for beam indication within the N>1 DCIs for beam indication and/or the DCI for beam indication associated with the highest (or the lowest) CORESET ID value/CORESET subset ID value/CORESETPoolIndex value and/or the DCI for beam indication indicating the TCI state with the highest (or the lowest) TCI state ID value.

Furthermore, each of the N>1 PDCCH candidates in the search space could correspond to the same DCI payload, and/or the N>1 PDCCH candidates in the search space could correspond to separate parts of the same DCI payload - e.g., the PDCCH candidate corresponding to the lowest CCE index in the search space corresponds to the first (or the last) part of the DCI, the PDCCH candidate corresponding to the second lowest CCE index in the search space corresponds to the second (or the second last) part of the DCI, and so on, and the PDCCH candidate corresponding to the highest CCE index in the search space corresponds to the last (or the first) part of the DCI.

Other exact association/mapping relationships between the N>1 PDCCH candidates configured in the search space and the N>1 DCIs for beam indication (and therefore, the TCI states/beams indicated therein) and/or the corresponding indication method(s), e.g., via higher layer RRC signaling and/or MAC CE command and/or dynamic DCI signaling, are also possible.

For N>1 DCIs for beam indication with each DCI for beam indication indicating at least one TCI state/beam, in another example, a DCI for beam indication could include/comprise/incorporate at least a CCE index corresponding to a PDCCH candidate in the search space and/or at least a (relative) PDCCH candidate index/order among the N>1 PDCCH candidates configured in the search space.

For N>1 DCIs for beam indication with each DCI for beam indication indicating at least one TCI state/beam, in yet another example, a parameter configuring a PDCCH candidate in the search space could include/comprise/incorporate at least one CORESET ID value/CORESET subset ID value/CORESETPoolIndex value associated with at least one DCI for beam indication and/or at least one (relative) index of at least one DCI for beam indication among the N>1 DCIs for beam indication.

For N>1 DCIs for beam indication with each DCI for beam indication indicating at least one TCI state/beam, in yet another example, the UE could be implicitly indicated by the network the association/mapping between the N>1 DCIs for beam indication (and therefore, the TCI states/beams indicated therein) and the N>1 PDCCH candidates configured in the search space. For example, a DCI for beam indication could be associated with/mapped to a PDCCH candidate in the search space if the DCI for beam indication and the PDCCH candidate configured in the search space are associated with the same TRP-specific ID value such as PCI value and/or TRP-specific higher layer signaling index value. Other implicit indication methods of the association/mapping between the N>1 DCIs for beam indication (and therefore, the TCI states/beams indicated therein) and the N>1 PDCCH candidates in the search space are also possible.

For N>1 DCIs for beam indication with each DCI for beam indication indicating at least one TCI state/beam, in yet another example, a DCI for beam indication could be associated with/mapped to a PDCCH candidate configured in the search space if the DCI for beam indication and the parameter configuring the PDCCH candidate in the search space include/comprise/incorporate the same ID/index value. For example, this ID/index value could be a (absolute) TRP-specific ID/index value such as PCI value, TRP ID value, TRP index value, TRP-specific higher layer signaling index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. Yet for another example, this ID/index value could be a CORESET ID value/CORESET subset ID value/CORESETPoolIndex value.

As discussed above, N>1 search spaces each configuring at least one PDCCH candidate could be configured in the CORESET to convey the PDCCHs/DCIs (i.e., PDCCH repetitions) transmitted from different TRPs. The association/mapping between the TCI state(s)/beam(s) indicated in the DCI(s) for beam indication and the search spaces (higher layer linked/associated via SearchSpaceLinking) needs to be specified. There could be various means to associate/map the TCI state(s)/beam(s) indicated in the DCI(s) for beam indication and the search spaces (higher layer linked/associated via SearchSpaceLinking) configured in the CORESET.

For N>1 TCI states/beams indication in a single DCI for beam indication, in one example, the UE could be indicated by the network, e.g., via higher layer RRC signaling and/or MAC CE command and/or dynamic DCI signaling, the exact association/mapping between one or more search spaces configured in the CORESET and the TCI states/beams indicated in the DCI for beam indication.

For example, the UE could be indicated by the network the association/mapping between the indices of the search spaces within/among the N>1 search spaces in the CORESET, and the TCI states/beams indicated in the DCI for beam indication. For instance, the first search space could correspond to the first (or the last) TCI state and/or the TCI state with the lowest (or the highest) TCI state ID value indicated in the DCI for beam indication, the second search space could correspond to the second (or the second last) TCI state and/or the TCI state with the second lowest (or the second highest) TCI state ID value indicated in the DCI for beam indication, and so on, and the last (N-th) search space could correspond to the last (or the first) TCI state and/or the TCI state with the highest (or the lowest) TCI state ID value indicated in the DCI for beam indication. The order(s) of the search spaces configured in the CORESET could be pre-configured and known to both the network and the UE sides a priori.

Alternatively, the UE could be indicated by the network the order(s) of the search spaces in the CORESET; this indication could be via higher layer (RRC) or/and MAC CE or/and DCI based signaling or/and any combination of at least two of RRC, MAC CE and DCI based signaling; this indication could be via a separate (dedicated) parameter or joint with another parameter. Furthermore, each of the N>1 search spaces could correspond to the same DCI payload, and/or the N>1 search spaces could correspond to separate parts of the same DCI payload - e.g., the first search space corresponds to the first (or the last) part of the DCI, the second search space corresponds to the second (or the second last) part of the DCI, and so on, and the last (N-th) search space corresponds to the last (or the first) part of the DCI.

For another example, the UE could be indicated by the network the association/mapping between the ALs of the search spaces in the CORESET and the TCI states/beams indicated in the DCI for beam indication. For instance, the search space corresponding to the lowest AL could correspond to the first (or the last) TCI state and/or the TCI state with the lowest (or the highest) TCI state ID value indicated in the DCI for beam indication, the search space corresponding to the second lowest AL could correspond to the second (or the second last) TCI state and/or the TCI state with the second lowest (or the second highest) TCI state ID value indicated in the DCI for beam indication, and so on, and the search space corresponding to the highest AL could correspond to the last (or the first) TCI state and/or the TCI state with the highest (or the lowest) TCI state ID value indicated in the DCI for beam indication.

Furthermore, each of the N>1 search spaces in the CORESET could correspond to the same DCI payload, and/or the N>1 search spaces in the CORESET could correspond to separate parts of the same DCI payload - e.g., the search space corresponding to the lowest AL corresponds to the first (or the last) part of the DCI, the search space corresponding to the second lowest AL corresponds to the second (or the second last) part of the DCI, and so on, and the search space corresponding to the highest AL corresponds to the last (or the first) part of the DCI.

Other exact association/mapping relationships between the N>1 search spaces configured in the CORESET and the TCI states/beams indicated in the DCI for beam indication and/or the corresponding indication method(s), e.g., via higher layer RRC signaling and/or MAC CE command and/or dynamic DCI signaling, are also possible.

For N>1 TCI states/beams indication in a single DCI for beam indication, in another example, a TCI state, e.g., the higher layer parameter TCI-State, indicated in the DCI for beam indication could include/comprise/incorporate at least an aggregation level value corresponding to a search space and/or at least a (relative) search space index/order among the N>1 search spaces configured in the CORESET.

For N>1 TCI states/beams indication in a single DCI for beam indication, in yet another example, a parameter configuring a search space in the CORESET could include/comprise/incorporate at least one (absolute) TCI state ID value and/or at least one (relative) TCI state index/order among the N>1 TCI states/beams indicated in the DCI for beam indication.

For N>1 TCI states/beams indication in a single DCI for beam indication, in yet another example, the UE could be implicitly indicated by the network the association/mapping between the N>1 TCI states/beams indicated in the DCI for beam indication and the N>1 search spaces configured in the CORESET. For example, a TCI state/beam indicated in the DCI for beam indication could be associated with/mapped to a search space if the TCI state/beam indicated in the DCI for beam indication and the search space configured in the CORESET are associated with the same TRP-specific ID value such as PCI value and/or TRP-specific higher layer signaling index value. Other implicit indication methods of the association/mapping between the N>1 TCI states/beams indicated in the DCI for beam indication and the N>1 search spaces configured in the CORESET are also possible.

For N>1 TCI states/beams indication in a single DCI for beam indication, in yet another example, a TCI state/beam indicated in the DCI for beam indication could be associated with/mapped to a search space configured in the CORESET if the TCI state/beam indicated in the DCI for beam indication and the parameter configuring the search space in the CORESET include/comprise/incorporate the same ID/index value. For example, this ID/index value could be a (absolute) TRP-specific ID/index value such as PCI value, TRP ID value, TRP index value, TRP-specific higher layer signaling index value and etc., based on a list/set/pool of TRP-specific ID/index values, e.g., higher layer configured to the UE and/or higher layer configured to the UE and activated by one or more MAC CE activation commands/bitmaps.

For another example, this ID/index value could be an (relative) index within the list/set/pool of TRP-specific ID/index values, e.g., higher layer configured to the UE and/or higher layer configured to the UE and activated by one or more MAC CE activation commands/bitmaps.

For N>1 DCIs for beam indication with each DCI for beam indication indicating at least one TCI state/beam, in one example, the UE could be indicated by the network, e.g., via higher layer RRC signaling and/or MAC CE command and/or dynamic DCI signaling, the exact association/mapping between one or more search spaces in the CORESET and the N>1 DCIs for beam indication (and therefore, the TCI states/beams indicated therein).

For example, the UE could be indicated by the network the association/mapping between the indices of the search spaces within/among the N>1 search spaces in the CORESET and the DCIs for beam indication. For instance, the first search space could correspond to the first (or the last) DCI for beam indication within the N>1 DCIs for beam indication and/or the DCI for beam indication associated with the lowest (or the highest) CORESET ID value/CORESET subset ID value/CORESETPoolIndex value and/or the DCI for beam indication indicating the TCI state with the lowest (or the highest) TCI state ID value, the second search space could correspond to the second (or the second last) DCI for beam indication within the N>1 DCIs for beam indication and/or the DCI for beam indication associated with the second lowest (or the second highest) CORESET ID value/CORESET subset ID value/CORESETPoolIndex value and/or the DCI for beam indication indicating the TCI state with the second lowest (or the second highest) TCI state ID value, and so on, and the last (N-th) search space could correspond to the last (or the first) DCI for beam indication within the N>1 DCIs for beam indication and/or the DCI for beam indication associated with the highest (or the lowest) CORESET ID value/CORESET subset ID value/CORESETPoolIndex value and/or the DCI for beam indication indicating the TCI state with the highest (or the lowest) TCI state ID value. The order(s) of the search spaces in the CORESET could be pre-configured and known to both the network and the UE sides a priori.

Alternatively, the UE could be indicated by the network the order(s) of the search spaces in the CORESET; this indication could be via higher layer (RRC) or/and MAC CE or/and DCI based signaling or/and any combination of at least two of RRC, MAC CE and DCI based signaling; this indication could be via a separate (dedicated) parameter or joint with another parameter.

Furthermore, each of the N>1 search spaces in the CORESET could correspond to the same DCI payload, and/or the N>1 search spaces in the CORESET could correspond to separate parts of the same DCI payload - e.g., the first search space corresponds to the first (or the last) part of the DCI, the second search space corresponds to the second (or the second last) part of the DCI, and so on, and the last (N-th) search space corresponds to the last (or the first) part of the DCI.

For another example, the UE could be indicated by the network the association/mapping between the ALs of the search spaces in the CORESET and the DCIs for beam indication. For instance, the search space corresponding to the lowest AL could correspond to the first (or the last) DCI for beam indication within the N>1 DCIs for beam indication and/or the DCI for beam indication associated with the lowest (or the highest) CORESET ID value/CORESET subset ID value/CORESETPoolIndex value and/or the DCI for beam indication indicating the TCI state with the lowest (or the highest) TCI state ID value, the search space corresponding to the second lowest AL could correspond to the second (or the second last) DCI for beam indication within the N>1 DCIs for beam indication and/or the DCI for beam indication associated with the second lowest (or the second highest) CORESET ID value/CORESET subset ID value/CORESETPoolIndex value and/or the DCI for beam indication indicating the TCI state with the second lowest (or the second highest) TCI state ID value, and so on, and the search space corresponding to the highest AL could correspond to the last (or the first) DCI for beam indication within the N>1 DCIs for beam indication and/or the DCI for beam indication associated with the highest (or the lowest) CORESET ID value/CORESET subset ID value/CORESETPoolIndex value and/or the DCI for beam indication indicating the TCI state with the highest (or the lowest) TCI state ID value.

Furthermore, each of the N>1 search spaces in the CORESET could correspond to the same DCI payload, and/or the N>1 search spaces in the CORESET could correspond to separate parts of the same DCI payload - e.g., the search space corresponding to the lowest AL corresponds to the first (or the last) part of the DCI, the search space corresponding to the second lowest AL corresponds to the second (or the second last) part of the DCI, and so on, and the search space corresponding to the highest AL corresponds to the last (or the first) part of the DCI.

Other exact association/mapping relationships between the N>1 search spaces configured in the CORESET and the N>1 DCIs for beam indication (and therefore, the TCI states/beams indicated therein) and/or the corresponding indication method(s), e.g., via higher layer RRC signaling and/or MAC CE command and/or dynamic DCI signaling, are also possible.

For N>1 DCIs for beam indication with each DCI for beam indication indicating at least one TCI state/beam, in another example, a DCI for beam indication could include/comprise/incorporate at least an aggregation level value corresponding to a search space and/or at least a (relative) search space index/order among the N>1 search spaces configured in the CORESET.

For N>1 DCIs for beam indication with each DCI for beam indication indicating at least one TCI state/beam, in yet another example, a parameter configuring a search space in the CORESET could include/comprise/incorporate at least one CORESET ID value/CORESET subset ID value/CORESETPoolIndex value associated with at least one DCI for beam indication and/or at least one (relative) index of at least one DCI for beam indication among the N>1 DCIs for beam indication.

For N>1 DCIs for beam indication with each DCI for beam indication indicating at least one TCI state/beam, in yet another example, the UE could be implicitly indicated by the network the association/mapping between the N>1 DCIs for beam indication (and therefore, the TCI states/beams indicated therein) and the N>1 search spaces configured in the CORESET. For example, a DCI for beam indication could be associated with/mapped to a search space in the CORESET if the DCI for beam indication and the search space configured in the CORESET are associated with the same TRP-specific ID value such as PCI value and/or TRP-specific higher layer signaling index value. Other implicit indication methods of the association/mapping between the N>1 DCIs for beam indication (and therefore, the TCI states/beams indicated therein) and the N>1 search spaces configured in the CORESET are also possible.

For N>1 DCIs for beam indication with each DCI for beam indication indicating at least one TCI state/beam, in yet another example, a DCI for beam indication could be associated with/mapped to a search space configured in the CORESET if the DCI for beam indication and the parameter configuring the search space in the CORESET include/comprise/incorporate the same ID/index value. For example, this ID/index value could be a (absolute) TRP-specific ID/index value such as PCI value, TRP ID value, TRP index value, TRP-specific higher layer signaling index value and etc., based on a list/set/pool of TRP-specific ID/index values, e.g., higher layer configured to the UE and/or higher layer configured to the UE and activated by one or more MAC CE activation commands/bitmaps.

For another example, this ID/index value could be an (relative) index within the list/set/pool of TRP-specific ID/index values, e.g., higher layer configured to the UE and/or higher layer configured to the UE and activated by one or more MAC CE activation commands/bitmaps. Yet for another example, this ID/index value could be a CORESET ID value/CORESET subset ID value/CORESETPoolIndex value.

In the CORESET, N1>1 search spaces each having at least one PDCCH candidate could be configured to convey the PDCCHs/DCIs (i.e., PDCCH repetitions) transmitted from different TRPs. Denote the total number of PDCCH candidates by N2. Both the N1>1 search spaces and the N2>1 PDCCH candidates configured therein could be associated with the TCI state(s)/beam(s) indicated in the DCI(s) for beam indication. Furthermore, the N1>1 search spaces each having at least one PDCCH candidate, and therefore, the corresponding N2>1 PDCCH candidates for repetition configured therein, could be linked/associated via a higher layer RRC signaling/parameter, denoted by, e.g., SearchSpaceLinking.

For N>1 TCI states/beams indication in a single DCI for beam indication, in one example, the UE could be indicated by the network, e.g., via higher layer RRC signaling and/or MAC CE command and/or dynamic DCI signaling, (1) the exact association/mapping between one or more search spaces configured in the CORESET and the TCI states/beams indicated in the DCI for beam indication, and (2) the exact association/mapping between one or more PDCCH candidates configured in the one or more search spaces and the TCI states/beams indicated in the DCI for beam indication.

For N>1 TCI states/beams indication in a single DCI for beam indication, in another example, a TCI state, e.g., the higher layer parameter TCI-State, indicated in the DCI for beam indication could include/comprise/incorporate (1) at least an aggregation level value corresponding to a search space and/or at least a (relative) search space index/order among the N1>1 search spaces configured in the CORESET, or (2) at least a CCE index corresponding to a PDCCH candidate and/or at least a (relative) PDCCH candidate index/order among the N2>1 PDCCH candidates configured in the N1>1 search spaces.

For N>1 TCI states/beams indication in a single DCI for beam indication, in yet another example, a parameter configuring a search space in the CORESET could include/comprise/incorporate at least one (absolute) TCI state ID value and/or at least one (relative) TCI state index/order among the N>1 TCI states/beams indicated in the DCI for beam indication, and a parameter configuring a PDCCH candidate in a search space could include/comprise/incorporate at least one (absolute) TCI state ID value and/or at least one (relative) TCI state index/order among the N>1 TCI states/beams indicated in the DCI for beam indication.

For N>1 TCI states/beams indication in a single DCI for beam indication, in yet another example, the UE could be implicitly indicated by the network (1) the association/mapping between one or more of the N>1 TCI states/beams indicated in the DCI for beam indication and the N1>1 search spaces configured in the CORESET, and (2) the association/mapping between one or more of the N>1 TCI states/beams indicated in the DCI for beam indication and the N2>1 PDCCH candidates configured in the N1>1 search spaces.

For example, a TCI state/beam indicated in the DCI for beam indication could be associated with/mapped to a search space if the TCI state/beam indicated in the DCI for beam indication and the search space configured in the CORESET are associated with the same TRP-specific ID value such as PCI value and/or TRP-specific higher layer signaling index value, and a TCI state/beam indicated in the DCI for beam indication could be associated with/mapped to a PDCCH candidate if the TCI state/beam indicated in the DCI for beam indication and the PDCCH candidate configured in a search space are associated with the same TRP-specific ID value such as PCI value and/or TRP-specific higher layer signaling index value.

Other implicit indication methods of (1) the association/mapping between one or more of the N>1 TCI states/beams indicated in the DCI for beam indication and the N1>1 search spaces configured in the CORESET, and (2) the association/mapping between one or more of the N>1 TCI states/beams indicated in the DCI for beam indication and the N2>1 PDCCH candidates configured in the N1>1 search spaces are also possible.

For N>1 TCI states/beams indication in a single DCI for beam indication, in yet another example, a TCI state/beam indicated in the DCI for beam indication could be associated with/mapped to a search space configured in the CORESET or a PDCCH candidate configured in a search space if the TCI state/beam indicated in the DCI for beam indication and the parameter configuring the search space in the CORESET or the PDCCH candidate in a search space include/comprise/incorporate the same ID/index value. For example, this ID/index value could be a (absolute) TRP-specific ID/index value such as PCI value, TRP ID value, TRP index value, TRP-specific higher layer signaling index value and etc., based on a list/set/pool of TRP-specific ID/index values, e.g., higher layer configured to the UE and/or higher layer configured to the UE and activated by one or more MAC CE activation commands/bitmaps.

For another example, this ID/index value could be an (relative) index within the list/set/pool of TRP-specific ID/index values, e.g., higher layer configured to the UE and/or higher layer configured to the UE and activated by one or more MAC CE activation commands/bitmaps.

For N>1 DCIs for beam indication with each DCI for beam indication indicating at least one TCI state/beam, in one example, the UE could be indicated by the network, e.g., via higher layer RRC signaling and/or MAC CE command and/or dynamic DCI signaling, (1) the exact association/mapping between one or more search spaces configured in the CORESET and the DCIs for beam indication, and (2) the exact association/mapping between one or more PDCCH candidates configured in the one or more search spaces and the DCIs for beam indication.

For N>1 DCIs for beam indication with each DCI for beam indication indicating at least one TCI state/beam, in another example, a DCI for beam indication could include/comprise/incorporate (1) at least an aggregation level value corresponding to a search space and/or at least a (relative) search space index/order among the N1>1 search spaces configured in the CORESET, or (2) at least a CCE index corresponding to a PDCCH candidate and/or at least a (relative) PDCCH candidate index/order among the N2>1 PDCCH candidates configured in the N1>1 search spaces.

For N>1 DCIs for beam indication with each DCI for beam indication indicating at least one TCI state/beam, in yet another example, a parameter configuring a search space in the CORESET could include/comprise/incorporate at least one CORESET ID value/CORESET subset ID value/CORESETPoolIndex value associated with at least one DCI for beam indication and/or at least one (relative) index of at least one DCI for beam indication among the N>1 DCIs for beam indication, and a parameter configuring a PDCCH candidate in a search space could include/comprise/incorporate at least one CORESET ID value/CORESET subset ID value/CORESETPoolIndex value associated with at least one DCI for beam indication and/or at least one (relative) index of at least one DCI for beam indication among the N>1 DCIs for beam indication.

For N>1 DCIs for beam indication with each DCI for beam indication indicating at least one TCI state/beam, in yet another example, the UE could be implicitly indicated by the network (1) the association/mapping between one or more of the N>1 DCIs for beam indication and the N1>1 search spaces configured in the CORESET, and (2) the association/mapping between one or more of the N>1 DCIs for beam indication and the N2>1 PDCCH candidates configured in the N1>1 search spaces. For example, a DCI for beam indication could be associated with/mapped to a search space if the DCI for beam indication and the search space configured in the CORESET are associated with the same TRP-specific ID value such as PCI value and/or TRP-specific higher layer signaling index value, and a DCI for beam indication could be associated with/mapped to a PDCCH candidate if the DCI for beam indication and the PDCCH candidate configured in a search space are associated with the same TRP-specific ID value such as PCI value and/or TRP-specific higher layer signaling index value. Other implicit indication methods of (1) the association/mapping between one or more of the N> 1 DCIs for beam indication and the N1>1 search spaces configured in the CORESET, and (2) the association/mapping between one or more of the N>1 DCIs for beam indication and the N2>1 PDCCH candidates configured in the N1>1 search spaces are also possible.

For N>1 DCIs for beam indication with each DCI for beam indication indicating at least one TCI state/beam, in yet another example, a DCI for beam indication could be associated with/mapped to a search space configured in the CORESET or a PDCCH candidate configured in a search space if the DCI for beam indication and the parameter configuring the search space in the CORESET or the PDCCH candidate in a search space include/comprise/incorporate the same ID/index value. For example, this ID/index value could be a (absolute) TRP-specific ID/index value such as PCI value, TRP ID value, TRP index value, TRP-specific higher layer signaling index value and etc., based on a list/set/pool of TRP-specific ID/index values, e.g., higher layer configured to the UE and/or higher layer configured to the UE and activated by one or more MAC CE activation commands/bitmaps.

For another example, this ID/index value could be an (relative) index within the list/set/pool of TRP-specific ID/index values, e.g., higher layer configured to the UE and/or higher layer configured to the UE and activated by one or more MAC CE activation commands/bitmaps. Yet for another example, this ID/index value could be a CORESET ID value/CORESET subset ID value/CORESETPoolIndex value.

The example of DCI based TCI state/beam indication (with MAC CE activated TCI states) for the multi-TRP operation is presented in FIGURE 11, wherein the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more MAC CE activation commands activating one or more TCI states from the higher layer configured list/pool of TCI states, e.g., up to eight TCI states could be activated by a MAC CE activation command. The UE could receive from the network one or more DCIs to indicate one or more beam(s) (i.e., the TCI state(s)) from the MAC CE activated TCI state(s)/beam(s) for the transmission/reception of the PDCCH(s)/DCI(s) transmitted from/associated with one or more TRPs in a multi-TRP system on the same time-frequency domain resource(s).

For instance, the UE could receive from the network a single DCI to indicate N'>1 TCI states/beams from the MAC CE activated TCI states/beams for the same DCI payload repeatedly transmitted from/associated with different TRPs in the multi-TRP system via the same CORESET.

As depicted in FIGURE 11 and FIGURE 12, the UE could receive from the network a single DCI to indicate N'2 TCI states/beams (TCI #3 and TCI #5) from the MAC CE activated TCI states/beams for PDCCH-1/DCI-1 transmitted from/associated with TRP-1 and PDCCH-2/DCI-2 transmitted from/associated with TRP-2, in the multi-TRP system, respectively, via the same CORESET. Recall that DCI-1 and DCI-2 could correspond to the same DCI payload denoted by DCI_A, or two separate parts of the same DCI payload DCI_A. In this disclosure, the same DCI payload could correspond to the DCI for beam indication and/or the CORESET could be configured for the DCI(s) for beam indication.

As described above, a DCI used to indicate to the UE a beam (i.e., a TCI state and/or a TCI state ID) for the transmission/reception of a PDCCH or a PDSCH could be at least one of the following.

In one example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment.

In another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant.

Yet in another example, a custom/purpose designed DCI format could be used to indicate to the UE a beam (i.e., a TCI state and/or a TCI state ID) for the transmission/reception of a PDCCH or a PDSCH.

Furthermore, the TCI state indicated in the DCI for beam indication could be at least one of: (1) a DL TCI state; (2) an UL TCI state; (3) a joint DL and UL TCI state; and (4) separate DL TCI state and UL TCI state.

As discussed above, a single search space containing N'>1 PDCCH candidates could be configured in the CORESET to convey the PDCCHs/DCIs (i.e., PDCCH repetitions) transmitted from different TRPs. The association/mapping between the TCI state(s)/beam(s) indicated in the DCI(s) for beam indication (selected from the MAC CE activated TCI state(s)/beam(s)) and the PDCCH candidates for repetition configured in the search space needs to be specified. There could be various means to associate/map the TCI state(s)/beam(s) indicated in the DCI(s) for beam indication (selected from the MAC CE activated TCI state(s)/beam(s)) and the PDCCH candidates for repetition configured in the search space.

For N'>1 TCI states/beams indication in a single DCI for beam indication, the association/mapping between the TCI states/beams indicated in the DCI for beam indication and the PDCCH candidates for repetition configured in the search space could follow those discussed in various examples herein. Here, the N>1 TCI states/beams indicated in the DCI for beam indication are selected from the MAC CE activated TCI states/beams, while in various examples herein, the N>1 TCI states/beams indicated in the DCI for beam indication are directly selected from the higher layer RRC configured list/pool of N_tci TCI states.

For N'>1 DCIs for beam indication with each DCI for beam indication indicating at least one TCI state/beam, the association/mapping between the DCIs for beam indication (and therefore, the TCI states/beams indicated therein) and the PDCCH candidates for repetition configured in the search space could follow those discussed in various examples herein. Here, the TCI states/beams indicated in the N'>1 DCIs for beam indication are selected from the MAC CE activated TCI states/beams, while in various examples herein, the TCI states/beams indicated in the N'>1 DCIs for beam indication are directly selected from the higher layer RRC configured list/pool of N_tci TCI states.

Furthermore, N'>1 search spaces each configuring at least one PDCCH candidate could be configured in the CORESET to convey the PDCCHs/DCIs (i.e., PDCCH repetitions) transmitted from different TRPs. The association/mapping between the TCI state(s)/beam(s) indicated in the DCI(s) for beam indication (selected from the MAC CE activated TCI state(s)/beam(s)) and the search spaces (higher layer linked/associated via SearchSpaceLinking) needs to be specified. There could be various means to associate/map the TCI state(s)/beam(s) indicated in the DCI(s) for beam indication (selected from the MAC CE activated TCI state(s)/beam(s)) and the search spaces (higher layer linked/associated via SearchSpaceLinking) configured in the CORESET.

For N'>1 TCI states/beams indication in a single DCI for beam indication, the association/mapping between the TCI states/beams indicated in the DCI for beam indication and the search spaces (higher layer linked/associated via SearchSpaceLinking) configured in the CORESET could follow those discussed in various examples herein. Here, the N'>1 TCI states/beams indicated in the DCI for beam indication are selected from the MAC CE activated TCI states/beams, while in various examples herein, the N>1 TCI states/beams indicated in the DCI for beam indication are directly selected from the higher layer RRC configured list/pool of N_tci TCI states.

For N'>1 DCIs for beam indication with each DCI for beam indication indicating at least one TCI state/beam, the association/mapping between the DCIs for beam indication (and therefore, the TCI states/beams indicated therein) and the search spaces (higher layer linked/associated via SearchSpaceLinking) configured in the CORESET could follow those discussed in various examples herein. Here, the TCI states/beams indicated in the N'>1 DCIs for beam indication are selected from the MAC CE activated TCI states/beams, while in various examples herein, the TCI states/beams indicated in the N'>1 DCIs for beam indication are directly selected from the higher layer RRC configured list/pool of N_tci TCI states.

In addition, in the CORESET, N1'>1 search spaces each having at least one PDCCH candidate could be configured to convey the PDCCHs/DCIs (i.e., PDCCH repetitions) transmitted from different TRPs. Denote the total number of PDCCH candidates by N2'. Both the N1'>1 search spaces and the N2'>1 PDCCH candidates configured therein could be associated with the TCI state(s)/beam(s) indicated in the DCI(s) for beam indication (selected from the MAC CE activated TCI state(s)/beam(s)). Furthermore, the N1'>1 search spaces each having at least one PDCCH candidate, and therefore, the corresponding N2'>1 PDCCH candidates for repetition configured therein, could be linked/associated via a higher layer RRC signaling/parameter, denoted by, e.g., SearchSpaceLinking.

For N'>1 TCI states/beams indication in a single DCI for beam indication, (1) the association/mapping between one or more of the N'>1 TCI states/beams indicated in the DCI for beam indication and the N1'>1 search spaces (higher layer linked/associated via SearchSpaceLinking) configured in the CORESET, and (2) the association/mapping between one or more of the N'>1 TCI states/beams indicated in the DCI for beam indication and the N2'>1 PDCCH candidates (higher layer linked/associated via SearchSpaceLinking) configured in the N1'>1 search spaces (higher layer linked/associated via SearchSpaceLinking) could follow those discussed in various examples herein. Here, the N'>1 TCI states/beams indicated in the DCI for beam indication are selected from the MAC CE activated TCI states/beams, while in various examples herein, the N>1 TCI states/beams indicated in the DCI for beam indication are directly selected from the higher layer RRC configured list/pool of N_tci TCI states.

For N'>1 DCIs for beam indication with each DCI for beam indication indicating at least one TCI state/beam, (1) the association/mapping between one or more of the N'>1 DCIs for beam indication (and therefore, the TCI states/beams indicated therein) and the N1'>1 search spaces (higher layer linked/associated via SearchSpaceLinking) configured in the CORESET, and (2) the association/mapping between one or more of the N'>1 DCIs for beam indication (and therefore, the TCI states/beams indicated therein) and the N2'>1 PDCCH candidates (higher layer linked/associated via SearchSpaceLinking) configured in the N1'>1 search spaces (higher layer linked/associated via SearchSpaceLinking) could follow those discussed in various examples herein. Here, the TCI states/beams indicated in the N'>1 DCIs for beam indication are selected from the MAC CE activated TCI states/beams, while in various examples herein, the TCI states/beams indicated in the N'>1 DCIs for beam indication are directly selected from the higher layer RRC configured list/pool of N_tci TCI states.

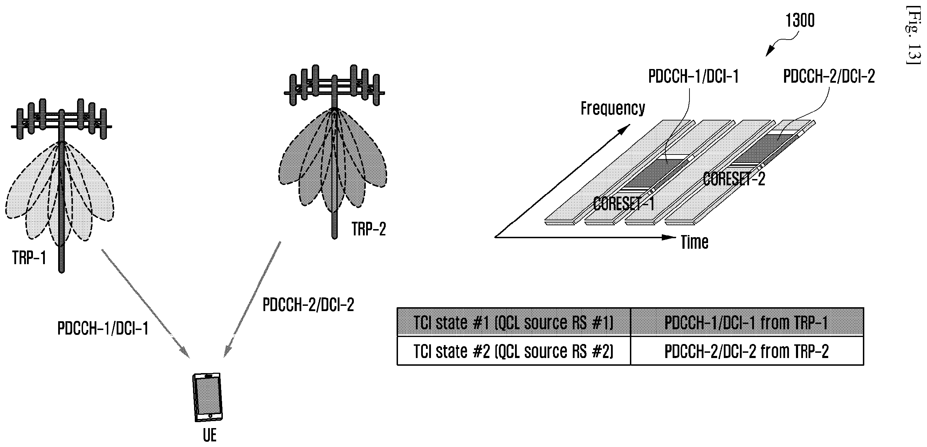

FIGURE 13 illustrates another example of TCI state indication for PDCCH repetitions 1300 in a multi-TRP system according to embodiments of the present disclosure. An embodiment of the TCI state indication for PDCCH repetitions 1300 shown in FIGURE 13 is for illustration only.

In FIGURE 13, a conceptual example of PDCCH/DCI repetition over two CORESETs is presented for a multi-TRP system comprising of two TRPs, i.e., TRP-1 and TRP-2. As depicted in FIGURE 13, the UE could receive PDCCH-1/DCI-1 from TRP-1 via CORESET-1 and PDCCH-2/DCI-2 from TRP-2 via a different CORESET-2. In this example, DCI-1 and DCI-2 could correspond to the same DCI payload, denoted by DCI_A. Furthermore, the search spaces in the two CORESETs (e.g., CORESET-1 and CORESET-2 in FIGURE 13) that provide/configure/indicate the PDCCH candidates for repetition (e.g., PDCCH-1/DCI-1 and PDCCH-2/DCI-2 in FIGURE 13), and therefore, the corresponding PDCCH candidates for repetition configured therein (e.g., PDCCH-1/DCI-1 and PDCCH-2/DCI-2 in FIGURE 13), could be linked/associated via a higher layer RRC signaling/parameter, denoted by, e.g., SearchSpaceLinking.

Alternatively, DCI-1 and DCI-2 could correspond to two separate parts of the same DCI payload DCI_A. The UE could be indicated by the network different TCI states - TCI state #1 and TCI state #2 in FIGURE 13 (and therefore, different QCL source RSs indicated therein - QCL source RS #1 and QCL source RS #2 in FIGURE 13) for the PDCCHs transmitted from different TRPs (PDCCH-1/DCI-1 from TRP-1 and PDCCH-2/DCI-2 from TRP-2 in FIGURE 13) in the multi-TRP system. In this disclosure, the different CORESETs, e.g., CORESET-1 and CORESET-2 shown in FIGURE 13, could be configured for the DCI(s) for beam indication.

As aforementioned, in a multi-TRP system, the same DCI payload could be repeatedly transmitted from different TRPs, or separate parts of the same DCI payload could be transmitted from different TRPs. Furthermore, a search space configuring more than one PDCCH candidates could be configured in/across more than one CORESETs. That is, multiple (more than one) PDCCH candidates in a single search space configured in N>1 CORESETs and/or multiple (more than one) search spaces configured in N>1 CORESETs could convey the same DCI payload from different TRPs. Hence, there is a need to associate different PDCCH candidates in a single search space configured in N>1 CORESETs and/or different search spaces configured in N>1 CORESETs and/or the N>1 CORESETs with the TRPs in the multi-TRP system.

The association/mapping between the PDCCH candidates for repetition in a search space configured in the N>1 CORESETs and the TRPs in the multi-TRP system could follow various examples herein, wherein various association/mapping strategies between the PDCCH candidates for repetition in a search space configured in a CORESET and the TRPs in the multi-TRP system are specified. In addition, the association/mapping between the search spaces (e.g., higher layer linked/associated via SearchSpaceLinking) configured in the N>1 CORESETs and the TRPs in the multi-TRP system could follow various examples herein, wherein various association/mapping strategies between the search spaces configured in a CORESET and the TRPs in the multi-TRP system are specified.

For N>1 CORESETs, in one example, the UE could be explicitly indicated by the network the association/mapping between one or more CORESETs and the TRPs in the multi-TRP system. The UE could be higher layer configured by the network a list/set/pool of TRP-specific ID/index values such as PCIs and TRP-specific higher layer signaling index values. The UE could also receive from the network a MAC CE activation command (and/or a bitmap and/or a DCI) activating one or more TRP-specific ID/index values from the list/set/pool of TRP-specific ID/index values. The UE could be explicitly indicated by the network the association/mapping between the one or more CORESETs and the TRP-specific ID/index values such as PCIs and TRP-specific higher layer signaling index values in the list/set/pool of (MAC CE activated) TRP-specific ID/index values.

For example, the UE could be explicitly indicated by the network the association/mapping between the indices of the CORESETs and the TRPs in the multi-TRP system. For instance, the first CORESET could correspond to the first (or the last) entry/TRP in the list/set/pool of (MAC CE activated) TRP-specific ID/index values, the second CORESET in the search space could correspond to the second (or the second last) entry/TRP in the list/set/pool of (MAC CE activated) TRP-specific ID/index values, and so on, and the last (N-th) CORESET could correspond to the last (or the first) entry/TRP in the list/set/pool of (MAC CE activated) TRP-specific ID/index values. The order(s) of the CORESETs could be pre-configured and known to both the network and the UE sides a priori.

Alternatively, the UE could be indicated by the network the order(s) of the N>1 CORESETs; this indication could be via higher layer (RRC) or/and MAC CE or/and DCI based signaling or/and any combination of at least two of RRC, MAC CE and DCI based signaling; this indication could be via a separate (dedicated) parameter or joint with another parameter.

Furthermore, each of the N>1 CORESETs could correspond to the same DCI payload, and/or the N>1 CORESETs could correspond to separate parts of the same DCI payload - e.g., the first CORESET corresponds to the first (or the last) part of the DCI, the second CORESET corresponds to the second (or the second last) part of the DCI, and so on, and the last (N-th) CORESET corresponds to the last (or the first) part of the DCI.

For another example, the UE could be explicitly indicated by the network the association/mapping between the CORESET ID values/CORESET subset ID values/CORESETPoolIndex values associated with the CORESETs and the TRPs in the multi-TRP system. For instance, the CORESET associated with the lowest CORESET ID value/CORESET subset ID value/CORESETPoolIndex value could correspond to the first (or the last) entry/TRP in the list/set/pool of (MAC CE activated) TRP-specific ID/index values, the CORESET associated with the second lowest CORESET ID value/CORESET subset ID value/CORESETPoolIndex value could correspond to the second (or the second last) entry/TRP in the list/set/pool of (MAC CE activated) TRP-specific ID/index values, and so on, and the CORESET associated with the highest CORESET ID value/CORESET subset ID value/CORESETPoolIndex value could correspond to the last (or the first) entry/TRP in the list/set/pool of (MAC CE activated) TRP-specific ID/index values.

Furthermore, each of the N>1 CORESETs could correspond to the same DCI payload, and/or the N>1 CORESETs could correspond to separate parts of the same DCI payload - e.g., the CORESET associated with the lowest CORESET ID value/CORESET subset ID value/CORESETPoolIndex value corresponds to the first (or the last) part of the DCI, the CORESET associated with the second lowest CORESET ID value/CORESET subset ID value/CORESETPoolIndex value corresponds to the second (or the second last) part of the DCI, and so on, and the CORESET associated with the highest CORESET ID value/CORESET subset ID value/CORESETPoolIndex value corresponds to the last (or the first) part of the DCI.

Other exact association/mapping relationships between the N>1 CORESETs and the TRPs in the multi-TRP system and/or the corresponding indication method(s), e.g., via higher layer RRC signaling and/or MAC CE command and/or dynamic DCI signaling, are also possible.

For N>1 CORESETs, in another example, the UE could be implicitly indicated by the network the association/mapping between one or more CORESETs and the TRPs in the multi-TRP system. The UE could be higher layer configured by the network a list/set/pool of TRP-specific ID/index values such as PCIs and TRP-specific higher layer signaling index values. The UE could also receive from the network a MAC CE activation command (and/or a bitmap and/or a DCI) activating one or more TRP-specific ID/index values from the list/set/pool of TRP-specific ID/index values. The UE could be implicitly indicated by the network the association/mapping between the one or more CORESETs and the TRP-specific ID/index values such as PCIs and TRP-specific higher layer signaling index values in the list/set/pool of (MAC CE activated) TRP-specific ID/index values.

For example, the UE could be implicitly indicated by the network the association/mapping between the indices of the CORESETs and the TRPs in the multi-TRP system. For instance, the first CORESET could correspond to the TRP with the lowest (or the highest) TRP-specific ID/index value such as PCI value and TRP-specific higher layer signaling index value in the list/set/pool of (MAC CE activated) TRP-specific ID/index values, the second CORESET could correspond to the TRP with the second lowest (or the second highest) TRP-specific ID/index value such as PCI value and TRP-specific higher layer signaling index value in the list/set/pool of (MAC CE activated) TRP-specific ID/index values, and so on, and the last (N-th) CORESET could correspond to the highest (or the lowest) TRP-specific ID/index value such as PCI value and TRP-specific higher layer signaling index value in the list/set/pool of (MAC CE activated) TRP-specific ID/index values. The order(s) of the CORESETs could be pre-configured and known to both the network and the UE sides a priori.

Alternatively, the UE could be indicated by the network the order(s) of the CORESETs; this indication could be via higher layer (RRC) or/and MAC CE or/and DCI based signaling or/and any combination of at least two of RRC, MAC CE and DCI based signaling; this indication could be via a separate (dedicated) parameter or joint with another parameter. Furthermore, each of the N>1 CORESETs could correspond to the same DCI payload, and/or the N>1 CORESETs could correspond to separate parts of the same DCI payload - e.g., the first CORESET corresponds to the first (or the last) part of the DCI, the second CORESET corresponds to the second (or the second last) part of the DCI, and so on, and the last (N-th) CORESET corresponds to the last (or the first) part of the DCI.

For another example, the UE could be implicitly indicated by the network the association/mapping between the CORESET ID values/CORESET subset ID values/CORESETPoolIndex values associated with the CORESETs and the TRPs in the multi-TRP system. For instance, the CORESET associated with the lowest CORESET ID value/CORESET subset ID value/CORESETPoolIndex value could correspond to the TRP with the lowest (or the highest) TRP-specific ID/index value such as PCI value and TRP-specific higher layer signaling index value in the list/set/pool of (MAC CE activated) TRP-specific ID/index values, the CORESET associated with the second lowest CORESET ID value/CORESET subset ID value/CORESETPoolIndex value could correspond to the TRP with the second lowest (or the second highest) TRP-specific ID/index value such as PCI value and TRP-specific higher layer signaling index value in the list/set/pool of (MAC CE activated) TRP-specific ID/index values, and so on, and the CORESET associated with the highest CORESET ID value/CORESET subset ID value/CORESETPoolIndex value could correspond to the TRP with the highest (or the lowest) TRP-specific ID/index value such as PCI value and TRP-specific higher layer signaling index value in the list/set/pool of (MAC CE activated) TRP-specific ID/index values.

Furthermore, each of the N>1 CORESETs could correspond to the same DCI payload, and/or the N>1 CORESETs could correspond to separate parts of the same DCI payload - e.g., the CORESET associated with the lowest CORESET ID value/CORESET subset ID value/CORESETPoolIndex value corresponds to the first part of the DCI, the CORESET associated with the second lowest CORESET ID value/CORESET subset ID value/CORESETPoolIndex value corresponds to the second part of the DCI, and so on, and the CORESET associated with the highest CORESET ID value/CORESET subset ID value/CORESETPoolIndex value corresponds to the last part of the DCI.

Other implicit indication methods of the association/mapping relationships between the N>1 CORESETs and the TRPs in the multi-TRP system are also possible.

For N>1 CORESETs, in yet another example, the UE could be higher layer configured by the network a list/set/pool of TRP-specific ID/index values such as PCIs and TRP-specific higher layer signaling index values and a list/set/pool of CORESET ID values/CORESET subset ID values/CORESETPoolIndex values - e.g., a group of two CORESETPoolIndex values 0 and 1. Each TRP-specific ID/index value in the list/set/pool of TRP-specific ID/index values is mapped to/associated with a CORESET ID value/CORESET subset ID value/CORESETPoolIndex value in the list/set/pool of CORESET ID values/CORESET subset ID values/CORESETPoolIndex values, and the corresponding association/mapping is indicated to the UE. The UE could also receive from the network a MAC CE activation command (and/or a bitmap and/or a DCI) activating one or more TRP-specific ID/index values from the list/set/pool of TRP-specific ID/index values and one or more CORESET ID values/CORESET subset ID values/CORESETPoolIndex values from the list/set/pool of CORESET ID values/CORESET subset ID values/CORESETPoolIndex values.

A CORESET is mapped to/associated with a (MAC CE activated) TRP-specific ID/index value such as PCI and TRP-specific higher layer signaling index value if they are associated with the same CORESET ID value/CORESET subset ID value/CORESETPoolIndex value.

The UE could be indicated by the network which CORESET(s) is configured for the same DCI payload and/or one part of the same DCI payload; this indication could be based on a UE's capability/preference reporting. For instance, the UE could receive from the network a MAC CE activation command (and/or a bitmap and/or a DCI) activating/indicating one or more CORESETs from the N>1 CORESETs as the CORESET(s) for the same DCI payload (or conveying separate parts of the same DCI payload). The UE's capability/preference reporting could include information indicating whether/how the UE could conduct soft combining or selection of the PDCCH(s)/DCI(s) repetitions from the TRPs.

As aforementioned, in a multi-TRP system, the same DCI payload could be repeatedly transmitted from different TRPs, or separate parts of the same DCI payload could be transmitted from different TRPs via different spatial domain TX filters/beams. Furthermore, multiple (more than one) PDCCH candidates for repetition in a single search space could be configured in multiple (more than one) CORESETs, and/or multiple (more than one) search spaces (e.g., higher layer linked/associated via SearchSpaceLinking) could be configured in multiple (more than one) CORESETs, and/or multiple (more than one) CORESETs could be configured to convey the same DCI payload from different TRPs in the multi-TRP system. Hence, there is a need to associate different PDCCH candidates in a single search space configured in the CORESETs and/or different search spaces configured in the CORESETs and/or different CORESETs with the TCI states indicating the different spatial domain TX filters/beams.

The example of MAC CE based TCI state/beam indication for the multi-TRP operation is presented in FIGURE 9, wherein the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more MAC CE commands to indicate one or more beam(s) (i.e., the TCI state(s)) for the transmission/reception of the PDCCH(s)/DCI(s) transmitted from/associated with one or more TRPs in a multi-TRP system.

For instance, the UE could receive from the network a single MAC CE command for beam indication to indicate N>1 TCI states/beams for the same DCI payload repeatedly transmitted from/associated with different TRPs in the multi-TRP system via different CORESETs. For another example, the UE could receive from the network a single MAC CE command for beam indication to indicate N>1 TCI states/beams for different/separate parts of the same DCI payload transmitted from/associated with different TRPs in the multi-TRP system via different CORESETs.

As depicted in FIGURE 9 and FIGURE 13, the UE could receive from the network a single MAC CE command for beam indication to indicate N=2 TCI states/beams (TCI #3 and TCI #5) for PDCCH-1/DCI-1 transmitted from/associated with TRP-1 via CORESET-1 and PDCCH-2/DCI-2 transmitted from/associated with TRP-2 via CORESET-2, in the multi-TRP system, respectively. Recall that DCI-1 and DCI-2 could correspond to the same DCI payload denoted by DCI_A, or two separate parts of the same DCI payload DCI_A. In this disclosure, the same DCI payload could correspond to the DCI for beam indication and/or the different CORESETs, e.g., CORESET-1 and CORESET-2 shown in FIGURE 13, could be configured for the DCI(s) for beam indication.

The MAC CE for beam indication could include at least a TCI state ID. As discussed above, the TCI state corresponding to the TCI state ID could be at least one of: (1) a DL TCI state; (2) an UL TCI state; (3) a joint DL and UL TCI state; and (4) separate DL TCI state and UL TCI state.

The association/mapping between the PDCCH candidates for repetition in a search space configured in the N>1 CORESETs and the N>1 TCI states/beams indicated in a MAC CE command for beam indication could follow various examples herein, wherein various association/mapping strategies between the PDCCH candidates for repetition in a search space configured in a CORESET and the TCI states/beams indicated in a MAC CE command for beam indication are specified, and the association/mapping between the PDCCH candidates for repetition in a search space configured in the N>1 CORESETs and the N>1 MAC CE commands for beam indication each indicating at least one TCI state/beam could follow various examples herein, wherein various association/mapping strategies between the PDCCH candidates for repetition in a search space configured in a CORESET and the MAC CE commands for beam indication (and therefore, the TCI states/beams indicated therein) are specified.

Furthermore, the association/mapping between the search spaces (higher layer linked/associated via SearchSpaceLinking) configured in the N>1 CORESETs and the N>1 TCI states/beams indicated in a MAC CE command for beam indication could follow various examples herein, wherein various association/mapping strategies between the search spaces (higher layer linked/associated via SearchSpaceLinking) configured in a CORESET and the TCI states/beams indicated in a MAC CE command for beam indication are specified, and the association/mapping between the search spaces (higher layer linked/associated via SearchSpaceLinking) configured in the N>1 CORESETs and the N>1 MAC CE commands for beam indication each indicating at least one TCI state/beam could follow various examples herein, wherein various association/mapping strategies between the search spaces (higher layer linked/associated via SearchSpaceLinking) configured in a CORESET and the MAC CE commands for beam indication (and therefore, the TCI states/beams indicated therein) are specified.

In addition, (1) the association/mapping between the search spaces (higher layer linked/associated via SearchSpaceLinking) configured in the N>1 CORESETs and one or more of the N>1 TCI states/beams indicated in a MAC CE command for beam indication, and (2) the association/mapping between the search spaces (higher layer linked/associated via SearchSpaceLinking) configured in the N>1 CORESETs and one or more of the N>1 TCI states/beams indicated in a MAC CE command for beam indication could follow various examples herein; and (1) the association/mapping between the search spaces (higher layer linked/associated via SearchSpaceLinking) configured in the N>1 CORESETs and one or more of the N>1 MAC CE commands for beam indication each indicating at least one TCI state/beam, and (2) the association/mapping between the search spaces (higher layer linked/associated via SearchSpaceLinking) configured in the N>1 CORESETs and one or more of the N>1 MAC CE commands for beam indication each indicating at least one TCI state/beam could follow various examples herein.

For N>1 CORESETs and N>1 TCI states/beams indicated in a single MAC CE command for beam indication, in one example, the UE could be indicated by the network, e.g., via higher layer RRC signaling and/or MAC CE command and/or dynamic DCI signaling, the exact association/mapping between one or more CORESETs and the TCI states/beams indicated in the MAC CE command for beam indication.

For example, the UE could be indicated by the network the association/mapping between the indices of the CORESETs and the TCI states/beams indicated in the MAC CE command for beam indication. For instance, the first CORESET could correspond to the first (or the last) TCI state and/or the TCI state with the lowest (or the highest) TCI state ID value indicated in the MAC CE command for beam indication, the second CORESET could correspond to the second (or the second last) TCI state and/or the TCI state with the second lowest (or the second highest) TCI state ID value indicated in the MAC CE command for beam indication, and so on, and the last (N-th) CORESET could correspond to the last (or the first) TCI state and/or the TCI state with the highest (or the lowest) TCI state ID value indicated in the MAC CE command for beam indication.

The order(s) of the CORESETs could be pre-configured and known to both the network and the UE sides a priori. Alternatively, the UE could be indicated by the network the order(s) of the CORESETs; this indication could be via higher layer (RRC) or/and MAC CE or/and DCI based signaling or/and any combination of at least two of RRC, MAC CE and DCI based signaling; this indication could be via a separate (dedicated) parameter or joint with another parameter. Furthermore, each of the N>1 CORESETs could correspond to the same DCI payload, and/or the N>1 CORESETs could correspond to separate parts of the same DCI payload - e.g., the first CORESET corresponds to the first (or the last) part of the DCI, the second CORESET corresponds to the second (or the second last) part of the DCI, and so on, and the last (N-th) CORESET corresponds to the last (or the first) part of the DCI.

For another example, the UE could be indicated by the network the association/mapping between the CORESET ID values/CORESET subset ID values/CORESETPoolIndex values associated with the CORESETs and the TCI states/beams indicated in the MAC CE command for beam indication. For instance, the CORESET associated with the lowest CORESET ID value/CORESET subset ID value/CORESETPoolIndex value could correspond to the first (or the last) TCI state and/or the TCI state with the lowest (or the highest) TCI state ID value indicated in the MAC CE command for beam indication, the CORESET associated with the second lowest CORESET ID value/CORESET subset ID value/CORESETPoolIndex value could correspond to the second (or the second last) TCI state and/or the TCI state with the second lowest (or the second highest) TCI state ID value indicated in the MAC CE command for beam indication, and so on, and the CORESET associated with the highest CORESET ID value/CORESET subset ID value/CORESETPoolIndex value could correspond to the last (or the first) TCI state and/or the TCI state with the highest (or the lowest) TCI state ID value indicated in the MAC CE command for beam indication.

Furthermore, each of the N>1 CORESETs could correspond to the same DCI payload, and/or the N>1 CORESETs could correspond to separate parts of the same DCI payload - e.g., the CORESET associated with the lowest CORESET ID value/CORESET subset ID value/CORESETPoolIndex value corresponds to the first (or the last) part of the DCI, the CORESET associated with the second lowest CORESET ID value/CORESET subset ID value/CORESETPoolIndex value corresponds to the second (or the second last) part of the DCI, and so on, and the CORESET associated with the highest CORESET ID value/CORESET subset ID value/CORESETPoolIndex value corresponds to the last (or the first) part of the DCI.

Other exact association/mapping relationships between the N>1 CORESETs and the TCI states/beams indicated in the MAC CE command for beam indication and/or the corresponding indication method(s), e.g., via higher layer RRC signaling and/or MAC CE command and/or dynamic DCI signaling, are also possible.

For N>1 CORESETs and N>1 TCI states/beams indicated in a single MAC CE command for beam indication, in another example, a TCI state, e.g., the higher layer parameter TCI-State, indicated in the MAC CE command for beam indication could include/comprise/incorporate at least a CORESET ID value/CORESET subset ID value/CORESETPoolIndex value associated with a CORESET and/or at least a (relative) CORESET index/order among the N>1 CORESETs.

For N>1 CORESETs and N>1 TCI states/beams indicated in a single MAC CE command for beam indication, in yet another example, a CORESET, e.g., the higher layer parameter ControlResourceSet could include/comprise/incorporate at least one (absolute) TCI state ID value and/or one (relative) TCI state index/order among the N>1 TCI states/beams indicated in the MAC CE command for beam indication.

For N>1 CORESETs and N>1 TCI states/beams indicated in a single MAC CE command for beam indication, in yet another example, the UE could be implicitly indicated by the network the association/mapping between the N>1 TCI states/beams indicated in the MAC CE command for beam indication and the N>1 CORESETs. For example, a TCI state/beam indicated in the MAC CE command for beam indication could be associated with/mapped to a CORESET if the TCI state/beam indicated in the MAC CE command for beam indication and the CORESET are associated with the same TRP-specific ID value such as PCI value and/or TRP-specific higher layer signaling index value and/or the same CORESET ID value/CORESET subset ID value/CORESETPoolIndex value. Other implicit indication methods of the association/mapping between the N>1 TCI states/beams indicated in the MAC CE command for beam indication and the N>1 CORESETs are also possible.

For N>1 CORESETs and N>1 TCI states/beams indicated in a single MAC CE command for beam indication, in yet another example, a TCI state/beam indicated in the MAC CE command for beam indication could be associated with/mapped to a CORESET if the TCI state/beam indicated in the MAC CE command for beam indication and the CORESET, e.g., the higher layer parameter ControlResourceSet, include/comprise/incorporate the same ID/index value. For example, this ID/index value could be a (absolute) TRP-specific ID/index value such as PCI value, TRP ID value, TRP index value, TRP-specific higher layer signaling index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. Yet for another example, this ID/index value could be a CORESET ID value/CORESET subset ID value/CORESETPoolIndex value.

For N>1 CORESETs and a list/set/pool of N> 1 MAC CE commands for beam indication with each MAC CE command for beam indication indicating at least a TCI state/beam (a unique entity ID/index could be included/incorporated in each MAC CE command for beam indication), in one example, the UE could be indicated by the network, e.g., via higher layer RRC signaling and/or MAC CE command and/or dynamic DCI signaling, the exact association/mapping between one or more CORESETs and the N>1 MAC CE commands for beam indication (and therefore, the TCI states/beams indicated therein).

For example, the UE could be indicated by the network the association/mapping between the indices of the CORESETs and the MAC CE commands for beam indication. For instance, the first CORESET could correspond to the first (or the last) MAC CE command for beam indication in the list/set/pool of N>1 MAC CE commands for beam indication and/or the MAC CE command for beam indication indicating the lowest (or the highest) entity ID/index value and/or the MAC CE command for beam indication indicating the TCI state with the lowest (or the highest) TCI state ID value, the second CORESET could correspond to the second (or the second last) MAC CE command for beam indication in the list/set/pool of N>1 MAC CE commands for beam indication and/or the MAC CE command for beam indication indicating the second lowest (or the second highest) entity ID/index value and/or the MAC CE command for beam indication indicating the TCI state with the second lowest (or the second highest) TCI state ID value, and so on, and the last (N-th) CORESET could correspond to the last (or the first) MAC CE command for beam indication in the list/set/pool of N>1 MAC CE commands for beam indication and/or the MAC CE command for beam indication indicating the highest (or the lowest) entity ID/index value and/or the MAC CE command for beam indication indicating the TCI state with the highest (or the lowest) TCI state ID value. The order(s) of the CORESETs could be pre-configured and known to both the network and the UE sides a priori.

Alternatively, the UE could be indicated by the network the order(s) of the CORESETs; this indication could be via higher layer (RRC) or/and MAC CE or/and DCI based signaling or/and any combination of at least two of RRC, MAC CE and DCI based signaling; this indication could be via a separate (dedicated) parameter or joint with another parameter. Furthermore, each of the N>1 CORESETs could correspond to the same DCI payload, and/or the N>1 CORESETs could correspond to separate parts of the same DCI payload - e.g., the first CORESET corresponds to the first (or the last) part of the DCI, the second CORESET corresponds to the second (or the second last) part of the DCI, and so on, and the last (N-th) CORESET corresponds to the last (or the first) part of the DCI.

For another example, the UE could be indicated by the network the association/mapping between the CORESET ID values/CORESET subset ID values/CORESETPoolIndex values associated with the CORESETs and the MAC CE commands for beam indication. For instance, the CORESET associated with the lowest CORESET ID value/CORESET subset ID value/CORESETPoolIndex value could correspond to the first (or the last) MAC CE command for beam indication in the list/set/pool of N>1 MAC CE commands for beam indication and/or the MAC CE command for beam indication indicating the lowest (or the highest) entity ID/index value and/or the MAC CE command for beam indication indicating the TCI state with the lowest (or the highest) TCI state ID value, the CORESET associated with the second lowest CORESET ID value/CORESET subset ID value/CORESETPoolIndex value could correspond to the second (or the second last) MAC CE command for beam indication in the list/set/pool of N>1 MAC CE commands for beam indication and/or the MAC CE command for beam indication indicating the second lowest (or the second highest) entity ID/index value and/or the MAC CE command for beam indication indicating the TCI state with the second lowest (or the second highest) TCI state ID value, and so on, and the CORESET associated with the highest CORESET ID value/CORESET subset ID value/CORESETPoolIndex value could correspond to the last (or the first) MAC CE command for beam indication in the list/set/pool of N>1 MAC CE commands for beam indication and/or the MAC CE command for beam indication indicating the highest (or the lowest) entity ID/index value and/or the MAC CE command for beam indication indicating the TCI state with the highest (or the lowest) TCI state ID value.

Furthermore, each of the N>1 CORESETs could correspond to the same DCI payload, and/or the N>1 CORESETs could correspond to separate parts of the same DCI payload - e.g., the CORESET associated with the lowest CORESET ID value/CORESET subset ID value/CORESETPoolIndex value corresponds to the first (or the last) part of the DCI, the CORESET associated with the second lowest CORESET ID value/CORESET subset ID value/CORESETPoolIndex value corresponds to the second (or the second last) part of the DCI, and so on, and the CORESET associated with the highest CORESET ID value/CORESET subset ID value/CORESETPoolIndex value corresponds to the last (or the first) part of the DCI.

Other exact association/mapping relationships between the N>1 CORESETs and the N>1 MAC CE commands for beam indication (and therefore, the TCI states/beams indicated therein) and/or the corresponding indication method(s), e.g., via higher layer RRC signaling and/or MAC CE command and/or dynamic DCI signaling, are also possible.

For N>1 CORESETs and a list/set/pool of N>1 MAC CE commands for beam indication with each MAC CE command for beam indication indicating at least a TCI state/beam (a unique entity ID/index could be included/incorporated in each MAC CE command for beam indication), in another example, a MAC CE command for beam indication could include/comprise/incorporate at least a CORESET ID value/CORESET subset ID value/CORESETPoolIndex value associated with a CORESET and/or at least a (relative) CORESET index/order among the N>1 CORESETs.

For N>1 CORESETs and a list/set/pool of N>1 MAC CE commands for beam indication with each MAC CE command for beam indication indicating at least a TCI state/beam (a unique entity ID/index could be included/incorporated in each MAC CE command for beam indication), in yet another example, a CORESET, e.g., the higher layer parameter ControlResourceSet, could include/comprise/incorporate at least one (absolute) entity ID/index value of at least one MAC CE command for beam indication and/or at least one (relative) index of at least one MAC CE command for beam indication among the N>1 MAC CE commands for beam indication.

For N>1 CORESETs and a list/set/pool of N>1 MAC CE commands for beam indication with each MAC CE command for beam indication indicating at least a TCI state/beam (a unique entity ID/index could be included/incorporated in each MAC CE command for beam indication), in yet another example, the UE could be implicitly indicated by the network the association/mapping between the N>1 MAC CE commands for beam indication (and therefore, the TCI states/beams indicated therein) and the N>1 CORESETs. For example, a MAC CE command for beam indication could be associated with/mapped to a CORESET if the MAC CE command for beam indication and the CORESET are associated with the same TRP-specific ID value such as PCI value and/or TRP-specific higher layer signaling index value and/or the same CORESET ID value/CORESET subset ID value/CORESETPoolIndex value. Other implicit indication methods of the association/mapping between the N>1 MAC CE commands for beam indication (and therefore, the TCI states/beams indicated therein) and the N>1 CORESETs are also possible.

For N>1 CORESETs and a list/set/pool of N> 1 MAC CE commands for beam indication with each MAC CE command for beam indication indicating at least a TCI state/beam (a unique entity ID/index could be included/incorporated in each MAC CE command for beam indication), in yet another example, a MAC CE command for beam indication could be associated with/mapped to a CORESET if the MAC CE command for beam indication and the CORESET, e.g., the higher layer parameter ControlResourceSet, include/comprise/incorporate the same ID/index value. For example, this ID/index value could be a (absolute) TRP-specific ID/index value such as PCI value, TRP ID value, TRP index value, TRP-specific higher layer signaling index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. Yet for another example, this ID/index value could be a CORESET ID value/CORESET subset ID value/CORESETPoolIndex value.

The example of DCI based TCI state/beam indication for the multi-TRP operation is presented in FIGURE 10, wherein the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more DCIs to indicate one or more beam(s) (i.e., the TCI state(s)) for the transmission/reception of the PDCCH(s)/DCI(s) transmitted from/associated with one or more TRPs in a multi-TRP system. For instance, the UE could receive from the network a single DCI for beam indication to indicate N>1 TCI states/beams for the same DCI payload repeatedly transmitted from/associated with different TRPs in the multi-TRP system via different CORESETs.

For another example, the UE could receive from the network a single DCI for beam indication to indicate N>1 TCI states/beams for different/separate parts of the same DCI payload transmitted from/associated with different TRPs in the multi-TRP system via different CORESETs.

As depicted in FIGURE 10 and FIGURE 13, the UE could receive from the network a single DCI for beam indication to indicate N=2 TCI states/beams (TCI #3 and TCI #5) for PDCCH-1/DCI-1 transmitted from/associated with TRP-1 via CORESET-1 and PDCCH-2/DCI-2 transmitted from/associated with TRP-2 via CORESET-2, in the multi-TRP system, respectively. Recall that DCI-1 and DCI-2 could correspond to the same DCI payload denoted by DCI_A, or two separate parts of the same DCI payload DCI_A. In this disclosure, the same DCI payload could correspond to the DCI for beam indication and/or the different CORESETs, e.g., CORESET-1 and CORESET-2 shown in FIGURE 13, could be configured for the DCI(s) for beam indication.

As described above, a DCI used to indicate to the UE a beam (i.e., a TCI state and/or a TCI state ID) for the transmission/reception of a PDCCH or a PDSCH could be at least one of the following.

In one example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment.

In another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant.

Yet in another example, a custom/purpose designed DCI format could be used to indicate to the UE a beam (i.e., a TCI state and/or a TCI state ID) for the transmission/reception of a PDCCH or a PDSCH.

Furthermore, the TCI state indicated in the DCI for beam indication could be at least one of: (1) a DL TCI state; (2) an UL TCI state; (3) a joint DL and UL TCI state; and (4) separate DL TCI state and UL TCI state.

As discussed above, a single search space containing more than one PDCCH candidates for repetition could be configured in the N>1 CORESETs to convey the PDCCHs/DCIs transmitted from different TRPs in the multi-TRP system. The association/mapping between the TCI state(s)/beam(s) indicated in the DCI(s) for beam indication and the PDCCH candidates for repetition configured in the search space across the N>1 CORESETs needs to be specified. There could be various means to associate/map the TCI state(s)/beam(s) indicated in the DCI(s) for beam indication and the PDCCH candidates for repetition in the search space configured in the N> 1 CORESETs.

The association/mapping between the PDCCH candidates for repetition in a search space configured in the N>1 CORESETs and the N>1 TCI states/beams indicated in a DCI for beam indication could follow various examples herein, wherein various association/mapping strategies between the PDCCH candidates for repetition in a search space configured in a CORESET and the TCI states/beams indicated in a DCI for beam indication are specified, and the association/mapping between the PDCCH candidates for repetition in a search space configured in the N>1 CORESETs and the N>1 DCIs for beam indication each indicating at least one TCI state/beam could follow various examples herein, wherein various association/mapping strategies between the PDCCH candidates for repetition in a search space configured in a CORESET and the DCIs for beam indication (and therefore, the TCI states/beams indicated therein) are specified.

Furthermore, multiple (more than one) search spaces (higher layer linked/associated via SearchSpaceLinking) each configuring at least one PDCCH candidate could be configured in N>1 CORESETs to convey the PDCCHs/DCIs (i.e., PDCCH repetitions) transmitted from different TRPs in the multi-TRP system. The association/mapping between the TCI state(s)/beam(s) indicated in the DCI(s) for beam indication and the search spaces (higher layer linked/associated via SearchSpaceLinking) configured in the N>1 CORESETs needs to be specified. There could be various means to associate/map the TCI state(s)/beam(s) indicated in the DCI(s) for beam indication and the search spaces (higher layer linked/associated via SearchSpaceLinking) configured in the N>1 CORESETs.

The association/mapping between the search spaces (higher layer linked/associated via SearchSpaceLinking) configured in the N>1 CORESETs and the N>1 TCI states/beams indicated in a DCI for beam indication could follow various examples herein, wherein various association/mapping strategies between the search spaces (higher layer linked/associated via SearchSpaceLinking) configured in a CORESET and the TCI states/beams indicated in a DCI for beam indication are specified, and the association/mapping between the search spaces (higher layer linked/associated via SearchSpaceLinking) configured in the N>1 CORESETs and the N>1 DCIs for beam indication each indicating at least one TCI state/beam selected from the MAC CE activated TCI states/beams could follow various examples herein, wherein various association/mapping strategies between the search spaces (higher layer linked/associated via SearchSpaceLinking) configured in a CORESET and the DCIs for beam indication (and therefore, the TCI states/beams indicated therein) are specified.

In addition, (1) the association/mapping between the search spaces (higher layer linked/associated via SearchSpaceLinking) configured in the N>1 CORESETs and one or more of the N>1 TCI states/beams indicated in a DCI for beam indication, and (2) the association/mapping between the search spaces (higher layer linked/associated via SearchSpaceLinking) configured in the N>1 CORESETs and one or more of the N>1 TCI states/beams indicated in a DCI for beam indication could follow various examples herein; and (1) the association/mapping between the search spaces (higher layer linked/associated via SearchSpaceLinking) configured in the N>1 CORESETs and one or more of the N>1 DCIs for beam indication each indicating at least one TCI state/beam, and (2) the association/mapping between the search spaces (higher layer linked/associated via SearchSpaceLinking) configured in the N>1 CORESETs and one or more of the N>1 DCIs for beam indication each indicating at least one TCI state/beam could follow various examples herein.

For N>1 CORESETs and N>1 TCI states/beams indicated in a single DCI for beam indication, in one example, the UE could be indicated by the network, e.g., via higher layer RRC signaling and/or MAC CE command and/or dynamic DCI signaling, the exact association/mapping between one or more CORESETs and the TCI states/beams indicated in the DCI for beam indication.

For example, the UE could be indicated by the network the association/mapping between the indices of the CORESETs and the TCI states/beams indicated in the DCI for beam indication. For instance, the first CORESET could correspond to the first (or the last) TCI state and/or the TCI state with the lowest (or the highest) TCI state ID value indicated in the DCI for beam indication, the second CORESET could correspond to the second (or the second last) TCI state and/or the TCI state with the second lowest (or the second highest) TCI state ID value indicated in the DCI for beam indication, and so on, and the last (N-th) CORESET could correspond to the last (or the first) TCI state and/or the TCI state with the highest (or the lowest) TCI state ID value indicated in the DCI for beam indication. The order(s) of the CORESETs could be pre-configured and known to both the network and the UE sides a priori.

Alternatively, the UE could be indicated by the network the order(s) of the CORESETs; this indication could be via higher layer (RRC) or/and MAC CE or/and DCI based signaling or/and any combination of at least two of RRC, MAC CE and DCI based signaling; this indication could be via a separate (dedicated) parameter or joint with another parameter. Furthermore, each of the N>1 CORESETs could correspond to the same DCI payload, and/or the N>1 CORESETs could correspond to separate parts of the same DCI payload - e.g., the first CORESET corresponds to the first (or the last) part of the DCI, the second CORESET corresponds to the second (or the second last) part of the DCI, and so on, and the last (N-th) CORESET corresponds to the last (or the first) part of the DCI.

For another example, the UE could be indicated by the network the association/mapping between the CORESET ID values/CORESET subset ID values/CORESETPoolIndex values associated with the CORESETs and the TCI states/beams indicated in the DCI for beam indication. For instance, the CORESET associated with the lowest CORESET ID value/CORESET subset ID value/CORESETPoolIndex value could correspond to the first (or the last) TCI state and/or the TCI state with the lowest (or the highest) TCI state ID value indicated in the DCI for beam indication, the CORESET associated with the second lowest CORESET ID value/CORESET subset ID value/CORESETPoolIndex value could correspond to the second (or the second last) TCI state and/or the TCI state with the second lowest (or the second highest) TCI state ID value indicated in the DCI for beam indication, and so on, and the CORESET associated with the highest CORESET ID value/CORESET subset ID value/CORESETPoolIndex value could correspond to the last (or the first) TCI state and/or the TCI state with the highest (or the lowest) TCI state ID value indicated in the DCI for beam indication.

Furthermore, each of the N>1 CORESETs could correspond to the same DCI payload, and/or the N>1 CORESETs could correspond to separate parts of the same DCI payload - e.g., the CORESET associated with the lowest CORESET ID value/CORESET subset ID value/CORESETPoolIndex value corresponds to the first (or the last) part of the DCI, the CORESET associated with the second lowest CORESET ID value/CORESET subset ID value/CORESETPoolIndex value corresponds to the second (or the second last) part of the DCI, and so on, and the CORESET associated with the highest CORESET ID value/CORESET subset ID value/CORESETPoolIndex value corresponds to the last (or the first) part of the DCI.

Other exact association/mapping relationships between the N>1 CORESETs and the TCI states/beams indicated in the DCI for beam indication and/or the corresponding indication method(s), e.g., via higher layer RRC signaling and/or MAC CE command and/or dynamic DCI signaling, are also possible.

For N>1 CORESETs and N>1 TCI states/beams indicated in a single DCI for beam indication, in another example, a TCI state, e.g., the higher layer parameter TCI-State, indicated in the DCI for beam indication could include/comprise/incorporate at least a CORESET ID value/CORESET subset ID value/CORESETPoolIndex value associated with a CORESET and/or at least a (relative) CORESET index/order among the N>1 CORESETs.

For N>1 CORESETs and N>1 TCI states/beams indicated in a single DCI for beam indication, in yet another example, a CORESET, e.g., the higher layer parameter ControlResourceSet, could include/comprise/incorporate at least one (absolute) TCI state ID value and/or one (relative) TCI state index/order among the N>1 TCI states/beams indicated in the DCI for beam indication.

For N>1 CORESETs and N>1 TCI states/beams indicated in a single DCI for beam indication, in yet another example, the UE could be implicitly indicated by the network the association/mapping between the N>1 TCI states/beams indicated in the DCI for beam indication and the N>1 CORESETs. For example, a TCI state/beam indicated in the DCI for beam indication could be associated with/mapped to a CORESET if the TCI state/beam indicated in the DCI for beam indication and the CORESET are associated with the same TRP-specific ID value such as PCI value and/or TRP-specific higher layer signaling index value and/or the same CORESET ID value/CORESET subset ID value/CORESETPoolIndex value. Other implicit indication methods of the association/mapping between the N>1 TCI states/beams indicated in the DCI for beam indication and the N>1 CORESETs are also possible.

For N>1 CORESETs and N>1 TCI states/beams indicated in a single DCI for beam indication, in yet another example, a TCI state/beam indicated in the DCI for beam indication could be associated with/mapped to a CORESET if the TCI state/beam indicated in the DCI for beam indication and the CORESET, e.g., the higher layer parameter ControlResourceSet, include/comprise/incorporate the same ID/index value. For example, this ID/index value could be a (absolute) TRP-specific ID/index value such as PCI value, TRP ID value, TRP index value, TRP-specific higher layer signaling index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. Yet for another example, this ID/index value could be a CORESET ID value/CORESET subset ID value/CORESETPoolIndex value.

For N>1 CORESETs and N>1 DCIs for beam indication with each DCI for beam indication indicating at least a TCI state/beam, in one example, the UE could be indicated by the network, e.g., via higher layer RRC signaling and/or MAC CE command and/or dynamic DCI signaling, the exact association/mapping between one or more CORESETs and the N>1 DCIs for beam indication (and therefore, the TCI states/beams indicated therein).

For example, the UE could be indicated by the network the association/mapping between the indices of the CORESETs and the DCIs for beam indication. For instance, the first CORESET could correspond to the first (or the last) DCI for beam indication within the N>1 DCIs for beam indication and/or the DCI for beam indication associated with the lowest (or the highest) CORESET ID value/CORESET subset ID value/CORESETPoolIndex value and/or the DCI for beam indication indicating the TCI state with the lowest (or the highest) TCI state ID value, the second CORESET could correspond to the second (or the second last) DCI for beam indication within the N>1 DCIs for beam indication and/or the DCI for beam indication associated with the second lowest (or the second highest) CORESET ID value/CORESET subset ID value/CORESETPoolIndex value and/or the DCI for beam indication indicating the TCI state with the second lowest (or the second highest) TCI state ID value, and so on, and the last (N-th) CORESET could correspond to the last (or the first) DCI for beam indication within the N>1 DCIs for beam indication and/or the DCI for beam indication associated with the highest (or the lowest) CORESET ID value/CORESET subset ID value/CORESETPoolIndex value and/or the DCI for beam indication indicating the TCI state with the highest (or the lowest) TCI state ID value. The order(s) of the CORESETs could be pre-configured and known to both the network and the UE sides a priori.

Alternatively, the UE could be indicated by the network the order(s) of the CORESETs; this indication could be via higher layer (RRC) or/and MAC CE or/and DCI based signaling or/and any combination of at least two of RRC, MAC CE and DCI based signaling; this indication could be via a separate (dedicated) parameter or joint with another parameter. Furthermore, each of the N>1 CORESETs could correspond to the same DCI payload, and/or the N>1 CORESETs could correspond to separate parts of the same DCI payload - e.g., the first CORESET corresponds to the first (or the last) part of the DCI, the second CORESET corresponds to the second (or the second last) part of the DCI, and so on, and the last (N-th) CORESET corresponds to the last (or the first) part of the DCI.

For another example, the UE could be indicated by the network the association/mapping between the CORESET ID values/CORESET subset ID values/CORESETPoolIndex values associated with the CORESETs and the DCIs for beam indication. For instance, the CORESET associated with the lowest CORESET ID value/CORESET subset ID value/CORESETPoolIndex value could correspond to the first (or the last) DCI for beam indication within the N>1 DCIs for beam indication and/or the DCI for beam indication associated with the lowest (or the highest) CORESET ID value/CORESET subset ID value/CORESETPoolIndex value and/or the DCI for beam indication indicating the TCI state with the lowest (or the highest) TCI state ID value, the CORESET associated with the second lowest CORESET ID value/CORESET subset ID value/CORESETPoolIndex value could correspond to the second (or the second last) DCI for beam indication within the N>1 DCIs for beam indication and/or the DCI for beam indication associated with the second lowest (or the second highest) CORESET ID value/CORESET subset ID value/CORESETPoolIndex value and/or the DCI for beam indication indicating the TCI state with the highest (or the lowest) TCI state ID value, and so on, and the CORESET associated with the highest CORESET ID value/CORESET subset ID value/CORESETPoolIndex value could correspond to the last (or the first) DCI for beam indication within the N>1 DCIs for beam indication and/or the DCI for beam indication associated with the highest (or the lowest) CORESET ID value/CORESET subset ID value/CORESETPoolIndex value and/or the DCI for beam indication indicating the TCI state with the highest (or the lowest) TCI state ID value.

Furthermore, each of the N>1 CORESETs could correspond to the same DCI payload, and/or the N>1 CORESETs could correspond to separate parts of the same DCI payload - e.g., the CORESET associated with the lowest CORESET ID value/CORESET subset ID value/CORESETPoolIndex value corresponds to the first (or the last) part of the DCI, the CORESET associated with the second lowest CORESET ID value/CORESET subset ID value/CORESETPoolIndex value corresponds to the second (or the second last) part of the DCI, and so on, and the CORESET associated with the highest CORESET ID value/CORESET subset ID value/CORESETPoolIndex value corresponds to the last (or the first) part of the DCI.

Other exact association/mapping relationships between the N>1 CORESETs and the N>1 DCIs for beam indication (and therefore, the TCI states/beams indicated therein) and/or the corresponding indication method(s), e.g., via higher layer RRC signaling and/or MAC CE command and/or dynamic DCI signaling, are also possible.

For N>1 CORESETs and N>1 DCIs for beam indication with each DCI for beam indication indicating at least a TCI state/beam, in another example, a DCI for beam indication could include/comprise/incorporate at least a CORESET ID value/CORESET subset ID value/CORESETPoolIndex value associated with a CORESET and/or at least a (relative) CORESET index/order among the N>1 CORESETs.

For N>1 CORESETs and N>1 DCIs for beam indication with each DCI for beam indication indicating at least a TCI state/beam, in yet another example, a CORESET, e.g., the higher layer parameter ControlResourceSet, could include/comprise/incorporate at least one CORESET ID value/CORESET subset ID value/CORESETPoolIndex value associated with at least one DCI for beam indication and/or at least one (relative) index of at least one DCI for beam indication among the N>1 DCIs for beam indication.

For N>1 CORESETs and N>1 DCIs for beam indication with each DCI for beam indication indicating at least a TCI state/beam, in yet another example, the UE could be implicitly indicated by the network the association/mapping between the N>1 DCIs for beam indication (and therefore, the TCI states/beams indicated therein) and the N>1 CORESETs. For example, a DCI for beam indication could be associated with/mapped to a CORESET if the DCI for beam indication and the CORESET are associated with the same TRP-specific ID value such as PCI value and/or TRP-specific higher layer signaling index value and/or the same CORESET ID value/CORESET subset ID value/CORESETPoolIndex value. Other implicit indication methods of the association/mapping between the N>1 DCIs for beam indication (and therefore, the TCI states/beams indicated therein) and the N>1 CORESETs are also possible.

For N>1 CORESETs and N>1 DCIs for beam indication with each DCI for beam indication indicating at least a TCI state/beam, in yet another example, a DCI for beam indication could be associated with/mapped to a CORESET if the DCI for beam indication and the CORESET, e.g., the higher layer parameter ControlResourceSet, include/comprise/incorporate the same ID/index value. For example, this ID/index value could be a (absolute) TRP-specific ID/index value such as PCI value, TRP ID value, TRP index value, TRP-specific higher layer signaling index value and etc., based on a list/set/pool of TRP-specific ID/index values, e.g., higher layer configured to the UE and/or higher layer configured to the UE and activated by one or more MAC CE activation commands/bitmaps. For another example, this ID/index value could be an (relative) index within the list/set/pool of TRP-specific ID/index values, e.g., higher layer configured to the UE and/or higher layer configured to the UE and activated by one or more MAC CE activation commands/bitmaps. Yet for another example, this ID/index value could be a CORESET ID value/CORESET subset ID value/CORESETPoolIndex value.

The example of DCI based TCI state/beam indication (with MAC CE activated TCI states) for the multi-TRP operation is presented in FIGURE 11, wherein the UE could be first higher layer configured by the network, e.g., via the higher layer RRC signaling, a list/pool of N_tci TCI states. Each TCI state contains at least a QCL source RS with a QCL type, e.g., QCL-typeA/B/C/D. The UE could then receive from the network one or more MAC CE activation commands activating one or more TCI states from the higher layer configured list/pool of TCI states, e.g., up to eight TCI states could be activated by a MAC CE activation command.

The UE could receive from the network one or more DCIs to indicate one or more beam(s) (i.e., the TCI state(s)) from the MAC CE activated TCI state(s)/beam(s) for the transmission/reception of the PDCCH(s)/DCI(s) transmitted from/associated with one or more TRPs in a multi-TRP system on different time-frequency domain resources, i.e., via different CORESETs. For instance, the UE could receive from the network a single DCI to indicate N'>1 TCI states/beams from the MAC CE activated TCI states/beams for the same DCI payload repeatedly transmitted from/associated with different TRPs in the multi-TRP system via different CORESETs.

As depicted in FIGURE 11 and FIGURE 13, the UE could receive from the network a single DCI to indicate N'=2 TCI states/beams (TCI #3 and TCI #5) from the MAC CE activated TCI states/beams for PDCCH-1/DCI-1 transmitted from/associated with TRP-1 via CORESET-1 and PDCCH-2/DCI-2 transmitted from/associated with TRP-2 via CORESET-2, in the multi-TRP system, respectively. Recall that DCI-1 and DCI-2 could correspond to the same DCI payload denoted by DCI_A, or two separate parts of the same DCI payload DCI_A. In this disclosure, the same DCI payload could correspond to the DCI for beam indication and/or the different CORESETs, e.g., CORESET-1 and CORESET-2 shown in FIGURE 13, could be configured for the DCI(s) for beam indication.

As described above, a DCI used to indicate to the UE a beam (i.e., a TCI state and/or a TCI state ID) for the transmission/reception of a PDCCH or a PDSCH could be at least one of the following.

In one example, a DL related DCI (e.g., DCI format 1_0, DCI format 1_1 or DCI format 1_2) could be used to indicate to the UE a beam (i.e., a TCI state and/or a TCI state ID) for the transmission/reception of a PDCCH or a PDSCH, wherein the DL related DCI may or may not include a DL assignment.

In another example, an UL related DCI (e.g., DCI format 0_0, DCI format 0_1, DCI format 0_2) could be used to indicate to the UE a beam (i.e., a TCI state and/or a TCI state ID) for the transmission/reception of a PDCCH or a PDSCH, wherein the UL related DCI may or may not include an UL scheduling grant.

Yet in another example, a custom/purpose designed DCI format could be used to indicate to the UE a beam (i.e., a TCI state and/or a TCI state ID) for the transmission/reception of a PDCCH or a PDSCH.

Furthermore, the TCI state indicated in the DCI for beam indication could be at least one of: (1) a DL TCI state; (2) an UL TCI state; (3) a joint DL and UL TCI state; and (4) separate DL TCI state and UL TCI state.

As discussed above, a single search space containing more than one PDCCH candidates for repetition could be configured in the N'>1 CORESETs to convey the PDCCHs/DCIs transmitted from different TRPs. The association/mapping between the TCI state(s)/beam(s) indicated in the DCI(s) for beam indication (selected from the MAC CE activated TCI state(s)/beam(s)) and the PDCCH candidates for repetition configured in the search space across the N'>1 CORESETs needs to be specified. There could be various means to associate/map the TCI state(s)/beam(s) indicated in the DCI(s) for beam indication (selected from the MAC CE activated TCI state(s)/beam(s)) and the PDCCH candidates for repetition in the search space configured in the N'>1 CORESETs.

The association/mapping between the PDCCH candidates (for repetition) in a search space configured in the N'>1 CORESETs and the N'>1 TCI states/beams indicated in a DCI for beam indication (selected from the MAC CE activated TCI states/beams) could follow various examples herein, wherein various association/mapping strategies between the PDCCH candidates for repetition in a search space configured in a CORESET and the TCI states/beams indicated in a DCI for beam indication are specified, and the association/mapping between the PDCCH candidates for repetition in a search space configured in the N'>1 CORESETs and the N'>1 DCIs for beam indication each indicating at least one TCI state/beam selected from the MAC CE activated TCI states/beams could follow various examples herein, wherein various association/mapping strategies between the PDCCH candidates for repetition in a search space configured in a CORESET and the DCIs for beam indication (and therefore, the TCI states/beams indicated therein) are specified.

Furthermore, multiple (more than one) search spaces (higher layer linked/associated via SearchSpaceLinking) each configuring at least one PDCCH candidate could be configured in N'>1 CORESETs to convey the PDCCHs/DCIs (i.e., PDCCH repetitions) transmitted from different TRPs. The association/mapping between the TCI state(s)/beam(s) indicated in the DCI(s) for beam indication (selected from the MAC CE activated TCI state(s)/beam(s)) and the search spaces (higher layer linked/associated via SearchSpaceLinking) configured in the N'>1 CORESETs needs to be specified.

There could be various means to associate/map the TCI state(s)/beam(s) indicated in the DCI(s) for beam indication (selected from the MAC CE activated TCI state(s)/beam(s)) and the search spaces (higher layer linked/associated via SearchSpaceLinking) configured in the N'>1 CORESETs. The association/mapping between the search spaces (higher layer linked/associated via SearchSpaceLinking) configured in the N'>1 CORESETs and the N'>1 TCI states/beams indicated in a DCI for beam indication could follow various examples herein, wherein various association/mapping strategies between the search spaces (higher layer linked/associated via SearchSpaceLinking) configured in a CORESET and the TCI states/beams indicated in a DCI for beam indication are specified, and the association/mapping between the search spaces (higher layer linked/associated via SearchSpaceLinking) configured in the N'>1 CORESETs and the N'>1 DCIs for beam indication each indicating at least one TCI state/beam selected from the MAC CE activated TCI states/beams could follow various examples herein, wherein various association/mapping strategies between the search spaces (higher layer linked/associated via SearchSpaceLinking) configured in a CORESET and the DCIs for beam indication (and therefore, the TCI states/beams indicated therein) are specified.

In addition, (1) the association/mapping between the search spaces (higher layer linked/associated via SearchSpaceLinking) configured in the N'>1 CORESETs and one or more of the N'>1 TCI states/beams indicated in a DCI for beam indication (selected from the MAC CE activated TCI states/beams), and (2) the association/mapping between the search spaces (higher layer linked/associated via SearchSpaceLinking) configured in the N'>1 CORESETs and one or more of the N'>1 TCI states/beams indicated in a DCI for beam indication (selected from the MAC CE activated TCI states/beams) could follow various examples herein; and (1) the association/mapping between the search spaces (higher layer linked/associated via SearchSpaceLinking) configured in the N'>1 CORESETs and one or more of the N'>1 DCIs for beam indication each indicating at least one TCI state/beam selected from the MAC CE activated TCI states/beams, and (2) the association/mapping between the search spaces (higher layer linked/associated via SearchSpaceLinking) configured in the N'>1 CORESETs and one or more of the N'>1 DCIs for beam indication each indicating at least one TCI state/beam selected from the MAC CE activated TCI states/beams could follow various examples herein.

For N'>1 CORESETs and N'>1 TCI states/beams indicated in a single DCI for beam indication (selected from the MAC CE activated TCI states/beams), the association/mapping between one or more CORESETs and the TCI states/beams indicated in the DCI for beam indication (selected from the MAC CE activated TCI states/beams) could follow various examples herein. For N'>1 CORESETs and N'>1 DCIs for beam indication with each DCI for beam indication indicating at least a TCI state/beam selected from the MAC CE activated TCI states/beams, the association/mapping between one or more CORESETs and the N'>1 DCIs for beam indication (and therefore, the TCI states/beams indicated therein - selected from the MAC CE activated TCI states/beams) could follow various examples herein.

As discussed above, in a single-DCI (sDCI) based multi-TRP system, a UE could be provided by the network, e.g., via MAC CE or DCI (e.g., DCI format 1_1 or 1_2 with or without DL assignment) based signaling through the higher layer parameter TCI-State_r17, M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate DL Rel. 17 unified TCI states and separate UL Rel. 17 unified TCI for UE-dedicated reception on PDSCH/PDCCH or dynamic-grant/configured-grant based PUSCH and all of dedicated PUCCH resources.

For instance, the DCI format for unified TCI state/beam indication (e.g., DCI format 1_1 or 1_2 with or without DL assignment) could include a "Transmission Configuration Indication" field containing one or more codepoints activated by a first MAC CE activation command from a set/pool of codepoints. For this case, each codepoint could indicate M>1 joint DL and UL Rel. 17 unified TCI states or M>1 separate UL Rel. 17 unified TCI states or a first combination of M>1 joint DL and UL Rel. 17 unified TCI states and separate UL Rel. 17 unified TCI states or N>1 separate DL Rel. 17 unified TCI states or a second combination of N>1 joint DL and UL Rel. 17 unified TCI states and separate DL Rel. 17 unified TCI states or a third combination of N>1 joint DL and UL Rel. 17 unified TCI states, separate DL Rel. 17 unified TCI states and separate UL Rel. 17 unified TCI for UE-dedicated reception on PDSCH/PDCCH or dynamic-grant/configured-grant based PUSCH and all of dedicated PUCCH resources.

Furthermore, in a sDCI based multi-TRP system, the UE could only receive PDCCHs from one of the TRPs at a time. For instance, the UE could receive PDCCHs in the same CORESET or different CORESETs (provided by the higher layer parameter ControlResourceSet) associated with a same CORESETPoolIndex value (e.g., 0 or 1) if applicable/configured. For this case, the UE could be provided by the higher layer parameter PDCCH-Config that contains a single value of CORESETPoolIndex (e.g., 0 or 1) in ControlResourceSet, and the UE could receive the PDCCHs in the same or different CORESETs associated with the provided value of CORESETPoolIndex. In a sDCI based multi-TRP system, if CORESETPoolIndex value is not provided by PDCCH-Config in ControlResourceSet, the UE could assume CORESETPoolIndex value 0 for all CORESETs.

In a sDCI based multi-TRP system, a UE could be provided by the network, e.g., in PDCCH-Config, different values (e.g., two values 0 and 1) of a CORESET group index, such that one or more CORESETs could be associated/configured with the same value of CORESET group index (denoted by CORESETGroupIndex). The value of CORESETGroupIndex can be indicated/included in the parameter, e.g., ControlResourceSet, that configures a CORESET, or in the parameter, e.g., SearchSpace, that configures a search space (set).

For sDCI based multi-TRP operation, DM-RS antenna ports for PDCCH reception(s), e.g., in the same CORESET or different CORESETs associated with the same CORESETPoolIndex value (e.g., 0) - if applicable/configured - or the same search space (set), could be quasi co-located with reference signals provided in the same indicated Rel. 17 unified TCI state.

When a UE receives from the network M>1 or N>1 Rel. 17 unified TCI states indicated by one or more TCI codepoints in a DCI (e.g., DCI format 1_1 or 1_2 with or without DL assignment) or MAC CE, in one example, DM-RS antenna ports for PDCCH reception(s), e.g., in the same CORESET or different CORESETs associated with the same CORESETPoolIndex value (e.g., 0) - if applicable/configured - or the same search space (set), could be quasi co-located with reference signals provided in the first indicated Rel. 17 unified TCI state, or the last indicated Rel. 17 unified TCI state, or the indicated Rel. 17 unified TCI state with the lowest TCI state ID/index, or the indicated Rel. 17 unified TCI state with the highest TCI state ID/index, among the N>1 (or M>1) Rel. 17 unified TCI states indicated by one or more TCI codepoints in a DCI (e.g., DCI format 1_1 or 1_2 with or without DL assignment) or MAC CE.

When a UE receives from the network M>1 or N>1 Rel. 17 unified TCI states indicated by one or more TCI codepoints in a DCI (e.g., DCI format 1_1 or 1_2 with or without DL assignment) or MAC CE, in another example, DM-RS antenna ports for PDCCH reception(s) in one or more CORESETs associated/configured with value n or m of CORESETGrouplndex could be quasi co-located with reference signals provided in the indicated Rel. 17 unified TCI state n or m, where n∈{1,..., N} and m∈{1,..., M}. For M=2 or N=2, DM-RS antenna ports for PDCCH reception(s) in one or more CORESETs associated with value 0 (or 1) of CORESETGroupIndex could be quasi co-located with reference signals provided in the first indicated Rel. 17 unified TCI state or the indicated Rel. 17 unified TCI state with the lowest TCI state ID/index, among the N>1 (or M>1) Rel. 17 unified TCI states indicated by one or more TCI codepoints in a DCI (e.g., DCI format 1_1 or 1_2 with or without DL assignment) or MAC CE, and DM-RS antenna ports for PDCCH reception(s) in one or more CORESETs associated with value 1 (or 0) of CORESETGrouplndex could be quasi co-located with reference signals provided in the second indicated Rel. 17 unified TCI state or the indicated Rel. 17 unified TCI state with the highest TCI state ID/index, among the N>1 (or M>1) Rel. 17 unified TCI states indicated by one or more TCI codepoints in a DCI (e.g., DCI format 1_1 or 1_2 with or without DL assignment) or MAC CE.

When a UE receives from the network M>1 or N>1 Rel. 17 unified TCI states indicated by one or more TCI codepoints in a DCI (e.g., DCI format 1_1 or 1_2 with or without DL assignment) or MAC CE, in yet another example, DM-RS antenna ports for PDCCH reception(s), e.g., in the same CORESET or different CORESETs associated with the same CORESETPoolIndex value (e.g., 0) - if applicable/configured - or the same search space (set), could be quasi co-located with reference signals provided in the indicated Rel. 17 unified TCI state n or m, where n∈{1,..., N} and m∈{1,..., M}. For example, the UE could be higher layer configured by the network, e.g., indicated in the higher layer parameter ControlResourceSet or SearchSpace, the TCI state index/ID n or m, where n∈{1,..., N} and m∈{1,..., M}.

For another example, the RRC configuration, e.g., the higher layer parameter ControlResourceSet or SearchSpace, could contain/include/indicate/provide a bitmap of length N (or M) with each bit/bit position in the bitmap corresponding to an indicated Rel. 17 unified TCI state; for this case, the UE could receive from the network, e.g., indicated/provided in ControlResourceSet or SearchSpace, the bitmap with the n-th (or m-th) bit/bit position set to "1," where n∈{1,..., N} and m∈{1,..., M}.

Yet for another example, for N=2 or M=2, the RRC configuration, e.g., the higher layer parameter ControlResourceSet or SearchSpace or TCI-State or QCL-Info or DLorJoint-TCIState, could contain/indicate/provide/correspond to a one-bit flag indicator with "0" (or "1") indicating that DM-RS antenna ports for PDCCH reception(s), e.g., in the same CORESET or different CORESETs associated with the same CORESETPoolIndex value (e.g., 0) - if applicable/configured - or in the same search space (set), could be quasi co-located with reference signals provided in the first indicated Rel. 17 unified TCI state or the indicated Rel. 17 unified TCI state with the lowest (or highest) TCI state ID/index, and "1" (or "0") indicating that DM-RS antenna ports for PDCCH reception(s), e.g., in the same CORESET or different CORESETs associated with the same CORESETPoolIndex value (e.g., 0) - if applicable/configured - or in the same search space (set), could be quasi co-located with reference signals provided in the second indicated Rel. 17 unified TCI state or the indicated Rel. 17 unified TCI state with the highest (or lowest) TCI state ID/index; or vice versa.

Yet for another example, the RRC configuration, e.g., the higher layer parameter ControlResourceSet or SearchSpace or TCI-State or QCL-Info or DLorJoint-TCIState, could include/indicate/contain/provide/correspond to a multi-bit indicator (e.g., a 2-bit indicator with four-bit fields "00," "01," "10," and "11"). For instance, if the bit field of the multi-bit indicator is set to "00" (or "01" or "10," or "11"), DM-RS antenna ports for PDCCH reception(s), e.g., in the same CORESET or different CORESETs associated with the same CORESETPoolIndex value (e.g., 0) - if applicable/configured - or in the same search space (set), could be quasi co-located with reference signals provided in the first indicated Rel. 17 unified TCI state or the indicated Rel. 17 unified TCI state with the lowest (or highest) TCI state ID/index; if the bit field of the multi-bit indicator is set to "01" (or "00" or "10," or "11"), DM-RS antenna ports for PDCCH reception(s), e.g., in the same CORESET or different CORESETs associated with the same CORESETPoolIndex value (e.g., 0) - if applicable/configured - or in the same search space (set), could be quasi co-located with reference signals provided in the second indicated Rel. 17 unified TCI state or the indicated Rel. 17 unified TCI state with the highest (or lowest) TCI state ID/index; if the bit field of the multi-bit indicator is set to "10" (or "00" or "01," or "11"), DM-RS antenna ports for receiving first PDCCH(s), e.g., in the same CORESET or different CORESETs associated with the same CORESETPoolIndex value (e.g., 0) - if applicable/configured - or in the same search space (set), could be quasi co-located with reference signals provided in the first indicated Rel. 17 unified TCI state or the indicated Rel. 17 unified TCI state with the lowest (or highest) TCI state ID/index, and DM-RS antenna ports for receiving second PDCCH(s), e.g., in the same CORESET or different CORESETs associated with the same CORESETPoolIndex value (e.g., 0) - if applicable/configured - or in the same search space (set), could be quasi co-located with reference signals provided in the second indicated Rel. 17 unified TCI state or the indicated Rel. 17 unified TCI state with the highest (or lowest) TCI state ID/index; if the bit field of the multi-bit indicator is set to "11" (or "00," "01," or "10"), DM-RS antenna ports for receiving first PDCCH(s), e.g., in the same CORESET or different CORESETs associated with the same CORESETPoolIndex value (e.g., 0) - if applicable/configured - or in the same search space (set), could be quasi co-located with reference signals provided in the second indicated Rel. 17 unified TCI state or the indicated Rel. 17 unified TCI state with the highest (or lowest) TCI state ID/index, and DM-RS antenna ports for receiving second PDCCH(s), e.g., in the same CORESET or different CORESETs associated with the same CORESETPoolIndex value (e.g., 0) - if applicable/configured - or in the same search space (set), could be quasi co-located with reference signals provided in the first indicated Rel. 17 unified TCI state or the indicated Rel. 17 unified TCI state with the lowest (or highest) TCI state ID/index. In this example, the first and second PDCCHs could be linked via their (linked) search spaces provided by a higher layer parameter SearchSpaceLinking; the first (or second) PDCCH could be received in a CORESET with the lowest CORESET ID or earliest in time, and the second (or first) PDCCH could be received in a CORESET with the highest CORESET ID or latest in time.

When a UE receives from the network M>1 or N>1 Rel. 17 unified TCI states indicated by one or more TCI codepoints in a DCI (e.g., DCI format 1_1 or 1_2 with or without DL assignment) or MAC CE, in yet another example, DM-RS antenna ports for PDCCH reception(s) in one or more CORESETs associated/configured with value m or n of CORESETGroupIndex could be quasi co-located with reference signals provided in the indicated Rel. 17 unified TCI state m' or n', where n∈{1,..., N}, m∈{1,..., M}, n'∈{1,..., N}, and m'∈{1,..., M}. The UE could be indicated by the network, e.g., via higher layer RRC signaling, the mapping/association between the indicated (joint or separate DL) TCI state n' or m' and CORESETGroupIndex value n or m (and therefore, the corresponding CORESET(s)). For example, a set/list of M>1 or N>1 TCI state indexes/IDs could be provided, e.g., in PDCCH-Config, to the UE; for this case, the m'-th (or n'-th) entry in the set/list of TCI state indexes/IDs could be associated with value m (or n) of CORESETGroupIndex provided in the same PDCCH-Config, where m=m'=1,..., M and n=n'=1,..., N.

For another example, the TCI state index/ID n' (or m') could be higher layer RRC configured, e.g., indicated in the higher layer parameter ControlResourceSet or SearchSpace that configures a CORESET associated/configured with value n (or m) of CORESETGroupIndex, to the UE. Yet for another example, a bitmap of length N (or M) with each bit/bit position in the bitmap corresponding to an indicated Rel. 17 unified TCI state could be higher layer configured, e.g., indicated/provided/included in the higher layer parameter ControlResourceSet or SearchSpace that configures a CORESET associated/configured with a CORESETGroupIndex value, to the UE; for this case, the bitmap with the n'-th (or m'-th) bit/bit position set to "1" could be higher layer RRC configured, e.g., indicated/provided in the higher layer parameter ControlResourceSet or SearchSpace that configures a CORESET associated/configured with value n (or m) of CORESETGroupIndex, to the UE.

Yet for another example, the UE could be higher layer RRC configured, e.g., indicated in the higher layer parameter PDCCH-Config, ControlResourceSet or SearchSpace or TCI-State or QCL-Info or DLorJoint-TCIState, a one-bit indicator; for this case, if the one-bit indicator is set to "0" (or "1"), DM-RS antenna ports for PDCCH reception(s) in one or more CORESETs associated/configured with value 0 of CORESETGroupIndex could be quasi co-located with reference signals provided in the first indicated Rel. 17 unified TCI state or the indicated Rel. 17 unified TCI state with the lowest TCI state ID/index, and DM-RS antenna ports for PDCCH reception(s) in one or more CORESETs associated/configured with value 1 of CORESETGroupIndex could be quasi co-located with reference signals provided in the second indicated Rel. 17 unified TCI state or the indicated Rel. 17 unified TCI state with the highest TCI state ID/index; alternatively, if the one-bit indicator is set to "1" (or "0"), DM-RS antenna ports for PDCCH reception(s) in one or more CORESETs associated/configured with value 0 of CORESETGroupIndex could be quasi co-located with reference signals provided in the second indicated Rel. 17 unified TCI state or the indicated Rel. 17 unified TCI state with the highest TCI state **ID/index,** and DM-RS antenna ports for PDCCH reception(s) in one or more CORESETs associated/configured with value 1 of CORESETGroupIndex could be quasi co-located with reference signals provided in the first indicated Rel. 17 unified TCI state or the indicated Rel. 17 unified TCI state with the lowest TCI state ID/index.

Yet for another example, the mapping/association between the indicated (joint or separate DL) TCI state n' or m' and CORESETGroupIndex value n or m (and therefore, the corresponding CORESET(s)) could be fixed; for M=2 or N=2, DM-RS antenna ports for PDCCH reception(s) in one or more CORESETs associated/configured with value 0 of CORESETGroupIndex could be quasi co-located with reference signals provided in the first (or second) indicated Rel. 17 unified TCI state or the indicated Rel. 17 unified TCI state with the lowest (or highest) TCI state ID/index, and DM-RS antenna ports for PDCCH reception(s) in one or more CORESETs associated/configured with value 1 of CORESETGroupIndex could be quasi co-located with reference signals provided in the second (or first) indicated Rel. 17 unified TCI state or the indicated Rel. 17 unified TCI state with the highest (or lowest) TCI state ID/index.

When a UE receives from the network M>1 or N>1 Rel. 17 unified TCI states indicated by one or more TCI codepoints in a DCI (e.g., DCI format 1_1 or 1_2 with or without DL assignment) or MAC CE, in yet another example, when the DCI (e.g., DCI format 1_1 or 1_2 with or without downlink assignment) that indicates M>1 or N>1 joint/DL/UL TCI states by one or more TCI codepoints is received in one or more CORESETs associated/configured with value m or n of CORESETGroupIndex, DM-RS antenna ports for PDCCH reception(s) in one or more CORESETs could be quasi co-located with reference signals provided in the indicated Rel. 17 unified TCI state m' or n', where n∈{1,..., N} or {1,..., 2N}, m∈{1,..., M} or {1,..., 2M}, n'∈{1,..., N}, and m'∈{1,..., M}. The mapping/association between the indicated (joint or separate DL) TCI state n' or m' and CORESETGroupIndex value n or m (and therefore, the corresponding CORESET(s)) could be fixed; for example, for M=2 or N=2, when the DCI (e.g., DCI format 1_1 or 1_2 with or without downlink assignment) that indicates M>1 or N>1 joint/DL/UL TCI states by one or more TCI codepoints is received in one or more CORESETs associated/configured with value 0 (or 1) of CORESETGroupIndex, DM-RS antenna ports for PDCCH reception(s) in one or more CORESETs could be quasi co-located with reference signals provided in the first indicated Rel. 17 unified TCI state or the indicated Rel. 17 unified TCI state with the lowest TCI state ID/index, and when the DCI (e.g., DCI format 1_1 or 1_2 with or without downlink assignment) that indicates M>1 or N>1 joint/DL/UL TCI states by one or more TCI codepoints is received in one or more CORESETs associated/configured with value 1 (or 0) of CORESETGroupIndex, DM-RS antenna ports for PDCCH reception(s) in one or more CORESETs could be quasi co-located with reference signals provided in the second indicated Rel. 17 unified TCI state or the indicated Rel. 17 unified TCI state with the highest TCI state ID/index; for another example, for M=2 or N=2, when the DCI (e.g., DCI format 1_1 or 1_2 with or without downlink assignment) that indicates M>1 or N>1 joint/DL/UL TCI states by one or more TCI codepoints is received in one or more CORESETs associated/configured with value 0 (or 1, 2 or 3) of CORESETGroupIndex, DM-RS antenna ports for PDCCH reception(s) in one or more CORESETs could be quasi co-located with reference signals provided in the first indicated Rel. 17 unified TCI state or the indicated Rel. 17 unified TCI state with the lowest TCI state ID/index, when the DCI (e.g., DCI format 1_1 or 1_2 with or without downlink assignment) that indicates M>1 or N>1 joint/DL/UL TCI states by one or more TCI codepoints is received in one or more CORESETs associated/configured with value 1 (or 0, 2 or 3) of CORESETGroupIndex, DM-RS antenna ports for PDCCH reception(s) in one or more CORESETs could be quasi co-located with reference signals provided in the second indicated Rel. 17 unified TCI state or the indicated Rel. 17 unified TCI state with the highest TCI state ID/index, when the DCI (e.g., DCI format 1_1 or 1_2 with or without downlink assignment) that indicates M>1 or N>1 joint/DL/UL TCI states by one or more TCI codepoints is received in one or more CORESETs associated/configured with value 2 (or 0, 1 or 3) of CORESETGroupIndex, DM-RS antenna ports for receiving first PDCCH(s) in one or more CORESETs could be quasi co-located with reference signals provided in the first indicated Rel. 17 unified TCI state or the indicated Rel. 17 unified TCI state with the lowest TCI state ID/index, and DM-RS antenna ports for receiving second PDCCH(s) in one or more CORESETs could be quasi co-located with reference signals provided in the second indicated Rel. 17 unified TCI state or the indicated Rel. 17 unified TCI state with the highest TCI state ID/index, and when the DCI (e.g., DCI format 1_1 or 1_2 with or without downlink assignment) that indicates M>1 or N>1 joint/DL/UL TCI states by one or more TCI codepoints is received in one or more CORESETs associated/configured with value 3 (or 0, 1 or 2) of CORESETGroupIndex, DM-RS antenna ports for receiving first PDCCH(s) in one or more CORESETs could be quasi co-located with reference signals provided in the second indicated Rel. 17 unified TCI state or the indicated Rel. 17 unified TCI state with the highest TCI state ID/index, and DM-RS antenna ports for receiving second PDCCH(s) in one or more CORESETs could be quasi co-located with reference signals provided in the first indicated Rel. 17 unified TCI state or the indicated Rel. 17 unified TCI state with the lowest TCI state ID/index. In this example, the first and second PDCCHs could be linked via their (linked) search spaces provided by a higher layer parameter SearchSpaceLinking; the first (or second) PDCCH could be received in a CORESET with the lowest CORESET ID or earliest in time, and the second (or first) PDCCH could be received in a CORESET with the highest CORESET ID or latest in time.

When a UE receives from the network M>1 or N>1 Rel. 17 unified TCI states indicated by one or more TCI codepoints in a DCI (e.g., DCI format 1_1 or 1_2 with or without DL assignment) or MAC CE, in yet another example, when the DCI (e.g., DCI format 1_1 or 1_2 with or without downlink assignment) that indicates M>1 or N>1 joint/DL/UL TCI states by one or more TCI codepoints is received in one or more CORESETs associated/configured with value m or n of CORESETGroupIndex, DM-RS antenna ports for PDCCH reception(s) in one or more CORESETs associated/configured with value m' or n' of CORESETGroupIndex could be quasi co-**located** with reference signals provided in the indicated Rel. 17 unified TCI state m" or n", where n∈{1,..., N}, m∈{1,..., M}, n'∈{1,..., N}, m'∈{1,..., M}, n"∈{1,..., N}, or m"∈{1,..., M}. For example, for M=2 or N=2, when the DCI (e.g., DCI format 1_1 or 1_2 with or without downlink assignment) that indicates M>1 or N>1 joint/DL/UL TCI states by one or more TCI codepoints is received in one or more CORESETs associated/configured with value 0 (or 1) of CORESETGroupIndex, DM-RS antenna ports for PDCCH reception(s) in one or more CORESETs associated/configured with value 0 (or 1) of CORESETGroupIndex could be quasi co-located with reference signals provided in the first indicated Rel. 17 unified TCI state or the indicated Rel. 17 unified TCI state with the lowest TCI state ID/index, and DM-RS antenna ports for PDCCH reception(s) in one or more CORESETs associated/configured with value 1 (or 0) of CORESETGroupIndex could be quasi co-located with reference signals provided in the second indicated Rel. 17 unified TCI state or the indicated Rel. 17 unified TCI state with the highest TCI state ID/index. For another example, for M=2 or N=2, when the DCI (e.g., DCI format 1_1 or 1_2 with or without downlink assignment) that indicates M>1 or N>1 joint/DL/UL TCI states by one or more TCI codepoints is received in one or more CORESETs associated/configured with value 1 (or 0) of CORESETGroupIndex, DM-RS antenna ports for PDCCH reception(s) in one or more CORESETs associated/configured with value 0 (or 1) of CORESETGroupIndex could be quasi co-located with reference signals provided in the first indicated Rel. 17 unified TCI state or the indicated Rel. 17 unified TCI state with the lowest TCI state ID/index, and DM-RS antenna ports for PDCCH reception(s) in one or more CORESETs associated/configured with value 1 (or 0) of CORESETGroupIndex could be quasi co-located with reference signals provided in the second indicated Rel. 17 unified TCI state or the indicated Rel. 17 unified TCI state with the highest TCI state ID/index.

When a UE receives from the network M>1 or N>1 Rel. 17 unified TCI states indicated by one or more TCI codepoints in a DCI (e.g., DCI format 1_1 or 1_2 with or without DL assignment) or MAC CE, in yet another example, a UE could receive from the network a DCI (e.g., DCI format 1_1 or 1_2 with or without downlink assignment) that indicates at least one (joint/DL/UL) TCI state/pair of TCI states in a CORESET associated/configured with value m or n of CORESETGroupIndex, where n∈{1,..., N} and m∈{1,..., M}; for this case, DM-RS antenna ports for PDCCH reception(s) in one or more CORESETs associated/configured with value m' or n' of CORESETGroupIndex could be quasi co-located with reference signals provided in the at least one (joint/DL/UL) TCI state/pair of TCI states indicated in the DCI associated/configured with value m or n of CORESETGroupIndex, where n∈{1,..., N}, m∈{1,..., M}, n'∈{1,..., N} and m'∈{1,..., M}. For example, a UE could receive from the network a DCI (e.g., DCI format 1_1 or 1_2 with or without downlink assignment) that indicates at least one (joint/DL/UL) TCI state/pair of TCI states in a CORESET associated/configured with value 0 of CORESETGroupIndex; for this case, DM-RS antenna ports for PDCCH reception(s) in one or more CORESETs associated/configured with value 0 (or 1) of CORESETGroupIndex could be quasi co-located with reference signals provided in the at least one (joint/DL/UL) TCI state/pair of TCI states indicated in the DCI associated/configured with value 0 of CORESETGroupIndex; furthermore, a UE could receive from the network a DCI (e.g., DCI format 1_1 or 1_2 with or without downlink assignment) that indicates at least one (joint/DL/UL) TCI state/pair of TCI states in a CORESET associated/configured with value 1 of CORESETGroupIndex; for this case, DM-RS antenna ports for PDCCH reception(s) in one or more CORESETs associated/configured with value 1 (or 0) of CORESETGroupIndex could be quasi co-located with reference signals provided in the at least one (joint/DL/UL) TCI state/pair of TCI states indicated in the DCI associated/configured with value 1 of CORESETGroupIndex.

For another example, a UE could receive from the network a DCI (e.g., DCI format 1_1 or 1_2 with or without downlink assignment) that indicates at least one (joint/DL/UL) TCI state/pair of TCI states in a CORESET associated/configured with value 0 of CORESETGroupIndex; for this case, DM-RS antenna ports for PDCCH **reception(s)** in one or more CORESETs associated/configured with value 1 (or 0) of CORESETGroupIndex could be quasi co-located with reference signals provided in the at least one (joint/DL/UL) TCI state/pair of TCI states indicated in the DCI associated/configured with value 0 of CORESETGroupIndex; furthermore, a UE could receive from the network a DCI (e.g., DCI format 1_1 or 1_2 with or without downlink assignment) that indicates at least one (joint/DL/UL) TCI state/pair of TCI states in a CORESET associated/configured with value 1 of CORESETGroupIndex; for this case, DM-RS antenna ports for PDCCH reception(s) in one or more CORESETs associated/configured with value 0 (or 1) of CORESETGroupIndex could be quasi co-located with reference signals provided in the at least one (joint/DL/UL) TCI state/pair of TCI states indicated in the DCI associated/configured with value 1 of CORESETGroupIndex.

When a UE receives from the network M>1 or N>1 Rel. 17 unified TCI states indicated by one or more TCI codepoints in a DCI (e.g., DCI format 1_1 or 1_2 with or without DL assignment) or MAC CE, in yet another example, DM-RS antenna ports for PDCCH reception(s), e.g., in the same CORESET or different CORESETs associated with the same CORESETPoolIndex value (e.g., 0) - if applicable/configured - or the same search space (set), could be quasi co-located with reference signals provided in the indicated Rel. 17 unified TCI state n or m, where n∈{1,..., N} and m∈{1,..., M}. For example, the UE could receive, in a MAC CE command, the TCI state index/ID n or m, where n∈{1,..., N} and m∈{1,..., M}. For another example, a MAC CE command could contain/include/indicate/provide a bitmap of length N (or M) with each bit/bit position in the bitmap corresponding to an indicated Rel. 17 unified TCI state; for this case, the UE could receive from the network, in the MAC CE command, the bitmap with the n-th (or m-th) bit/bit position set to "1," where n∈{1,..., N} and m∈{1,..., M}. Yet for another example, for N=2 or M=2, a MAC CE command could contain/indicate/provide/correspond to a one-bit flag indicator with "0" (or "1") indicating that DM-RS antenna ports for PDCCH reception(s), e.g., in the same CORESET or different CORESETs associated with the same CORESETPoolIndex value (e.g., 0) - if applicable/configured - or in the same search space (set), could be quasi co-located with reference signals provided in the first indicated Rel. 17 unified TCI state or the indicated Rel. 17 unified TCI state with the lowest (or highest) TCI state ID/index, and "1" (or "0") indicating that DM-RS antenna ports for PDCCH reception(s), e.g., in the same CORESET or different CORESETs associated with the same CORESETPoolIndex value (e.g., 0) - if applicable/configured - or in the same search space (set), could be quasi co-located with reference signals provided in the second indicated Rel. 17 unified TCI state or the indicated Rel. 17 unified TCI state with the highest (or lowest) TCI state ID/index; or vice versa.

Yet for another example, a MAC CE command could include/indicate/contain/provide/correspond to a multi-bit indicator (e.g., a 2-bit indicator with four-bit fields "00," "01," "10," and "11"). For instance, if the bit field of the multi-bit indicator is set to "00" (or "01," "10," or "11"), DM-RS antenna ports for PDCCH reception(s), e.g., in the same CORESET or different CORESETs associated with the same CORESETPoolIndex value (e.g., 0) - if applicable/configured - or in the same search space (set), could be quasi co-located with reference signals provided in the first indicated Rel. 17 unified TCI state or the indicated Rel. 17 unified TCI state with the lowest (or highest) TCI state ID/index; if the bit field of the multi-bit indicator is set to "01" (or "00," "10," or "11"), DM-RS antenna ports for PDCCH reception(s), e.g., in the same CORESET or different CORESETs associated with the same CORESETPoolIndex value (e.g., 0) - if applicable/configured - or in the same search space (set), could be quasi co-located with reference signals provided in the second indicated Rel. 17 unified TCI state or the indicated Rel. 17 unified TCI state with the highest (or lowest) TCI state ID/index; if the bit field of the multi-bit indicator is set to "10" (or "00," "01," or "11"), DM-RS antenna ports for receiving first PDCCH(s), e.g., in the same CORESET or different CORESETs associated with the same CORESETPoolIndex value (e.g., 0) - if applicable/configured - or in the same search space (set), could be quasi co-located with reference signals provided in the first indicated Rel. 17 unified TCI state or the indicated Rel. 17 unified TCI state with the lowest (or highest) TCI state ID/index, and DM-RS antenna ports for receiving second PDCCH(s), e.g., in the same CORESET or different CORESETs associated with the same CORESETPoolIndex value (e.g., 0) - if applicable/configured - or in the same search space (set), could be quasi co-located with reference signals provided in the second indicated Rel. 17 unified TCI state or the indicated Rel. 17 unified TCI state with the highest (or lowest) TCI state ID/index; if the bit field of the multi-bit indicator is set to **"11"** (or "00," "01," or "10"), DM-RS antenna ports for receiving first PDCCH(s), e.g., in the same CORESET or different CORESETs associated with the same CORESETPoolIndex value (e.g., 0) - if applicable/configured - or in the same search space (set), could be quasi co-located with reference signals provided in the second indicated Rel. 17 unified TCI state or the indicated Rel. 17 unified TCI state with the highest (or lowest) TCI state ID/index, and DM-RS antenna ports for receiving second PDCCH(s), e.g., in the same CORESET or different CORESETs associated with the same CORESETPoolIndex value (e.g., 0) - if applicable/configured - or in the same search space (set), could be quasi co-located with reference signals provided in the first indicated Rel. 17 unified TCI state or the indicated Rel. 17 unified TCI state with the lowest (or highest) TCI state ID/index.

In this example, the first and second PDCCHs could be linked via their (linked) search spaces provided by a higher layer parameter SearchSpaceLinking; the first (or second) PDCCH could be received in a CORESET with the lowest CORESET ID or earliest in time, and the second (or first) PDCCH could be received in a CORESET with the highest CORESET ID or latest in time. Furthermore, in the above discussed design examples, the MAC CE command could correspond to the first MAC CE activation command that activates one or more (joint/DL/UL) TCI states from one or more higher layer RRC configured lists/sets/pools of TCI states and maps them to up to Ntci_max (e.g., Ntci_max=8, 16, 24, 32 or 64) TCI codepoints of one or more TCI fields in the DCI (e.g., DCI format 1_1 or 1_2 with or without DL assignment) for beam indication/update.

When a UE receives from the network M>1 or N>1 Rel. 17 unified TCI states indicated by one or more TCI codepoints in a DCI (e.g., DCI format 1_1 or 1_2 with or without DL assignment) or MAC CE, in yet another example, DM-RS antenna ports for PDCCH reception(s) in one or more CORESETs associated/configured with value m or n of CORESETGroupIndex could be quasi co-located with reference signals provided in the indicated Rel. 17 unified TCI state m' or n', where n∈{1,..., N}, m∈{1,..., M}, n'∈{1,..., N}, and m'∈{1,..., M}. The UE could receive from the network, via a MAC CE command, the mapping/association between the indicated (joint or separate DL) TCI state n' or m' and CORESETGroupIndex value n or m (and therefore, the corresponding CORESET(s)).

For example, a set/list of M>1 or N>1 TCI state indexes/IDs could be provided in the MAC CE command to the UE; for this case, the m'-th (or n'-th) entry in the set/list of TCI state indexes/IDs could be associated with value m (or n) of CORESETGroupIndex provided in the PDCCH-Config, where m=m'=1,..., M and n=n'=1,..., N. For another example, the TCI state index/ID n' (or m') could be provided, in the MAC CE command associated with value n (or m) of CORESETGroupIndex, to the UE; here, the MAC CE command could indicate/include/configure/incorporate value n (or m) of CORESETGroupIndex.

Yet for another example, a bitmap of length N (or M) with each bit/bit position in the bitmap corresponding to an indicated Rel. 17 unified TCI state could be provided, e.g., in the MAC CE command associated with a CORESETGroupIndex value, to the UE; for this case, the bitmap with the n'-th (or m'-th) bit/bit position set to "1" could be provided, in the MAC CE command associated with value n (or m) of CORESETGroupIndex, to the UE; here, the MAC CE command could indicate/include/configure/incorporate a value - e.g., value n (or m) - of CORESETGroupIndex.

Yet for another example, the UE could be provided, in the MAC CE command, a one-bit indicator; for this case, if the one-bit indicator is set to "0" (or "1"), DM-RS antenna ports for PDCCH reception(s) in one or more CORESETs associated/configured with value 0 of CORESETGroupIndex could be quasi co-located with reference signals provided in the first indicated Rel. 17 unified TCI state or the indicated Rel. 17 unified TCI state with the lowest TCI state ID/index, and DM-RS antenna ports for PDCCH reception(s) in one or more CORESETs associated/configured with value 1 of CORESETGroupIndex could be quasi co-located with reference signals provided in the second indicated Rel. 17 unified TCI state or the indicated Rel. 17 unified TCI state with the highest TCI state ID/index; alternatively, if the one-bit indicator is set to "1" (or "0"), DM-RS antenna ports for PDCCH reception(s) in one or more CORESETs associated/configured with value 0 of CORESETGroupIndex could be quasi co-located with reference signals provided in the second indicated Rel. 17 unified TCI state or the indicated Rel. 17 unified TCI state with the highest TCI state ID/index, and DM-RS antenna ports for PDCCH reception(s) in one or more CORESETs associated/configured with value 1 of CORESETGroupIndex could be quasi co-located with reference signals provided in the first indicated Rel. 17 unified TCI state or the indicated Rel. 17 unified TCI state with the lowest TCI state ID/index.

Furthermore, in the above discussed design examples, the MAC CE command could correspond to the first MAC CE activation command that activates one or more (joint/DL/UL) TCI states from one or more higher layer RRC configured lists/sets/pools of TCI states and maps them to up to Ntci_max (e.g., Ntci_max=8, 16, 24, 32 or 64) TCI codepoints of one or more TCI fields in the DCI (e.g., DCI format 1_1 or 1_2 with or without DL assignment) for beam indication/update.

When a UE receives from the network M>1 or N>1 Rel. 17 unified TCI states indicated by one or more TCI codepoints in a DCI (e.g., DCI format 1_1 or 1_2 with or without DL assignment) or MAC CE, in yet another example, when the first MAC CE activation command that activates one or more (joint/DL/UL) TCI states from one or more higher layer RRC configured lists/sets/pools of TCI states and maps them to up to Ntci_max (e.g., Ntci_max=8, 16, 24, 32 or 64) TCI codepoints of one or more **TCI fields** in the DCI (e.g., DCI format 1_1 or 1_2 with or without DL assignment) for beam indication/update is associated with value m or n of CORESETGroupIndex, DM-RS antenna ports for PDCCH reception(s) in one or more CORESETs could be quasi co-located with reference signals provided in the indicated Rel. 17 unified TCI state m' or n', where n∈{1,..., N} or {1,..., 2N}, m∈{1,..., M} or {1,..., 2M}, n'∈{1,..., N}, and m'∈{1,..., M}. The mapping/association between the indicated (joint or separate DL) TCI state n' or m' and CORESETGroupIndex value n or m (and therefore, the corresponding CORESET(s)) could be fixed; for example, for M=2 or N=2, when the first MAC CE activation command that activates one or more (joint/DL/UL) TCI states from one or more higher layer RRC configured lists/sets/pools of TCI states and maps them to up to Ntci_max (e.g., Ntci_max=8, 16, 24, 32 or 64) TCI codepoints of one or more TCI fields in the DCI (e.g., DCI format 1_1 or 1_2 with or without DL assignment) for beam indication/update is associated with value 0 (or 1) of CORESETGroupIndex, DM-RS antenna ports for PDCCH reception(s) in one or more CORESETs could be quasi co-located with reference signals provided in the first indicated Rel. 17 unified TCI state or the indicated Rel. 17 unified TCI state with the lowest TCI state ID/index, and when the first MAC CE activation command that activates one or more (joint/DL/UL) TCI states from one or more higher layer RRC configured lists/sets/pools of TCI states and maps them to up to Ntci_max (e.g., Ntci_max=8, 16, 24, 32 or 64) TCI codepoints of one or more TCI fields in the DCI (e.g., DCI format 1_1 or 1_2 with or without DL assignment) for beam indication/update is associated with value 1 (or 0) of CORESETGroupIndex, DM-RS antenna ports for PDCCH reception(s) in one or more CORESETs could be quasi co-located with reference signals provided in the second indicated Rel. 17 unified TCI state or the indicated Rel. 17 unified TCI state with the highest TCI state ID/index; for another example, for M=2 or N=2, when the first MAC CE activation command that activates one or more (joint/DL/UL) TCI states from one or more higher layer RRC configured lists/sets/pools of TCI states and maps them to up to Ntci_max (e.g., Ntci_max=8, 16, 24, 32 or 64) TCI codepoints of one or more TCI fields in the DCI (e.g., DCI format 1_1 or 1_2 with or without DL assignment) for beam indication/update is associated with value 0 (or **1,** 2 or 3) of CORESETGroupIndex, DM-RS antenna ports for PDCCH reception(s) in one or more CORESETs could be quasi co-located with reference signals provided in the first indicated Rel. 17 unified TCI state or the indicated Rel. 17 unified TCI state with the lowest TCI state ID/index, when the first MAC CE activation command that activates one or more (joint/DL/UL) TCI states from one or more higher layer RRC configured lists/sets/pools of TCI states and maps them to up to Ntci_max (e.g., Ntci_max=8, 16, 24, 32 or 64) TCI codepoints of one or more TCI fields in the DCI (e.g., DCI format 1_1 or 1_2 with or without DL assignment) for beam indication/update is associated with value 1 (or 0, 2 or 3) of CORESETGroupIndex, DM-RS antenna ports for PDCCH reception(s) in one or more CORESETs could be quasi co-located with reference signals provided in the second indicated Rel. 17 unified TCI state or the indicated Rel. 17 unified TCI state with the highest TCI state ID/index, when the first MAC CE activation command that activates one or more (joint/DL/UL) TCI states from one or more higher layer RRC configured lists/sets/pools of TCI states and maps them to up to Ntci_max (e.g., Ntci_max=8, 16, 24, 32 or 64) TCI codepoints of one or more TCI fields in the DCI (e.g., DCI format 1_1 or 1_2 with or without DL assignment) for beam indication/update is associated with value 2 (or 0, 1 or 3) of CORESETGroupIndex, DM-RS antenna ports for receiving first PDCCH(s) in one or more CORESETs could be quasi co-located with reference signals provided in the first indicated Rel. 17 unified TCI state or the indicated Rel. 17 unified TCI state with the lowest TCI state ID/index, and DM-RS antenna ports for receiving second PDCCH(s) in one or more CORESETs could be quasi co-located with reference signals provided in the second indicated Rel. 17 unified TCI state or the indicated Rel. 17 unified TCI state with the highest TCI state ID/index, and when the first MAC CE activation command that activates one or more (joint/DL/UL) TCI states from one or more higher layer RRC configured lists/sets/pools of TCI states and maps them to up to Ntci_max (e.g., Ntci_max=8, 16, 24, 32 or 64) TCI codepoints of one or more TCI fields in the DCI (e.g., DCI format 1_1 or 1_2 with or without DL assignment) for beam indication/update is associated with value 3 (or 0, 1 or 2) of CORESETGroupIndex, DM-RS antenna ports for receiving first PDCCH(s) in one or more CORESETs could be quasi co-located with reference signals provided in the second indicated Rel. 17 unified TCI state or the indicated Rel. 17 unified TCI state with the highest TCI state ID/index, and DM-RS antenna ports for receiving second PDCCH(s) in one or more CORESETs could be quasi co-located with reference signals provided in the first indicated Rel. 17 unified TCI state or the indicated Rel. 17 unified TCI state with the lowest TCI state ID/index. In this example, the first and second PDCCHs could be linked via their (linked) search spaces provided by a higher layer parameter SearchSpaceLinking; the first (or second) PDCCH could be received in a CORESET with the lowest CORESET ID or earliest in time, and the second (or first) PDCCH could be received in a CORESET with the highest CORESET ID or latest in time.

Furthermore, in the above discussed design examples, the first MAC CE activation command is associated with value n (or m) of CORESETGroupIndex according to at least one of: (1) the first MAC CE activation command is received in PDSCH(s) scheduled by or associated with one or more CORESETs associated/configured with value n (or m) of CORESETGroupIndex; or (2) the first MAC CE activation command could indicate/include/incorporate value n (or m) of CORESETGroupIndex.

When a UE receives from the network M>1 or N>1 Rel. 17 unified TCI states indicated by one or more TCI codepoints in a DCI (e.g., DCI format 1_1 or 1_2 with or without DL assignment) or MAC CE, in yet another example, when the first MAC CE activation command that activates one or more (joint/DL/UL) TCI states from one or more higher layer RRC configured lists/sets/pools of TCI states and maps them to up to Ntci_max (e.g., Ntci_max=8, 16, 24, 32 or 64) TCI codepoints of one or more TCI fields in the DCI (e.g., DCI format 1_1 or 1_2 with or without DL assignment) for beam indication/update is associated with value m or n of CORESETGroupIndex, DM-RS antenna ports for PDCCH reception(s) in one or more CORESETs associated/configured with value m' or n' of CORESETGroupIndex could be quasi co-located with reference signals provided in the indicated Rel. 17 unified TCI state m" or n", where n∈{1,..., N}, m∈{1,..., M}, n'∈{1,..., N}, m'∈{1,..., M}, n"∈{1,..., N}, or m"∈{1,..., M}. For example, for M=2 or N=2, when the first MAC CE activation command that activates one or more (joint/DL/UL) TCI states from one or more higher layer RRC configured lists/sets/pools of TCI states and maps them to up to Ntci_max (e.g., Ntci_max=8, 16, 24, 32 or 64) TCI codepoints of one or more TCI fields in the DCI (e.g., DCI format 1_1 or 1_2 with or without DL assignment) for beam indication/update is associated with value 0 (or 1) of CORESETGroupIndex, DM-RS antenna ports for PDCCH reception(s) in one or more CORESETs associated/configured with value 0 (or 1) of CORESETGroupIndex could be quasi co-located with reference signals provided in the first indicated Rel. 17 unified TCI state or the indicated Rel. 17 unified TCI state with the lowest TCI state ID/index, and DM-RS antenna ports for PDCCH reception(s) in one or more CORESETs associated/configured with value 1 (or 0) of CORESETGroupIndex could be quasi co-located with reference signals provided in the second indicated Rel. 17 unified TCI state or the indicated Rel. 17 unified TCI state with the highest TCI state ID/index.

For another example, for M=2 or N=2, when the first MAC CE activation command that activates one or more (joint/DL/UL) TCI states from one or more higher layer RRC configured lists/sets/pools of TCI states and maps them to up to Ntci_max (e.g., Ntci_max=8, 16, 24, 32 or 64) TCI codepoints of one or more TCI fields in the DCI (e.g., DCI format 1_1 or 1_2 with or without DL assignment) for beam indication/update is associated with value 1 (or 0) of CORESETGroupIndex, DM-RS antenna ports for PDCCH reception(s) in one or more CORESETs associated/configured with value 0 (or 1) of CORESETGroupIndex could be quasi co-located with reference signals provided in the first indicated Rel. 17 unified TCI state or the indicated Rel. 17 unified TCI state with the lowest TCI state ID/index, and DM-RS antenna ports for PDCCH reception(s) in one or more CORESETs associated/configured with value 1 (or 0) of CORESETGroupIndex could be quasi co-located with reference signals provided in the second indicated Rel. 17 unified TCI state or the indicated Rel. 17 unified TCI state with the highest TCI state ID/index.

Furthermore, in the above discussed design examples, the first MAC CE activation command is associated with value n (or m) of CORESETGroupIndex according to at least one of: (1) the first MAC CE activation command is received in PDSCH(s) scheduled by or associated with one or more CORESETs associated/configured with value n (or m) of CORESETGroupIndex; or (2) the first MAC CE activation command could indicate/include/incorporate value n (or m) of CORESETGroupIndex.

When a UE receives from the network M>1 or N>1 Rel. 17 unified TCI states indicated by one or more TCI codepoints in a DCI (e.g., DCI format 1_1 or 1_2 with or without DL assignment) or MAC CE, in yet another example, a UE could receive from the network a first MAC CE activation command associated with value m or n of CORESETGroupIndex that indicates at least one (joint/DL/UL) TCI state/pair of TCI states, where n∈{1,..., N} and m∈{1,..., M}; for this case, DM-RS antenna ports for PDCCH reception(s) in one or more CORESETs associated/configured with value m' or n' of CORESETGroupIndex could be quasi co-located with reference signals provided in the at least one (joint/DL/UL) TCI state/pair of TCI states indicated in the first MAC CE activation command associated with value m or n of CORESETGroupIndex, where n∈{1,..., N}, m∈{1,..., M}, n'∈{1,..., N} and m'∈{1,..., M}. For example, a UE could receive from the network a first MAC CE activation command associated with value 0 of CORESETGroupIndex that indicates at least one (joint/DL/UL) TCI state/pair of TCI states; for this case, DM-RS antenna ports for PDCCH reception(s) in one or more CORESETs associated/configured with value 0 (or 1) of CORESETGroupIndex could be quasi co-located with reference signals provided in the at least one (joint/DL/UL) TCI state/pair of TCI states indicated in the first MAC CE activation command associated with value 0 of CORESETGroupIndex; furthermore, a UE could receive from the network a first MAC CE activation command associated with value 1 of CORESETGroupIndex that indicates at least one (joint/DL/UL) TCI state/pair of TCI states; for this case, DM-RS antenna ports for PDCCH reception(s) in one or more CORESETs associated/configured with value 1 (or 0) of CORESETGroupIndex could be quasi co-located with reference signals provided in the at least one (joint/DL/UL) TCI state/pair of TCI states indicated in the first MAC CE activation command associated with value 1 of CORESETGroupIndex.

For another example, a UE could receive from the network a first MAC CE activation command associated with value 0 of CORESETGroupIndex that indicates at least one (joint/DL/UL) TCI state/pair of TCI states; for this case, DM-RS antenna ports for PDCCH reception(s) in one or more CORESETs associated/configured with value 1 (or 0) of CORESETGroupIndex could be quasi co-located with reference signals provided in the at least one (joint/DL/UL) TCI state/pair of TCI states indicated in the first MAC CE activation command associated with value 0 of CORESETGroupIndex; furthermore, a UE could receive from the network a first MAC CE activation command associated with value 1 of CORESETGroupIndex that indicates at least one (joint/DL/UL) TCI state/pair of TCI states; for this case, DM-RS antenna ports for PDCCH reception(s) in one or more CORESETs associated/configured with value 0 (or 1) of CORESETGroupIndex could be quasi co-located with reference signals provided in the at least one (joint/DL/UL) TCI state/pair of TCI states indicated in the first MAC CE command associated with value 1 of CORESETGroupIndex.

When a UE receives from the network M>1 or N>1 Rel. 17 unified TCI states indicated by one or more TCI codepoints in a DCI (e.g., DCI format 1_1 or 1_2 with or without DL assignment) or MAC CE, in yet another example, DM-RS antenna ports for PDCCH reception(s), e.g., in the same CORESET or different CORESETs associated with the same CORESETPoolIndex value (e.g., 0) - if applicable/configured - or the same search space (set), could be quasi co-located with reference signals provided in the indicated Rel. 17 unified TCI state n or m, where n∈{1,..., N} and m∈{1,..., M}. For example, the UE could receive, in a DCI (e.g., DCI format 1_1 or 1_2 with or without DL assignment), the TCI state index/ID n or m indicated by one or more bits of one or more DCI fields in the DCI, where n∈{1,..., N} and m∈{1,..., M}.

For another example, a DCI (e.g., DCI format 1_1 or 1_2 with or without DL assignment) could contain/include/indicate/provide a bitmap of length N (or M) with each bit/bit position in the bitmap corresponding to an indicated Rel. 17 unified TCI state, wherein the bitmap could be indicated by one or more bits of one or more DCI fields in the DCI; for this case, the UE could receive from the network, in the DCI (e.g., DCI format 1_1 or 1_2 with or without DL assignment), the bitmap - indicated by one or more bits of one or more DCI fields in the DCI - with the n-th (or m-th) bit/bit position set to "1," where n∈{1,..., N} and m∈{1,..., M}. Yet for another example, for N=2 or M=2, a DCI (e.g., DCI format 1_1 or 1_2 with or without DL assignment) could contain/indicate/provide/correspond to a one-bit flag indicator with "0" (or "1") indicating that DM-RS antenna ports for PDCCH reception(s), e.g., in the same CORESET or different CORESETs associated with the same CORESETPoolIndex value (e.g., 0) - if applicable/configured - or in the same search space (set), could be quasi co-located with reference signals provided in the first indicated Rel. 17 unified TCI state or the indicated Rel. 17 unified TCI state with the lowest (or highest) TCI state ID/index, and "1" (or "0") indicating that DM-RS antenna ports for PDCCH reception(s), e.g., in the same CORESET or different CORESETs associated with the same CORESETPoolIndex value (e.g., 0) - if applicable/configured - or in the same search space (set), could be quasi co-located with reference signals provided in the second indicated Rel. 17 unified TCI state or the indicated Rel. 17 unified TCI state with the highest (or lowest) TCI state ID/index, wherein the one-bit flag indicator could be indicated by one or more bits of one or more DCI fields in the DCI; or vice versa.

Yet for another example, a DCI (e.g., DCI format 1_1 or 1_2 with or without DL assignment) could include/indicate/contain/provide/correspond to a multi-bit indicator (e.g., a 2-bit indicator with four bit fields "00," "01," "10," and "11"), wherein the multi-bit indicator could be indicated by one or more bits of one or more DCI fields in the DCI. For instance, if the bit field of the multi-bit indicator is set to "00" (or "01," "10," or "11"), DM-RS antenna ports for PDCCH reception(s), e.g., in the same CORESET or different CORESETs associated with the same CORESETPoolIndex value (e.g., 0) - if applicable/configured - or in the same search space (set), could be quasi co-located with reference signals provided in the first indicated Rel. 17 unified TCI state or the indicated Rel. 17 unified TCI state with the lowest (or highest) TCI state ID/index; if the bit field of the multi-bit indicator is set to "01" (or "00," "10," or "11"), DM-RS antenna ports for PDCCH reception(s), e.g., in the same CORESET or different CORESETs associated with the same CORESETPoolIndex value (e.g., 0) - if applicable/configured - or in the same search space (set), could be quasi co-located with reference signals provided in the second indicated Rel. 17 unified TCI state or the indicated Rel. 17 unified TCI state with the highest (or lowest) TCI state ID/index; if the bit field of the multi-bit indicator is set to "10" (or "00," "01," "11"), DM-RS antenna ports for receiving first PDCCH(s), e.g., in the same CORESET or different CORESETs associated with the same CORESETPoolIndex value (e.g., 0) - if applicable/configured - or in the same search space (set), could be quasi co-located with reference signals provided in the first indicated Rel. 17 unified TCI state or the indicated Rel. 17 unified TCI state with the lowest (or highest) TCI state ID/index, and DM-RS antenna ports for receiving second PDCCH(s), e.g., in the same CORESET or different CORESETs associated with the same CORESETPoolIndex value (e.g., 0) - if applicable/configured - or in the same search space (set), could be quasi co-located with reference signals provided in the second indicated Rel. 17 unified TCI state or the indicated Rel. 17 unified TCI state with the highest (or lowest) TCI state ID/index; if the bit field of the multi-bit indicator is set to "11" (or "00," "01," "10"), DM-RS antenna ports for receiving first PDCCH(s), e.g., in the same CORESET or different CORESETs associated with the same CORESETPoolIndex value (e.g., 0) - if applicable/configured - or in the same search space (set), could be quasi co-located with reference signals provided in the second indicated Rel. 17 unified TCI state or the indicated Rel. 17 unified TCI state with the highest (or lowest) TCI state ID/index, and DM-RS antenna ports for receiving second PDCCH(s), e.g., in the same CORESET or different CORESETs associated with the same CORESETPoolIndex value (e.g., 0) - if applicable/configured - or in the same search space (set), could be quasi co-located with reference signals provided in the first indicated Rel. 17 unified TCI state or the indicated Rel. 17 unified TCI state with the lowest (or highest) TCI state ID/index.

In this example, the first and second PDCCHs could be linked via their (linked) search spaces provided by a higher layer parameter SearchSpaceLinking; the first (or second) PDCCH could be received in a CORESET with the lowest CORESET ID or earliest in time, and the second (or first) PDCCH could be received in a CORESET with the highest CORESET ID or latest in time. Furthermore, in the above discussed design examples, the one or more DCI fields could correspond to: (1) one or more new/dedicated DCI fields introduced in the DCI format 1_1 or 1_2, which are different from the existing DCI fields in the DCI format 1_1 or 1_2, or (2) one or more existing DCI fields in the DCI format 1_1 or 1_2 repurposed to indicate the necessary TCI state information/QCL assumption.

When a UE receives from the network M>1 or N>1 Rel. 17 unified TCI states indicated by one or more TCI codepoints in a DCI (e.g., DCI format 1_1 or 1_2 with or without DL assignment) or MAC CE, in yet another example, DM-RS antenna ports for PDCCH reception(s) in one or more CORESETs associated/configured with value m or n of CORESETGroupIndex could be quasi co-located with reference signals provided in the indicated Rel. 17 unified TCI state m' or n', where n∈{1,..., N}, m∈{1,..., M}, n'∈{1,..., N}, and m'∈{1,..., M}. The UE could receive from the network, in a DCI (e.g., DCI format 1_1 or 1_2 with or without DL assignment), the mapping/association between the indicated (joint or separate DL) TCI state n' or m' and CORESETGroupIndex value n or m (and therefore, the corresponding CORESET(s)).

For example, a set/list of M>1 or N>1 TCI state indexes/IDs could be indicated by one or more bits of one or more DCI fields in the DCI and provided to the UE; for this case, the m'-th (or n'-th) entry in the set/list of TCI state indexes/IDs could be associated with value m (or n) of CORESETGroupIndex provided in the PDCCH-Config, where m=m'=1,..., M and n=n'=1,..., N. For another example, the TCI state index/ID n' (or m') could be indicated by one or more bits of one or more DCI fields in a DCI (e.g., DCI format 1_1 or 1_2 with or without DL assignment) received in a CORESET associated/configured with value n (or m) of CORESETGroupIndex.

Yet for another example, a bitmap of length N (or M) with each bit/bit position in the bitmap corresponding to an indicated Rel. 17 unified TCI state could be indicated by one or more bits of one or more DCI fields in a DCI (e.g., DCI format 1_1 or 1_2 with or without DL assignment) received in a CORESET associated/configured with a CORESETGroupIndex value; for this case, the bitmap with the n'-th (or m'-th) bit/bit position set to "1" could be indicated by one or more bits of one or more DCI fields in a DCI (e.g., DCI format 1_1 or 1_2 with or without DL assignment) received in a CORESET associated/configured with value n (or m) of CORESETGroupIndex.

Yet for another example, the UE could be provided/indicated, in a DCI (e.g., DCI format 1_1 or 1_2 with or without DL assignment), a one-bit indicator indicated by one or more bits of one or more DCI fields in the DCI; for this case, if the one-bit indicator is set to "0" (or "1"), DM-RS antenna ports for PDCCH reception(s) in one or more CORESETs associated/configured with value 0 of CORESETGroupIndex could be quasi co-located with reference signals provided in the first indicated Rel. 17 unified TCI state or the indicated Rel. 17 unified TCI state with the lowest TCI state ID/index, and DM-RS antenna ports for PDCCH reception(s) in one or more CORESETs associated/configured with value 1 of CORESETGroupIndex could be quasi co-located with reference signals provided in the second indicated Rel. 17 unified TCI state or the indicated Rel. 17 unified TCI state with the highest TCI state ID/index; alternatively, if the one-bit indicator is set to "1" (or "0"), DM-RS antenna ports for PDCCH reception(s) in one or more CORESETs associated/configured with value 0 of CORESETGroupIndex could be quasi co-located with reference signals provided in the second indicated Rel. 17 unified TCI state or the indicated Rel. 17 unified TCI state with the highest TCI state ID/index, and DM-RS antenna ports for PDCCH reception(s) in one or more CORESETs associated/configured with value 1 of CORESETGroupIndex could be quasi co-located with reference signals provided in the first indicated Rel. 17 unified TCI state or the indicated Rel. 17 unified TCI state with the lowest TCI state ID/index.

Furthermore, in the above discussed design examples, the one or more DCI fields could correspond to: (1) one or more new/dedicated DCI fields introduced in the DCI format 1_1 or 1_2, which are different from the existing DCI fields in the DCI format 1_1 or 1_2, or (2) one or more existing DCI fields in the DCI format 1_1 or 1_2 repurposed to indicate the necessary TCI state information/QCL assumption.

When a UE receives from the network M>1 or N>1 Rel. 17 unified TCI states indicated by one or more TCI codepoints in a DCI (e.g., DCI format 1_1 or 1_2 with or without DL assignment) or MAC CE, in yet another example, DM-RS antenna ports for PDCCH reception(s), e.g., in the same CORESET or different CORESETs associated with the same CORESETPoolIndex value (e.g., 0) - if applicable/configured - or the same search space (set), could be quasi co-located with reference signals provided in the indicated Rel. 17 unified TCI state n or m, where n∈{1,..., N} and m∈{1,..., M}.

For example, the UE could receive from the network a MAC CE indicating TCI state index/ID corresponding to the Rel. 17 unified TCI state n (or m) among the N>1 (or M>1) Rel. 17 unified TCI states indicated by a codepoint in a DCI or MAC CE. For another example, the UE could receive from the network a second MAC CE activation command to activate the Rel. 17 unified TCI state n (or m) from the N>1 (or M>1) Rel. 17 unified TCI states indicated by a codepoint in a DCI or MAC CE. For example, the second MAC CE activation command could correspond to a bitmap **of length** N (or M) with each bit/bit position in the bitmap corresponding to an indicated Rel. 17 unified TCI state. For this case, the UE could receive from the network the bitmap with the n-th (or m-th) bit/bit position set to "1." Yet for another example, for N=2 or M=2, the second MAC CE activation command could contain/correspond to a one-bit flag indicator with "0" indicating that DM-RS antenna ports for PDCCH receptions in the same or different CORESETs associated with the same CORESETPoolIndex value (e.g., 0), if applicable/configured, could be quasi co-located with reference signals provided in the first indicated Rel. 17 unified TCI state or the indicated Rel. 17 unified TCI state with the lowest (or highest) TCI state ID/index, and "1" indicating that DM-RS antenna ports for PDCCH receptions in the same or different CORESETs associated with the same CORESETPoolIndex value (e.g., 0), if applicable/configured, could be quasi co-located with reference signals provided in the second indicated Rel. 17 unified TCI state or the indicated Rel. 17 unified TCI state with the highest (or lowest) TCI state ID/index, or vice versa. The second MAC CE activation command could be the same as the first MAC CE activation command used for activating one or more codepoints from a set/pool of codepoints to indicate the N>1 (M>1) unified TCI states as discussed above.

When a UE receives from the network M>1 or N>1 Rel. 17 unified TCI states indicated by one or more TCI codepoints in a DCI (e.g., DCI format 1_1 or 1_2 with or without DL assignment) or MAC CE, in yet another example, the higher layer parameter TCI-State or QCL-Info or DLorJoint-TCIState that configures an indicated Rel. 17 unified TCI state, could include a "CORESET indicator" field. For example, if the "CORESET indicator" in the higher layer parameter TCI-State or QCL-Info or DLorJoint-TCIState that configures the indicated Rel. 17 unified TCI state n (or m) is set to "enabled," DM-RS antenna ports for PDCCH reception(s), e.g., in the same CORESET or different CORESETs associated with the same CORESETPoolIndex value (e.g., 0) - if applicable/configured - or the same search space (set), could be quasi co-located with reference signals provided in the indicated Rel. 17 unified TCI state n (or m), where n∈{1,..., N} and m∈{1,..., M}. For another example, the "CORESET indicator" field could indicate CORESETPoolIndex value(s).

For this case, if the "CORESET indicator" field in the higher layer parameter TCI-State or QCL-Info or DLorJoint-TCIState that configures the indicated Rel. 17 unified TCI state n (or m) indicates value 0 of CORESETPoolIndex, DM-RS antenna ports for PDCCH reception(s), e.g., in the same CORESET or different CORESETs associated with the same CORESETPoolIndex value (e.g., 0) - if applicable/configured - or the same search space (set), could be quasi co-located with reference signals provided in the indicated Rel. 17 unified TCI state n (or m), where n∈{1,..., N} and m∈{1,..., M}. Yet for another example, the "CORESET indicator" field could correspond to a one-bit flag indicator.

For this case, if the "CORESET indicator" field in the higher layer parameter TCI-State or QCL-Info or DLorJoint-TCIState that configures the indicated Rel. 17 unified TCI state n (or m) indicates logical "1," DM-RS antenna ports for PDCCH reception(s), e.g., in the same CORESET or different CORESETs associated with the same CORESETPoolIndex value (e.g., 0) - if applicable/configured - or the same search space (set), could be quasi co-located with reference signals provided in the indicated Rel. 17 unified TCI state n (or m), where n∈{1,..., N} and m∈{1,..., M}. Yet for another example, the "CORESET indicator" field could be an entity ID/index corresponding to a PCI, TRP ID/index, a PCI index pointing to an entry/PCI in a higher layer configured list of PCIs and etc.

For this case, if the "CORESET indicator" field in the higher layer parameter TCI-State or QCL-Info or DLorJoint-TCIState that configures the indicated Rel. 17 unified TCI state n (or m) indicates a designated entity ID/index - e.g., the serving cell PCI/PCI index, a PCI/PCI index other than the serving cell PCI/PCI index or the first TRP, DM-RS antenna ports for PDCCH reception(s), e.g., in the same CORESET or different CORESETs associated with the same CORESETPoolIndex value (e.g., 0) - if applicable/configured - or the same search space (set), could be quasi co-located with reference signals provided in the indicated Rel. 17 unified TCI state n (or m), where n∈{1,..., N} and m∈{1,..., M}.

When a UE receives from the network M>1 or N>1 Rel. 17 unified TCI states indicated by one or more TCI codepoints in a DCI (e.g., DCI format 1_1 or 1_2 with or without DL assignment) or MAC CE, in yet another example, DM-RS antenna ports for PDCCH reception(s), e.g., in the same CORESET or different CORESETs associated with the same CORESETPoolIndex value (e.g., 0) - if applicable/configured - or the same search space (set), could be quasi co-located with reference signals provided in the indicated Rel. 17 unified TCI state n or m, where n∈{1,..., N} and m∈{1,..., M}. In this example, the DCI format (e.g., DCI format 1_1 or 1_2 with or without DL assignment) could include a "CORESET indicator" field. The "CORESET indicator" field could be configured in the same DCI format indicating the N>1 or M>1 Rel. 17 unified TCI states.

For example, the "CORESET indicator" field in the DCI format could indicate the TCI state index/ID n (or m) among the N>1 (or M>1) indicated Rel. 17 unified TCI states, where n∈{1,..., N} and m∈{1,..., M}. For another example, the "CORESET indicator" field in the DCI format could correspond to a bitmap of length N (or M) with each bit/bit position in the bitmap corresponding to an indicated Rel. 17 unified TCI state. For this case, the n-th (or m-th) bit/bit position in the bitmap is set to "1." Yet for another example, for N=2 or M=2, the "CORESET indicator" field in the DCI format could correspond to a one-bit flag indicator with "0" (or "1") indicating that DM-RS antenna ports for PDCCH reception(s), e.g., in the same CORESET or different CORESETs associated with the same CORESETPoolIndex value (e.g., 0) - if applicable/configured - or the same search space (set), could be quasi co-located with reference signals provided in the first indicated Rel. 17 unified TCI state or the indicated Rel. 17 unified TCI state with the lowest (or highest) TCI state ID/index, and "1" (or "0") indicating that DM-RS antenna ports for PDCCH reception(s), e.g., in the same CORESET or different CORESETs associated with the same CORESETPoolIndex value (e.g., 0) - if applicable/configured - or the same search space (set), could be quasi co-located with reference signals provided in the second indicated Rel. 17 unified TCI state or the indicated Rel. 17 unified TCI state with the highest (or lowest) TCI state ID/index, or vice versa.

As mentioned herein, the "CORESET indicator" field could be a new/dedicated DCI field introduced in the DCI format 1_1 or 1_2, which is different from the existing DCI fields in the DCI format 1_1 or 1_2. Alternatively, the "CORESET indicator" field could be indicated/configured by repurposing one or more bits of one or more existing DCI fields in the DCI format 1_1 or 1_2.

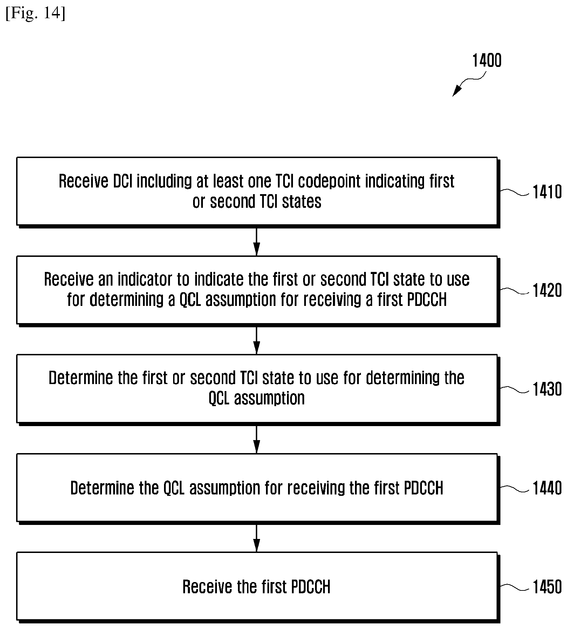

FIGURE 14 illustrates an example of TCI state indication for PDCCH reception 1400 in a multi-TRP system according to embodiments of the present disclosure. The steps of the method 1400 of FIGURE 14 can be performed by any of the UEs 111-116 of FIGURE 1, such as the UE 116 of FIGURE 3 and a corresponding method may be implemented by a BS, such as BS 102. The method 1400 is for illustration only and other embodiments can be used without departing from the scope of the present disclosure.

The method 1400 begins with the UE receiving DCI including at least one TCI codepoint indicating first or second TCI states (step 1410). In one example, the first or second TCI state corresponds to a joint DL and UL TCI state or a separate DL TCI state, provided by higher layer parameter DLorJointTCI-State.

The UE then receives an indicator to indicate the first or second TCI state to use for determining a QCL assumption for receiving a first PDCCH (step 1420). In one example, the QCL assumption includes at least one of an SRS corresponding to a SSB or a NZP CSI-RS; a QCL type including at least one of Type-A, Type-B, Type-C, and Type-D; and a spatial domain receive filter. For example, the UE may receive the indicator in a corresponding DCI that is DCI format 1_1 or 1_2 with or without DL assignment. The indicator may be indicated in the corresponding DCI format by at least one of one or more dedicated DCI fields; and one or more repurposed bits or codepoints of one or more existing DCI fields including an NDI field. In another example, the UE may receive the indicator in a higher layer parameter ControlResourceSet that configures the first CORESET. In other examples, the UE may receive the DCI in a second CORESET and receive the indicator in higher layer parameter ControlResourceSet that configures the second CORESET.

The UE then determines the first or second TCI state to use for determining the QCL assumption (step 1430). For example, the indicator may have two candidate values 0 and 1. When the indicator is set to value 0, the first TCI state indicated in the DCI is used for determining the QCL assumption for receiving the first PDCCH; and when the indicator is set to value **1,** the second TCI state indicated in the DCI is used for determining the QCL assumption for receiving the first PDCCH.

The UE then determines the QCL assumption for receiving the first PDCCH (step 1440). For example, in step 1440, the UE may determine the QCL assumption for receiving the first PDCCH based on the determined one of the two TCI states.

The UE then receives the first PDCCH (step 1450). For example, in step 1450, the UE receives the PDCCH in a first CORESET associated with a value 0 of a CORESET pool index. In additional examples, the UE may also receive a second PDCCH in a second CORESET associated with a value 0 of a CORESET pool index. The first and second PDCCHs and respective search space sets of the first and second PDCCHs may be linked by a higher layer parameter. For example, the UE may determine a QCL assumption for receiving the second PDCCH based on the second TCI state and determine the QCL assumption for receiving the first PDCCH based on the first TCI state.

The above flowchart illustrates example methods that can be implemented in accordance with the principles of the present disclosure and various changes could be made to the methods illustrated in the flowchart herein. For example, while shown as a series of steps, various steps in each figure could overlap, occur in parallel, occur in a different order, or occur multiple times. In another example, steps may be omitted or replaced by other steps.

Although the present disclosure has been described with exemplary embodiments, various changes and modifications may be suggested to one skilled in the art. It is intended that the present disclosure encompass such changes and modifications as fall within the scope of the appended claims. None of the description in this application should be read as implying that any particular element, step, or function is an essential element that must be included in the claims scope. The scope of patented subject matter is defined by the claims.

## Claims

1. A method performed by a user equipment, UE, in a communication system, the method comprising:
receiving, via higher layer signaling, (i) a list of transmission configuration indication, TCI, states and (ii) an indicator for a control resource set, CORESET;
receiving downlink control information, DCI, including a TCI codepoint indicating a first TCI state and a second TCI state among the list of TCI states, wherein the first TCI state and the second TCI state are joint downlink, DL, and uplink, UL, TCI states; and
performing physical downlink control channel, PDCCH, receptions in the CORESET, wherein:
in case that the indicator indicates a first value, demodulation reference signal, DM-RS, antenna ports for the PDCCH receptions are quasi co-located with reference signals provided by the first TCI state; and
in case that the indicator indicates a second value, the DM-RS antenna ports are quasi co-located with reference signals provided by the second TCI state.

2. The method of claim 1, wherein the indicator is included in a higher layer parameter ControlResourceSet that configures the CORESET.

3. The method of claim 1, wherein in case that the indicator indicates a third value, the DM-RS antenna ports are quasi co-located with (i) the reference signals provided by the first TCI state and (ii) the reference signals provided by the second TCI state.

4. The method of claim 1, wherein the indicator is a 2-bit indicator.

5. A user equipment, UE, (116) in a communication system, the UE comprising:
a transceiver (310); and
a processor (340) coupled with the transceiver and configured to:
receive, via higher layer signaling, (i) a list of transmission configuration indication, TCI, states and (ii) an indicator for a control resource set, CORESET;
receive downlink control information, DCI, including a TCI codepoint indicating a first TCI state and a second TCI state among the list of TCI states, wherein the first TCI state and the second TCI state are joint downlink, DL, and uplink, UL, TCI states; and
perform physical downlink control channel, PDCCH, receptions in the CORESET, wherein:
in case that the indicator indicates a first value, demodulation reference signal, DM-RS, antenna ports for the PDCCH receptions are quasi co-located with reference signals provided by the first TCI state; and
in case that the indicator indicates a second value, the DM-RS antenna ports are quasi co-located with reference signals provided by the second TCI state.

6. The UE of claim 5, wherein the indicator is included in a higher layer parameter ControlResourceSet that configures the CORESET.

7. The UE of claim 5, wherein in case that the indicator indicates a third value, the DM-RS antenna ports are quasi co-located with (i) the reference signals provided by the first TCI state and (ii) the reference signals provided by the second TCI state.

8. The UE of claim 5, wherein the indicator is a 2-bit indicator.

9. A method performed by a base station in a communication system, the method comprising:
transmitting, via higher layer signaling, (i) a list of transmission configuration indication, TCI, states and (ii) an indicator for a control resource set, CORESET;
transmitting downlink control information, DCI, including a TCI codepoint indicating a first TCI state and a second TCI state among the list of TCI states, wherein the first TCI state and the second TCI state are joint downlink, DL, and uplink, UL, TCI states; and
performing physical downlink control channel, PDCCH, transmissions in the CORESET, wherein:
in case that the indicator is a first value indicates that demodulation reference signal, DM-RS, antenna ports for the PDCCH transmissions are quasi co-located with reference signals provided by the first TCI state; and
in case that the indicator is a second value indicates that the DM-RS antenna ports are quasi co-located with reference signals provided by the second TCI state.

10. The method of claim 9, wherein the indicator is included in a higher layer parameter ControlResourceSet that configures the CORESET.

11. The method of claim 9, wherein in case that the indicator indicates a third value, the DM-RS antenna ports are quasi co-located with (i) the reference signals provided by the first TCI state and (ii) the reference signals provided by the second TCI state, and
wherein the indicator is a 2-bit indicator.

12. A base station (102) in a communication system, the base station comprising:
a transceiver (210a,...,210n); and
a processor (225) coupled with the transceiver and configured to:
transmit, via higher layer signaling, (i) a list of transmission configuration indication, TCI, states and (ii) an indicator for a control resource set, CORESET;
transmit downlink control information, DCI, including a TCI codepoint indicating a first TCI state and a second TCI state among the list of TCI states, wherein the first TCI state and the second TCI state are joint downlink, DL, and uplink, UL, TCI states; and
perform physical downlink control channel, PDCCH, transmissions in the CORESET, wherein:
in case that the indicator indicates a first value, demodulation reference signal, DM-RS, antenna ports for the PDCCH transmissions are quasi co-located with reference signals provided by the first TCI state; and
in case that the indicator indicates a second value, the DM-RS antenna ports are quasi co-located with reference signals provided by the second TCI state.

13. The base station of claim 12, wherein the processor is configured to perform the method one of claims 10 or 11.

## Patentansprüche

1. Verfahren, das von einem Benutzergerät, UE, in einem Kommunikationssystem durchgeführt wird, wobei das Verfahren Folgendes umfasst:
Empfangen (i) einer Liste von TCI(Übertragungskonfigurationsanzeige)-Zuständen und (ii) eines Indikators für einen Steuerungsressourcensatz, CORESET, über eine Signalisierung höherer Schichten;
Empfangen von Downlink-Steuerungsinformationen, DCI, einschließlich eines TCI-Codepunkts, der einen ersten TCI-Zustand und einen zweiten TCI-Zustand aus der Liste der TCI-Zustände anzeigt, wobei der erste TCI-Zustand und der zweite TCI-Zustand gemeinsame Downlink(DL)- und Uplink(UL)-TCI-Zustände sind; und
Durchführen von PDCCH(physikalischer Downlink-Steuerungskanal)-Empfängen im CORESET, wobei:
falls der Indikator einen ersten Wert anzeigt, die DM-RS(Demodulationsreferenzsignal)-Antennenanschlüsse für die PDCCH-Empfänge quasi an derselben Stelle wie die vom ersten TCI-Zustand bereitgestellten Referenzsignale liegen; und
falls der Indikator einen zweiten Wert anzeigt, die DM-RS-Antennenanschlüsse quasi an derselben Stelle wie die vom zweiten TCI-Zustand bereitgestellten Referenzsignale liegen.

2. Verfahren nach Anspruch 1, wobei der Indikator in einem Parameter "ControlResourceSet" höherer Schichten enthalten ist, der den CORESET konfiguriert.

3. Verfahren nach Anspruch 1, wobei, falls der Indikator einen dritten Wert anzeigt, die DM-RS-Antennenanschlüsse quasi an derselben Stelle wie (i) die vom ersten TCI-Zustand bereitgestellten Referenzsignale und (ii) die vom zweiten TCI-Zustand bereitgestellten Referenzsignale liegen.

4. Verfahren nach Anspruch 1, wobei der Indikator ein 2-Bit-Indikator ist.

5. Benutzergerät, UE, (116) in einem Kommunikationssystem, wobei das UE Folgendes umfasst:
einen Transceiver (310); und
einen Prozessor (340), der mit dem Transceiver gekoppelt und konfiguriert ist zum:
Empfangen (i) einer Liste von TCI(Übertragungskonfigurationsanzeige)-Zuständen und (ii) eines Indikators für einen Steuerungsressourcensatz, CORESET, über eine Signalisierung höherer Schichten;
Empfangen von Downlink-Steuerungsinformationen, DCI, einschließlich eines TCI-Codepunkts, der einen ersten TCI-Zustand und einen zweiten TCI-Zustand aus der Liste der TCI-Zustände anzeigt, wobei der erste TCI-Zustand und der zweite TCI-Zustand gemeinsame Downlink(DL)- und Uplink(UL)-TCI-Zustände sind; und
Durchführen von PDCCH(physikalischer Downlink-Steuerungskanal)-Empfängen im CORESET, wobei:
falls der Indikator einen ersten Wert anzeigt, die DM-RS(Demodulationsreferenzsignal)-Antennenanschlüsse für die PDCCH-Empfänge quasi an derselben Stelle wie die vom ersten TCI-Zustand bereitgestellten Referenzsignale liegen; und
falls der Indikator einen zweiten Wert anzeigt, die DM-RS-Antennenanschlüsse quasi an derselben Stelle wie die vom zweiten TCI-Zustand bereitgestellten Referenzsignale liegen.

6. UE nach Anspruch 5, wobei der Indikator in einem Parameter "ControlResourceSet" höherer Schichten enthalten ist, der den CORESET konfiguriert.

7. UE nach Anspruch 5, wobei, falls der Indikator einen dritten Wert anzeigt, die DM-RS-Antennenanschlüsse quasi an derselben Stelle wie (i) die vom ersten TCI-Zustand bereitgestellten Referenzsignale und (ii) die vom zweiten TCI-Zustand bereitgestellten Referenzsignale liegen.

8. UE nach Anspruch 5, wobei der Indikator ein 2-Bit-Indikator ist.

9. Verfahren, das von einer Basisstation in einem Kommunikationssystem durchgeführt wird, wobei das Verfahren Folgendes umfasst:
Übertragen (i) einer Liste von TCI(Übertragungskonfigurationsanzeige)-Zuständen und (ii) eines Indikators für einen Steuerungsressourcensatz, CORESET, über eine Signalisierung höherer Schichten;
Übertragen von Downlink-Steuerungsinformationen, DCI, einschließlich eines TCI-Codepunkts, der einen ersten TCI-Zustand und einen zweiten TCI-Zustand aus der Liste der TCI-Zustände anzeigt, wobei der erste TCI-Zustand und der zweite TCI-Zustand gemeinsame Downlink(DL)- und Uplink(UL)-TCI-Zustände sind; und
Durchführen von PDCCH(physikalischer Downlink-Steuerungskanal)-Übertragungen im CORESET, wobei:
falls der Indikator ein erster Wert ist, zeigt er an, dass die DM-RS(Demodulationsreferenzsignal)-Antennenanschlüsse für die PDCCH-Übertragungen quasi an derselben Stelle wie die vom ersten TCI-Zustand bereitgestellten Referenzsignale liegen; und
falls der Indikator ein zweiter Wert ist, zeigt er an, dass die DM-RS-Antennenanschlüsse quasi an derselben Stelle wie die vom zweiten TCI-Zustand bereitgestellten Referenzsignale liegen.

10. Verfahren nach Anspruch 9, wobei der Indikator in einem Parameter "ControlResourceSet" höherer Schichten enthalten ist, der den CORESET konfiguriert.

11. Verfahren nach Anspruch 9, wobei, falls der Indikator einen dritten Wert anzeigt, die DM-RS-Antennenanschlüsse quasi an derselben Stelle wie (i) die vom ersten TCI-Zustand bereitgestellten Referenzsignale und (ii) die vom zweiten TCI-Zustand bereitgestellten Referenzsignale liegen, und
wobei der Indikator ein 2-Bit-Indikator ist.

12. Basisstation (102) in einem Kommunikationssystem, wobei die Basisstation Folgendes umfasst:
einen Transceiver (210a, ..., 210n); und
einen Prozessor (225), der mit dem Transceiver gekoppelt und konfiguriert ist zum:
Übertragen (i) einer Liste von TCI(Übertragungskonfigurationsanzeige)-Zuständen und (ii) eines Indikators für einen Steuerungsressourcensatz, CORESET, über eine Signalisierung höherer Schichten;
Übertragen von Downlink-Steuerungsinformationen, DCI, einschließlich eines TCI-Codepunkts, der einen ersten TCI-Zustand und einen zweiten TCI-Zustand aus der Liste der TCI-Zustände anzeigt, wobei der erste TCI-Zustand und der zweite TCI-Zustand gemeinsame Downlink(DL)- und Uplink(UL)-TCI-Zustände sind; und
Durchführen von PDCCH(physikalischer Downlink-Steuerungskanal)-Übertragungen im CORESET, wobei:
falls der Indikator einen ersten Wert anzeigt, die DM-RS(Demodulationsreferenzsignal)-Antennenanschlüsse für die PDCCH-Übertragungen quasi an derselben Stelle wie die vom ersten TCI-Zustand bereitgestellten Referenzsignale liegen; und
falls der Indikator einen zweiten Wert anzeigt, die DM-RS-Antennenanschlüsse quasi an derselben Stelle wie die vom zweiten TCI-Zustand bereitgestellten Referenzsignale liegen.

13. Basisstation nach Anspruch 12, wobei der Prozessor konfiguriert ist, um das Verfahren nach Anspruch 10 oder 11 durchzuführen.

## Revendications

1. Procédé effectué par un équipement utilisateur, UE, dans un système de communication, le procédé comprenant :
recevoir, via une signalisation de couche supérieure, (i) une liste d'états d'indication de configuration de transmission, TCI, et (ii) un indicateur pour un ensemble de ressources de commande, CORESET ;
recevoir des informations de commande de liaison descendante, DCI, comprenant un point de code de TCI indiquant un premier état de TCI et un deuxième état de TCI parmi la liste d'états de TCI, où le premier état de TCI et le deuxième état de TCI sont des états de TCI conjoints de liaison descendante, DL, et de liaison montante, UL ; et
effectuer des réceptions de canal physique de commande de liaison descendante, PDCCH, dans le CORESET, où :
dans le cas où l'indicateur indique une première valeur, des ports d'antenne pour des signaux de référence de démodulation, DM-RS, pour les réceptions de PDCCH sont quasi colocalisés avec des signaux de référence fournis par le premier état de TCI ; et
dans le cas où l'indicateur indique une deuxième valeur, les ports d'antenne DM-RS sont quasi colocalisés avec des signaux de référence fournis par le deuxième état de TCI.

2. Procédé selon la revendication 1, où l'indicateur est inclus dans un paramètre de couche supérieure ControlResourceSet qui configure le CORESET.

3. Procédé selon la revendication 1, où, dans le cas où l'indicateur indique une troisième valeur, les ports d'antenne DM-RS sont quasi colocalisés avec (i) les signaux de référence fournis par le premier état de TCI et (ii) les signaux de référence fournis par le deuxième état de TCI.

4. Procédé selon la revendication 1, où l'indicateur est un indicateur à 2 bits.

5. Équipement utilisateur, UE, (116) dans un système de communication, l'UE comprenant :
un émetteur-récepteur (310) ; et
un processeur (340) couplé à l'émetteur-récepteur et configuré pour :
recevoir, via une signalisation de couche supérieure, (i) une liste d'états d'indication de configuration de transmission, TCI, et (ii) un indicateur pour un ensemble de ressources de commande, CORESET ;
recevoir des informations de commande de liaison descendante, DCI, comprenant un point de code de TCI indiquant un premier état de TCI et un deuxième état de TCI parmi la liste d'états de TCI, où le premier état de TCI et le deuxième état de TCI sont des états de TCI conjoints de liaison descendante, DL, et de liaison montante, UL ; et
effectuer des réceptions de canal physique de commande de liaison descendante, PDCCH, dans le CORESET, où :
dans le cas où l'indicateur indique une première valeur, des ports d'antenne pour des signaux de référence de démodulation, DM-RS, pour les réceptions de PDCCH sont quasi colocalisés avec des signaux de référence fournis par le premier état de TCI ; et
dans le cas où l'indicateur indique une deuxième valeur, les ports d'antenne DM-RS sont quasi colocalisés avec des signaux de référence fournis par le deuxième état de TCI.

6. UE selon la revendication 5, où l'indicateur est inclus dans un paramètre de couche supérieure ControlResourceSet qui configure le CORESET.

7. UE selon la revendication 5, où, dans le cas où l'indicateur indique une troisième valeur, les ports d'antenne DM-RS sont quasi-colocalisés avec (i) les signaux de référence fournis par le premier état de TCI et (ii) les signaux de référence fournis par le deuxième état de TCI.

8. UE selon la revendication 5, où l'indicateur est un indicateur à 2 bits.

9. Procédé effectué par une station de base dans un système de communication, le procédé comprenant :
transmettre, via une signalisation de couche supérieure, (i) une liste d'états d'indication de configuration de transmission, TCI, et (ii) un indicateur pour un ensemble de ressources de commande, CORESET ;
transmettre des informations de commande de liaison descendante, DCI, comprenant un point de code de TCI indiquant un premier état de TCI et un deuxième état de TCI parmi la liste d'états de TCI, où le premier état de TCI et le deuxième état de TCI sont des états de TCI conjoints de liaison descendante, DL, et de liaison montante, UL ; et
effectuer des transmissions de canal physique de commande de liaison descendante, PDCCH, dans le CORESET, où :
dans le cas où l'indicateur est une première valeur, cela indique que des ports d'antenne pour des signaux de référence de démodulation, DM-RS, pour les transmissions de PDCCH sont quasi colocalisés avec des signaux de référence fournis par le premier état de TCI ; et
dans le cas où l'indicateur est une deuxième valeur, cela indique que les ports d'antenne DM-RS sont quasi colocalisés avec des signaux de référence fournis par le deuxième état de TCI.

10. Procédé selon la revendication 9, où l'indicateur est inclus dans un paramètre de couche supérieure ControlResourceSet qui configure le CORESET.

11. Procédé selon la revendication 9, où, dans le cas où l'indicateur indique une troisième valeur, les ports d'antenne DM-RS sont quasi colocalisés avec (i) les signaux de référence fournis par le premier état de TCI et (ii) les signaux de référence fournis par le deuxième état de TCI, et
où l'indicateur est un indicateur à 2 bits.

12. Station de base (102) dans un système de communication, la station de base comprenant :
un émetteur-récepteur (210a, ..., 210n) ; et
un processeur (225) couplé à l'émetteur-récepteur et configuré pour :
transmettre, via une signalisation de couche supérieure, (i) une liste d'états d'indication de configuration de transmission, TCI, et (ii) un indicateur pour un ensemble de ressources de commande, CORESET ;
transmettre des informations de commande de liaison descendante, DCI, comprenant un point de code de TCI indiquant un premier état de TCI et un deuxième état de TCI parmi la liste d'états de TCI, où le premier état de TCI et le deuxième état de TCI sont des états de TCI conjoints de liaison descendante, DL, et de liaison montante, UL ; et
effectuer des transmissions de canal physique de commande de liaison descendante, PDCCH, dans le CORESET, où :
dans le cas où l'indicateur indique une première valeur, des ports d'antenne pour des signaux de référence de démodulation, DM-RS, pour les réceptions de PDCCH sont quasi colocalisés avec des signaux de référence fournis par le premier état de TCI ; et
dans le cas où l'indicateur indique une deuxième valeur, les ports d'antenne DM-RS sont quasi colocalisés avec des signaux de référence fournis par le deuxième état de TCI.

13. Station de base selon la revendication 12, où le processeur est configuré pour effectuer le procédé selon l'une des revendications 10 ou 11.
